# EUROPEAN PATENT SPECIFICATION

(11) **EP 4 383 762 B1**
(45) Date of publication and mention of the grant of the patent: **29.10.2025**
(21) Application number: 21953827.9
(22) Date of filing: 20.08.2021
(51) Int. Cl.: H04W 24/10, H04W 84/12

(54) **WIRELESS COMMUNICATION METHOD AND DEVICE**
VERFAHREN UND VORRICHTUNG ZUR DRAHTLOSEN KOMMUNIKATION
PROCÉDÉ ET DISPOSITIF DE COMMUNICATION SANS FIL

(43) Date of publication of application: 12.06.2024
(73) Proprietor: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); HUANG, Lei, Singapore 049483 (SG); ZHOU, Pei, Dongguan, Guangdong 523860 (CN); LU, Liuming, Dongguan, Guangdong 523860 (CN)
(74) Representative: Ipside
(86) International application number: PCT/CN2021/113891
(87) International publication number: WO 2023/019586

(56) References cited:
- EP-A1- 3 986 018
- EP-A1- 4 061 030
- WO-A2-2006/047595
- CN-A- 112 218 328
- CN-A- 112 689 300
- CN-A- 112 738 758
- CN-A- 112 804 662
- US-A1- 2010 183 205
- SATYANARAYANA KATLA (INTERDIGITAL): "Sensing-specific feedback using NDPA and trigger frames", vol. 802.11bf, no. 1, 5 July 2021 (2021-07-05), pages 1 - 13, XP068182302, Retrieved from the Internet <URL:https://mentor.ieee.org/802.11/dcn/21/11-21-1035-01-00bf-sensing-specific-feedback-using-ndpa-and-trigger-frames.pptx> [retrieved on 20210705]
- DONGGUK LIM (LGE): "Sensing Measurement sequence of 11bf", vol. 802.11bf, no. 1, 20 April 2021 (2021-04-20), pages 1 - 18, XP068179832, Retrieved from the Internet <URL:https://mentor.ieee.org/802.11/dcn/21/11-21-0419-01-00bf-sensing-measurement-sequence-of-11bf.pptx> [retrieved on 20210420]

## Description

### TECHNICAL FIELD

Embodiments of the disclosure relate to sensing measurements in the field of communications, and in particular to a method for wireless communication and devices for wireless communication.

### BACKGROUND

Sensing measurement is a functional enhancement of 802.11 protocol proposed by 802.11bf standard, and it measures and senses a surrounding environment through wireless signals, so that it may accomplish detection on whether someone invades, moves, falls, etc., in an indoor environment, or accomplish gesture recognition, space three-dimensional (3D) image construction, or multiple other functions.

The sensing measurement is initiated by an Access Point (AP) device. When the sensing measurement is initiated by a station (STA) device, how to perform the sensing measurement is a problem urgently to be solved. Related technologies can be found in patent documents CN 112804662A and CN 112218328A and non-patent document "Sensing-specific feedback using NDPA and trigger frames" (XP068182302). CN 112804662A provides a method including sending a sensing service request frame to a terminal device SCS with a WLAN sensing capability, the sensing service request frame including a sensing service identifier (Sensing SID), receiving a sensing service response frame sent by the SCS, the sensing service response frame including a Status code and a Sensing SID. CN 112218328A provides a sensing measurement method that an initiator station obtains first positioning information, and the initiator station determines location information of the to-be-detected target based on the first positioning or the second positioning information. The non-patent document XP068182302 provides a sensing-specific feedback method using NPDA and trigger frames, and presents a sensing-specific feedback configuration for NDPA and trigger frame procedure for different sensing scenarios.

### SUMMARY

The disclosure provides a method and devices for wireless communication, in which a STA device may establish a measurement process through an AP device as proxy, so to implement sensing measurement in a case that a sensing initiator is the STA device. The invention is set out in the appended set of claims.

Through the above technical solutions, the STA device may establish a measurement process through the AP device as proxy, and so to implement sensing measurement in a case that a sensing initiator is the STA device.

### BRIEF DESCRIPTION OF THE DRAWINGS

FIG. 1 is a schematic diagram of a communication system architecture according to an embodiment of the disclosure, which is not a part of the invention.
FIG. 2 is a schematic diagram of a Wireless Fidelity (Wi-Fi) sensing process.
FIG. 3 is a schematic interaction diagram of a method for wireless communication according to an embodiment of the disclosure.
FIG. 4 is a schematic diagram of a frame format of a sensing initiation request frame according to an embodiment of the disclosure.
FIG. 5 is a schematic diagram of a frame format of a sensing initiation response frame according to an embodiment of the disclosure.
FIG. 6 is a schematic diagram of a frame format of a sensing setup request frame according to an embodiment of the disclosure.
FIG. 7 is a schematic diagram of a frame format of a sensing setup response frame according to an embodiment of the disclosure.
FIG. 8 is a schematic flowchart of another method for wireless communication according to an embodiment of the disclosure.
FIG. 9 is a schematic interaction diagram of a measurement process based on a trigger frame according to an embodiment of the disclosure.
FIG. 10 is a schematic interaction diagram of another measurement process based on a trigger frame according to an embodiment of the disclosure.
FIG. 11 is a schematic interaction diagram of yet another measurement process based on a trigger frame according to an embodiment of the disclosure.
FIG. 12 is a schematic diagram of a frame format of a sensing polling trigger frame according to an embodiment of the disclosure.
FIG. 13 is a schematic diagram of a frame format of another sensing polling trigger frame according to an embodiment of the disclosure.
FIG. 14 is a schematic diagram of a frame format of a sensing measurement trigger frame according to an embodiment of the disclosure.
FIG. 15 is a schematic diagram of a frame format of another sensing measurement trigger frame according to an embodiment of the disclosure.
FIG. 16 is a schematic diagram of a frame format of a sensing announcement frame according to an embodiment of the disclosure.
FIG. 17 is a schematic diagram of a frame format of another sensing announcement frame according to an embodiment of the disclosure.
FIG. 18 is a schematic flowchart of yet another method for wireless communication according to an embodiment of the disclosure.
FIG. 19 is a schematic interaction diagram of a report process based on a trigger frame according to an embodiment of the disclosure.
FIG. 20 is a schematic diagram of a frame format of a sensing feedback request frame according to an embodiment of the disclosure.
FIG. 21 is a schematic diagram of a frame format of another sensing feedback request frame according to an embodiment of the disclosure.
FIG. 22 is a schematic diagram of a frame format of a sensing feedback response frame according to an embodiment of the disclosure.
FIG. 23 is a schematic diagram of a frame format of a sensing report trigger frame according to an embodiment of the disclosure.
FIG. 24 is a schematic diagram of a frame format of another sensing report trigger frame according to an embodiment of the disclosure.
FIG. 25 is a schematic diagram of a frame format of a sensing report frame according to an embodiment of the disclosure.
FIG. 26 is a schematic block diagram of a device for wireless communication according to an embodiment of the disclosure.
FIG. 27 is a schematic block diagram of another device for wireless communication according to an embodiment of the disclosure.
FIG. 28 is a schematic block diagram of yet another device for wireless communication according to an embodiment of the disclosure.
FIG. 29 is a schematic block diagram of a sensing responder according to an embodiment of the disclosure.
FIG. 30 is a schematic block diagram of yet another device for wireless communication according to an embodiment of the disclosure.
FIG. 31 is a schematic block diagram of a sensing receiver according to an embodiment of the disclosure.
FIG. 32 is a schematic block diagram of yet another device for wireless communication according to an embodiment of the disclosure.
FIG. 33 is a schematic block diagram of a communication device according to an embodiment of the disclosure.
FIG. 34 is a schematic block diagram of an apparatus according to an embodiment of the disclosure.
FIG. 35 is a schematic block diagram of a communication system according to an embodiment of the disclosure.

### DETAILED DESCRIPTION

The technical solutions in the embodiments of the disclosure will be described below with reference to the drawings in the embodiments of the disclosure. It is apparent that the described embodiments are part of the embodiments of the disclosure, rather than all of the embodiments. With respect to the embodiments of the disclosure, all other embodiments obtained by those of ordinary skill in the art without paying any creative work belong to the scope of protection of the disclosure.

The technical solutions of the embodiments of the disclosure may be applied to various communication systems, such as a Wireless Local Area Network (WLAN), a Wireless Fidelity (Wi-Fi), or other communication systems, etc.

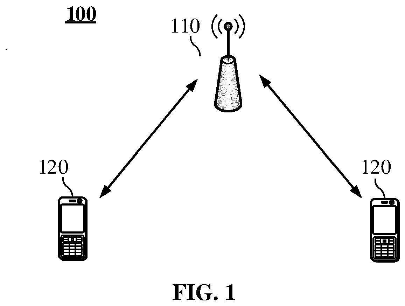

Exemplarily, a communication system 100 to which the embodiments of the disclosure are applied is shown in FIG. 1. The communication system 100 may include an Access Point (AP) 110 and a STATION (STA) 120 accessing a network through the AP 110.

In the embodiments of the disclosure, the STA may be a mobile phone, a pad, a computer with a wireless transceiver function, a Virtual Reality (VR) device, an Augmented Reality (AR) device, a wireless device in industrial control, a wireless device in self driving, a wireless device in remote medical, a wireless device in a smart grid, a wireless device in transportation safety, a wireless device in a smart city, or a wireless device in a smart home, etc.

FIG. 1 exemplarily shows one AP and two STAs. Optionally, the communication system 100 may include multiple APs and other numbers of STAs, which are not limited in the embodiments of the disclosure.

It should be understood that in the embodiments of the disclosure, a device with a communication function in a network/system may be referred to as a communication device. The communication system 100 shown in FIG. 1 is taken as an example, the communication device may include AP 110 and STA 120 with communication functions, and the AP 110 and the STA 120 may be the above specific devices respectively, which are not elaborated here. The communication device may also include other devices in the communication system 100, such as a network controller, gateway and other network entities, which are not limited in the embodiments of the disclosure.

It should be understood that in the disclosure, terms "system" and "network" are often interchangeably used here. In the disclosure, a term "and/or" is only an association relationship describing associated objects, and indicates that there may be three relationships. For example, A and/or B may indicate three situations, i.e., A exists alone, A and B exist simultaneously, and B exists alone. Furthermore, in the disclosure, a character "/" generally indicates that anterior and posterior associated objects are in a "or" relationship.

It should be understood that "indication" mentioned in the embodiments of the disclosure may be a direct indication, or may be an indirect indication, or may indicate that there is an association relationship. For example, A indicates B, which may mean that A directly indicates B, for example, B may be obtained through A; or, may mean that A indirectly indicates B, for example, A indicates C, and B may be obtained through C; or, may mean that there is an association relationship between A and B.

In descriptions of the embodiments of the disclosure, a term "corresponding" may indicate that there are direct or indirect correspondences between two objects; or, may indicate that there is an association relationship between two objects; or, may be a relationship such as indicating and indicated, configuring and configured, etc.

The "STA" described in the embodiments of the disclosure may specifically be a "non-AP STA".

In the embodiments of the disclosure, "predefined" may be implemented by pre-saving corresponding codes, tables or other manners which may be used to indicate relevant information in a device (for example, including AP and STA), specific implementations thereof are not limited in the disclosure. For example, "predefined" may refer to "defined in a protocol".

In order to facilitate understanding the technical solutions of the embodiments of the disclosure, terms related to the disclosure will be described below.

Association Identifier (AID), it is configured to identify a terminal after establishing association with the AP.

Media Access Control (MAC), it is abbreviation of a media access control address.

Transmission Opportunity (TXOP), it refers to a period of time, during which a terminal holding the TXOP may actively initiate one or more times of transmission.

Burst, it usually refers to a short period of time, during which one or more signals are sent.

Burst Group, it refers to a combination of one or more burst. The burst in the same burst group usually have some common characteristics.

Sensing measurement, it senses people or objects in an environment by measuring variations of signals scattered and/or reflected by people or objects. That is, the sensing measurement measures and senses a surrounding environment through wireless signals, so that it may accomplish detection on whether someone invades, moves, falls, etc., in an indoor environment, or accomplish gesture recognition, space three-dimensional (3D) image construtction, or multiple other functions.

Devices participating in the sensing measurement may include the following roles:
Sensing initiator, it is a device which initiates a sensing session and wants to obtain sensing result(s);
Sensing responder, it is a non-Sensing Initiator device participating in the sensing session;
Sensing transmitter, it is a device which initiates a sensing illumination signal, or referred to as a sensing signal sending device;
Sensing receiver, it is a device which receives the sensing illumination signal, or referred to as a sensing signal receiving device;
Sensing processor, it is a device which processes sensing measurement results;
Sensing participant, it includes the sensing initiator, the sensing transmitter and the sensing receiver.

A device may have one or more roles in a sensing measurement. For example, the sensing initiator may be only the sensing initiator, or may be the sensing transmitter, or may be the sensing receiver, or may be both the sensing transmitter and the sensing receiver.

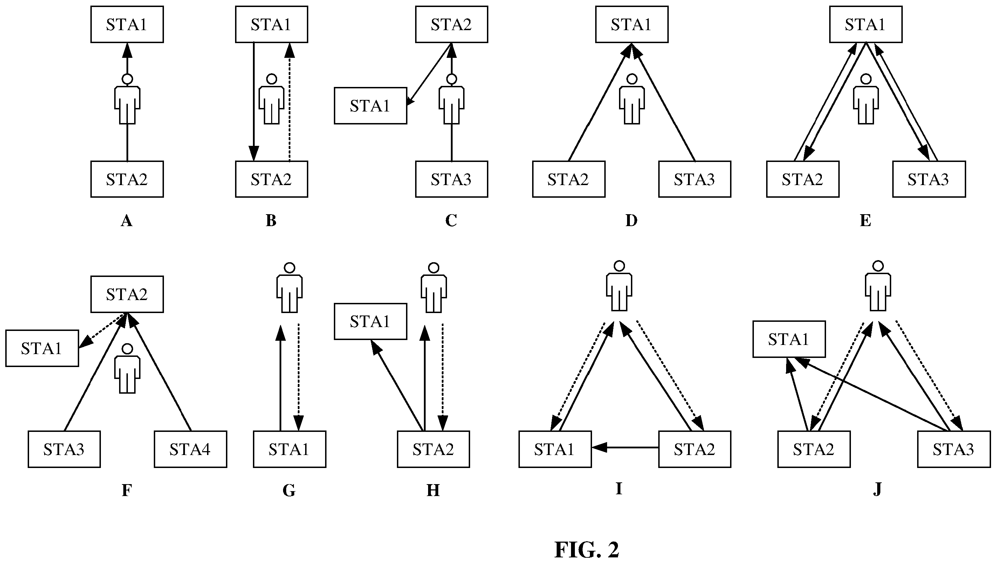

For example, as shown in A of FIG. 2, STA1 may be a sensing initiator, or may be a sensing receiver, or may be a sensing processor; STA2 may be a sensing transmitter.

For another example, as shown in B of FIG. 2, STA1 may be a sensing initiator, or may be a sensing transmitter; STA2 may be a sensing receiver, or may be a sensing processor.

For another example, as shown in C of FIG. 2, STA1 may be a sensing initiator, or may be a sensing processor; STA2 may be a sensing receiver; STA3 may be a sensing transmitter.

For another example, as shown in D of FIG. 2, STA1 may be a sensing initiator, or may be a sensing receiver, or may be a sensing processor; STA2 may be a sensing transmitter; STA3 may be a sensing transmitter.

For another example, as shown in E of FIG. 2, STA1 may be a sensing initiator, or may be a sensing transmitter, or may be a sensing processor; STA2 may be a sensing receiver; STA3 may be a sensing receiver.

For another example, as shown in F of FIG. 2, STA1 may be a sensing initiator; STA2 may be a sensing receiver, or may be a sensing processor; STA3 may be a sensing transmitter; STA4 may be a sensing transmitter.

For another example, as shown in G of FIG. 2, STA1 may be a sensing initiator, or may be a sensing transmitter, or may be a sensing receiver, or may be a sensing processor.

For another example, as shown in H of FIG. 2, STA1 may be a sensing initiator; STA2 may be a sensing transmitter, or may be a sensing receiver, or may be a sensing processor.

For another example, as shown in I of FIG. 2, STA1 may be a sensing initiator, or may be a sensing transmitter, or may be a sensing receiver, or may be a sensing processor; STA2 may be a sensing transmitter, or may be a sensing receiver.

For another example, as shown in J of FIG. 2, STA1 may be a sensing initiator, or may be a sensing processor; STA2 may be a sensing transmitter, or may be a sensing receiver; STA3 may be a sensing transmitter, or may be a sensing receiver.

In some embodiments, there may be multiple sensing types. An example is a sensing type based on Channel State Information (CSI), i.e., CSI-based sensing, this sensing type obtains a sensing measurement result by processing CSI of a received sensing measurement signal. Another example is a sensing type based on a reflection signal, i.e., radar-based sensing, this sensing type obtains a sensing measurement result by processing a reflection signal of the received sensing measurement signal.

In the related art, a sensing measurement process is usually initiated by an AP device. When sensing measurement is initiated by a STA device, how to perform the sensing measurement (including measurement setup, measurement, and measurement report) is a problem urgently to be solved.

A measurement setup method, a measurement method and a measurement report method in sensing measurement methods will be described below through method 200, method 300 and method 400 respectively. It should be understood that the method 200, the method 300 and the method 400 may be implemented separately, or may be implemented in combination, which are not limited in the disclosure.

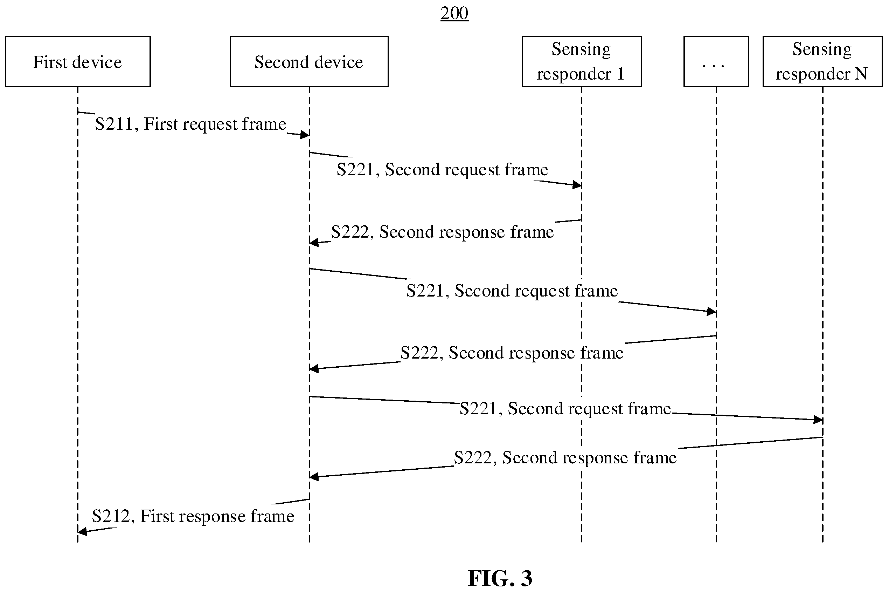

FIG. 3 is a schematic interaction diagram of a method for wireless communication according to an embodiment of the disclosure. The method 200 is a schematic interaction diagram of a measurement setup process. As shown in FIG. 3, the method 200 includes at least a part of the following contents.

At S211, a first device sends a first request frame to a second device, and the first request frame is used to request establishing a target type of measurement.

Correspondingly, the second device receives the first request frame sent by the first device.

In some embodiments, the first request frame is also referred to as a sensing initiation request (SENS Init Request) frame, a sensing measurement initiation request frame.

In some embodiments, the first device is a sensing initiator.

In some embodiments, the first device is a STA device, i.e., a non-AP STA, and the second device is an AP device, i.e., an AP.

The first request frame sent by the STA device to the AP device indicates that the AP device is requested by the STA device to act as a proxy to establish a measurement process. That is, in the embodiments of the disclosure, the AP device is used as proxy of the STA device to establish the measurement process.

In some embodiments, the first request frame may be used to indicate measurement setup information, or measurement setup parameters, i.e., measurement parameters for establishing the measurement.

The first request frame includes a second indication information, used to indicate measurement setup request information (or, referred to as measurement parameters) of sensing responder(s) participating in the measurement, and the first request frame further includes at least one of following:
a first indication information, used to indicate a type of to-be-established measurement;
a third indication information, used to indicate a method used by the second device to process the measurement result(s) reported by the sensing responder(s) (more specifically, it may be a sensing receiver) and/or parameters used by the second device to process the measurement result(s) reported by the sensing responder(s).

That is, when the second device is triggered by the first device to act as proxy to establish the measurement, it may configure a type of the measurement, measurement parameters of the sensing responder(s), the method and parameters used by the second device to process the measurement result(s) reported by the sensing responder(s), or other information, so that the second device may be act as proxy of the first device to perform the measurement setup process based on the above information.

In some embodiments, the first indication information is configured to indicate establishment of a Trigger Based (TB) measurement or establishment of a Non-Trigger Based (Non-TB) measurement.

In some embodiments, the measurement of target type is a measurement of TB type.

In some embodiments, the sensing responder participating in the measurement may be a sensing responder expected by the first device to participate in the measurement.

In some embodiments, the measurement setup request information of the sensing responder(s) includes at least one of following: role information of the sensing responder(s) in the measurement, report type information of how the sensing responder(s) report the measurement result(s), or measurement threshold information.

In some embodiments, the role information of the sensing responder(s) in the measurement includes at least one of following: whether the sensing responder is used as a sensing receiver in the measurement; or whether the sensing responder is used as a sensing transmitter in the measurement.

In some embodiments, the report type information of how the sensing responder(s) report the measurement result(s) includes: whether the sensing responder reports the measurement result immediately, in a case that the sensing responder is used as a sensing receiver in the measurement.

In some embodiments, the report type information of how the sensing responder(s) report the measurement result(s) includes immediate report and delayed report. This report type is applicable to a sensing responder with a role of the sensing receiver, such as a sensing receiver performing downlink measurement.

Optionally, in a case that the report type is immediate report, the sensing receiver may report after a short interframe space (SIFS) after the measurement is completed; or, in a case that the report type is delayed report, the sensing receiver may report after the SIFS is exceeded.

In some embodiments, the measurement threshold information includes at least one of following: a measurement threshold, a measurement result type corresponding to the measurement threshold, or whether measurement reporting is performed based on the measurement threshold.

In an actual application, the data volume of a measurement result is usually relatively large. For example, CSI data of one time of measurement may reach 4K to 40K bits. In order to reduce a network load caused by reporting the measurement result, the measurement threshold may be provided. When a variation of a current sensing measurement result compared to a previous sensing measurement result is less than the measurement threshold, the sensing receiver reports the measurement result; otherwise, the sensing receiver does not report the measurement result.

Optionally, the measurement result type may include at least one of following: Signal to Interference plus Noise Ratio (SINR), Reference Signal Receiving Power (RSRP), Reference Signal Receiving Quality (RSRQ), signal-to-noise ratio (SNR), CSI Matrix.

Optionally, a configuration granularity of the measurement threshold information may be a granularity of the sensing receiver, that is, each sensing receiver corresponds to one respective piece of measurement threshold information; or, all sensing receivers may correspond to the same measurement threshold information.

Optionally, when a sensing receiver is configured to perform measurement report based on the measurement threshold, the sensing receiver may report one or more measurement results which meet the measurement threshold; or, when the sensing receiver is not configured to perform measurement report based on the measurement threshold, the sensing receiver may report one or more measurement results which are not reported currently or previously.

In some embodiments, the method used by the second device to process the measurement result reported by the sensing responder(s) includes at least one of following:
whether the second device forwards the measurement result(s) reported by the sensing receiver(s) to the first device, that is, whether the second device forwards the raw measurement result(s) reported by the sensing receiver(s) to the first device; or
whether the second device processes the measurement result(s) reported by the sensing responder(s), that is, whether the second device processes the raw measurement result(s) reported by the sensing receiver(s), in other words, whether the second device reports a processing result of the raw measurement result(s) to the first device.

Optionally, whether the second device processes the measurement result(s) reported by the sensing responder(s), may include:
Whether the second device compresses the measurement result(s) reported by the sensing receiver(s);
Whether the second device pre-analyzes the measurement result(s) reported by the sensing receiver(s), for example, analyzes whether there are people, the number of people present, people's postures, vital signs, etc.

In some embodiments, the parameters used by the second device to process the measurement result(s) reported by the sensing responder(s) include at least one of following:
a compression algorithm configured to compress the measurement result(s) reported by the sensing responder(s), such as Huffman encoding compression algorithm, rotation of V matrix based on the Singular Value Decomposition (SVD) of CSI matrix, or truncated power delay profile, or compressed beamforming feedback matrix algorithm;
accuracy information configured to process the measurement result(s) reported by the sensing responder(s); or
a sensing application type of the measurement, such as detection of presence of people, detection of the number of people, detection of the position of people, detection of the posture of people, vital sign detection, sleep detection, etc.

In some embodiments, the accuracy information configured to process the measurement result(s) reported by the sensing responder(s) includes at least one of following:
range accuracy information, configured to indicate accuracy of distance data which is calculated upon the sensing measurement result(s);
velocity accuracy information, configured to indicate accuracy of velocity data which is calculated upon the sensing measurement result(s); or
angular accuracy information, configured to indicate accuracy of angular data which is calculated upon the sensing measurement result(s).

In summary, methods used by the second device to report the measurement result to the first device include, but are not limited to at least one of following:
direct aggregation and forwarding, that is, directly forwarding the measurement result(s) reported by the sensing receiver(s) to the first device;
aggregation, and forwarding after compression, that is, compressing the measurement result(s) reported by the sensing receiver(s) and then forwarding it to the first device;
forwarding and returning a processing result, that is, forwarding the measurement result(s) of the sensing receiver(s) and a processing result of the measurement result(s) to the first device; or
returning only a processing result, that is, reporting only a processing result of the measurement result(s) of the sensing receiver(s) to the first device.

In some embodiments, the first request frame may further include measurement setup command information, and the measurement setup command information is used to indicate that measurement setup information in the first request frame is configured by using demand or suggestion or other manners.

In a case that the measurement setup command information indicates demand, it means that the measurement setup information in the first request frame cannot be changed; or, in a case that the measurement setup command information indicates suggestion, it means that the measurement setup information in the first request frame may be changed.

In some embodiments of the disclosure, as shown in FIG. 3, the method 200 further includes the following operation S221.

At S221, the second device sends a second request frame to at least one sensing responder, the second request frame includes measurement setup request information of the at least one sensing responder.

In some embodiments, the second request frame is also referred to as a sensing setup request frame, or a sensing measurement setup request frame.

In some embodiments, the at least one sensing responder may be one of the sensing responder(s), as requested in the first request frame, to participate in the measurement.

In some embodiments, the second device sending the second request frame to the at least one sensing responder may refer to: the second device sending the second request frame to each of the at least one sensing responder, to request the sensing responder to participate in establishing the measurement. That is, the second device may be used as proxy of the first device to perform the measurement setup process with each sensing responder one by one.

In some embodiments, the measurement setup request information of the sensing responder includes at least one of following: role information of the sensing responder in the measurement, report type information of how the sensing responder reports the measurement result(s), or measurement threshold information.

Herein, the measurement setup request information, refers to relevant descriptions of the measurement setup request information of the sensing responder in the first request frame, and is not elaborated here for the sake of brevity.

In some embodiments of the disclosure, as shown in FIG. 3, the method 200 further includes the following operation S222.

At S222, the second device receives a second response frame sent by at least one sensing responder, the second response frame including measurement setup response information of the sensing responder.

In some embodiments, the second response frame is also referred to as a sensing setup response frame, or a sensing measurement setup response frame.

In some embodiments, the measurement setup response information of the sensing responder includes at least one of following: indication information of whether the sensing responder agrees to participate in the measurement, a reason code of the sensing responder disagreeing to participate in the measurement, role information of the sensing responder in the measurement, report type information of how the sensing responder reports the measurement result(s), or measurement threshold information.

For example, when the sensing responder disagrees to participate in the measurement, the reason code may be configured to indicate a reason why the sensing responder disagrees to participate in the measurement, for example, the sensing responder does not support a role requested by the first device, the sensing responder does not support reporting the measurement result immediately, the sensing responder does not support a set threshold, etc.

In some embodiments, the role information in the measurement of the sensing responder in the second response frame may be role information in the measurement determined by the sensing responder. For example, in a case that the measurement setup command information indicates demand, the role information of the sensing responder in the second response frame may be role information indicated in the first request frame. For another example, in a case that the measurement setup command information indicates suggestion, the role of the sensing responder in the second response frame may be a role supported by the sensing responder.

In some embodiments, the report type information of how the sensing responder reports the measurement result(s) may be report type information determined by the sensing responder. For example, in a case that the measurement setup command information indicates demand, the report type information of the sensing responder in the second response frame may be report type information indicated in the first request frame. For another example, in a case that the measurement setup command information indicates suggestion, the report type information of the sensing responder in the second response frame may be a report type supported by the sensing responder.

In some embodiments, the measurement threshold information in the second response frame may include measurement threshold information determined by the sensing responder, for example, a measurement threshold determined by the sensing responder to be used for measurement report, and/or, whether the sensing responder performs measurement report by using a measurement threshold.

In some embodiments of the disclosure, as shown in FIG. 3, the method 200 further includes the following operation S212.

At S212, the second device sends a first response frame to the first device, the first response frame includes measurement setup response information of at least one sensing responder and/or measurement setup response information of the second device.

In some embodiments, the first response frame is also referred to as a sensing initiation response frame, or a sensing measurement initiation response frame.

Optionally, the measurement setup response information of the at least one sensing responder included in the first response frame may be determined according to measurement setup response information of the sensing responder in the second response frame. For example, the second device may forward the measurement setup response information of the sensing responder to the first device.

In some embodiments, the measurement setup response information of the sensing responder includes at least one of following: indication information of whether the sensing responder agrees to participate in the measurement, a reason code of the sensing responder disagreeing to participate in the measurement, role information of the sensing responder in the measurement, report type information of how the sensing responder reports the measurement result(s), or measurement threshold information.

Optionally, the reason code of the sensing responder disagreeing to participate in the measurement may be configured to indicate that the sensing responder does not support a role requested by the first device, the sensing responder does not support reporting the measurement result immediately, the sensing responder does not support the set threshold, or other reasons.

In some embodiments, the measurement setup response information of the second device includes at least one of following: whether the second device agrees to establish the measurement, a reason code of the second device disagreeing to establish the measurement, measurement setup identifier (ID), a type of the measurement determined to establish by the second device, or a method determined by the second device to process the measurement result(s) reported by the sensing responder(s).

In some embodiments, the measurement setup ID is generated by the second device, which is beneficial to ensure uniqueness in a range of an Extended Service Set (ESS).

In some embodiments, the method determined by the second device to process the measurement result(s) reported by the sensing responder(s) is configured to indicate at least one of following:
whether the second device forwards the measurement result(s) reported by the sensing receiver(s) to the first device, that is, whether the second device forwards the raw measurement result(s) reported by the sensing receiver(s);
whether the second device processes the measurement result(s) reported by the sensing responder(s), that is, whether the second device processes the raw measurement result(s) reported by the sensing receiver(s);
a compression algorithm used by the second device to compress the measurement result(s) reported by the sensing responder(s); or
accuracy information used by the second device to process the measurement result(s) reported by the sensing responder(s). Specific implementation of the accuracy information refers to relevant implementation of the accuracy information in the first request frame.

In some embodiments, the first response frame may further include scheduling information, which is used for the sensing responder to perform the measurement according to the scheduling information. For example, the scheduling information may include, but is not limited to at least one of following:
synchronous time point information, configured to determine start time of a first measurement signal;
measurement burst period, configured to determine a time interval between two adjacent measurement signals; or
measurement burst duration, configured to determine time occupied by a measurement signal.

In summary, the STA device sends the sensing initiation request frame to the AP device through the AP device, to instruct the AP device acting as proxy to establish a measurement process. The sensing initiation request frame includes measurement setup information. Further, the AP device may forward the measurement setup information to the sensing responder(s) participating in the measurement, so that the sensing responder(s) may perform the measurement setup process with the AP device based on the measurement setup information, to facilitate performing a subsequent measurement process.

Design of frame formats of the first request frame, the first response frame, the second request frame and the second response frame are described below.

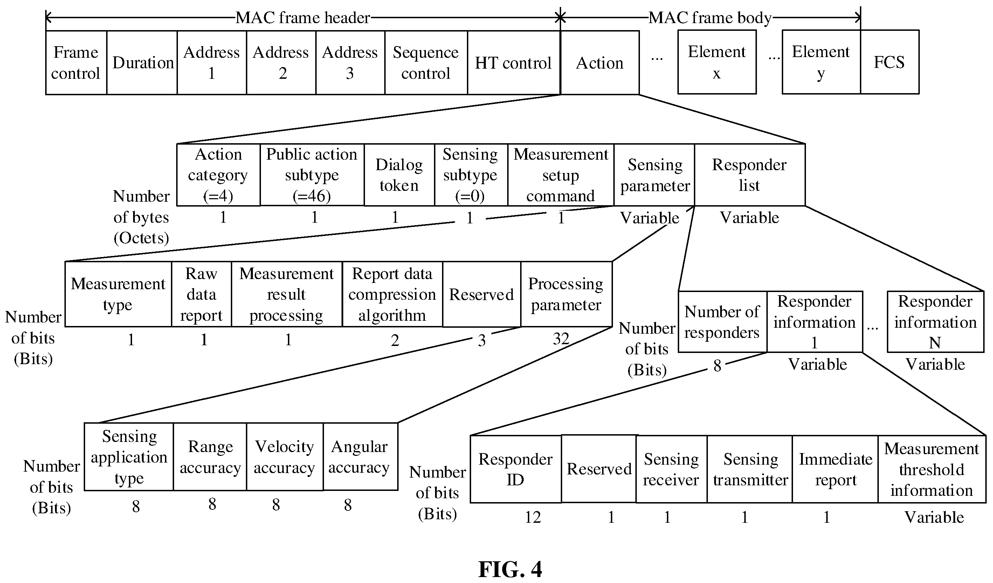

It should be understood that frame formats of the first request frame, the first response frame, the second request frame and the second response frame shown in FIG. 4 to FIG. 7 are examples only, all other frame formats obtained by transforming from the frame formats of the examples of the disclosure fall within the scope of protection of the disclosure, and the disclosure is not limited thereto.

In some embodiments, the first request frame is implemented by an Action frame or a non-acknowledgement Action (Action No Ack) frame. That is, the sensing initiation request frame may be implemented by an Action frame or an Action No Ack frame.

In some embodiments, the first response frame is implemented by an Action frame or an Action No Ack frame. That is, the sensing initiation response frame may be implemented by an Action frame or an Action No Ack frame.

In some embodiments, the second request frame is implemented by an Action frame or an Action No Ack frame. That is, the sensing setup request frame may be implemented by an Action frame or an Action No Ack frame.

In some embodiments, the second response frame is implemented by an Action frame or an Action No Ack frame. That is, the sensing response request frame may be implemented by an Action frame or an Action No Ack frame.

Therefore, each of the first request frame, the first response frame, the second request frame and the second response frame may be considered as a sensing action frame.

In some embodiments, at least one field in the Action frame or the Action No Ack frame may be used to indicate a sensing subtype of the sensing action frame. That is, value of the at least one field indicates whether the sensing action frame is a sensing initiation request frame, a sensing initiation response frame, a sensing setup request frame, or a sensing response request frame.

In some embodiments, the sensing action frame includes an action field, and the action field includes an action category field (Category), a public action subtype field (Public Action field) and a sensing subtype field (SENS Subtype). Values of the action category field, the public action subtype field and the sensing subtype field may jointly indicate whether the sensing action frame is a sensing initiation request frame, a sensing initiation response frame, a sensing setup request frame, or a sensing setup response frame.

As an example, the action category field takes a value of 4 to indicate that the frame is a public action frame, the public action subtype field is used as a reserved value (for example, any value in a range of 46 to 255, and 46 is taken as an example for descriptions below) to indicate that the frame is a sensing action frame, and value of the sensing subtype further indicates whether the sensing action frame is a sensing initiation request frame, a sensing initiation response frame, a sensing setup request frame, or a sensing setup response frame.

It should be understood that correspondences between the sensing subtype of each type of sensing action frame and the value of the sensing subtype are not limited in the embodiments of the disclosure, as long as it is ensured that the sensing action frame of each sensing subtype and sensing action frames of other sensing subtypes correspond to different values.

In some embodiments, the value of the sensing subtype takes a first value to indicate that the sensing action frame is a sensing initiation request frame, the value of the sensing subtype takes a second value to indicate that the sensing action frame is a sensing initiation response frame, the value of the sensing subtype takes a third value to indicate that the sensing action frame is a sensing setup request frame, the value of the sensing subtype takes a fourth value to indicate that the sensing action frame is a sensing setup response frame. Values of any two of the first value, the second value, the third value and the fourth value are different. As an example, the first value is 0, the second value is 1, the third value is 2, and the fourth value is 3.

FIG. 4 is a schematic diagram of a frame format of a sensing initiation request frame according to an embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 0 to indicate that the sensing action frame is a sensing initiation request frame.

In some embodiments, as shown in FIG. 4, the sensing initiation request frame may further include at least one of the following fields.

It should be understood that correspondences between meanings and values of the following fields are examples only, as long as it is ensured that each meaning corresponds to a unique value, and the disclosure is not limited thereto.

Measurement setup command field, it is configured to carry the foregoing measurement setup command information. For example, this field takes a value of 0 to indicate demand, and takes a value of 1 to indicate suggestion.

Measurement type field, it is configured to instruct the second device acting as a proxy to establish a TB or non-TB type of measurement. As an example, the measurement type field is set as 1 to indicate the TB type, and set as 0 to indicate the non-TB type.

Raw data report field, it is configured to indicate whether the second device forwards the raw measurement result(s) reported by the sensing receiver(s). In an embodiment, the raw data report field is set as 1 to indicate that the second device forwards the raw measurement result(s) reported by the sensing receiver(s), and set as 0 to indicate that the second device does not forward the raw measurement result(s) reported by the sensing receiver(s). In another embodiment, the raw data report field is set as 1 to indicate that the second device does not forward the raw measurement result(s) reported by the sensing receiver(s), and set as 0 to indicate that the second device forwards the raw measurement result(s) reported by the sensing receiver(s).

Measurement result processing field, it is configured to indicate whether the second device analyzes and processes the measurement result(s) reported by the sensing receiver(s). In an embodiment, the measurement result processing field is set as 1 to indicate Yes, and set as 0 to indicate No. In another embodiment, the measurement result processing field may also be set as 0 to indicate Yes, and set as 1 to indicate No.

Reported data compression algorithm field, it is configured to indicate an algorithm used by the second device to compress measurement result(s) data reported by the sensing receiver(s). As an example rather than limitation, this field takes a value of 0 to indicate no compression, takes a value of 1 to indicate rotation of V matrix based on the SVD of CSI matrix, takes a value of 2 to indicate truncated power delay profile, and takes a value of 3 to indicate a compressed beamforming feedback matrix.

Processing parameter field, it is configured to indicate parameters required by the second device to process the measurement result(s) data reported by the sensing receiver(s). Optionally, in a case that the measurement result processing field indicates No, the sensing initiation request frame may not include the processing parameter field.

Sensing application type field, it is configured to indicate a sensing usage type. As an example, the sensing application type field takes a value of 0 to indicate people's presence detection, takes a value of 1 to indicate people's number detection, takes a value of 2 to indicate people's position detection, takes a value of 3 to indicate posture detection, takes a value of 4 to indicate vital sign detection, and takes a value of 5 to indicate sleep detection.

Range accuracy field, it is configured to indicate accuracy for distance data which is calculated upon the measurement result(s).

Velocity accuracy field, it is configured to indicate accuracy for velocity data which is calculated upon the measurement result(s).

Angular accuracy field, it is configured to indicate accuracy for angular data which is calculated upon the measurement result(s).

Number of responders field, it is configured to indicate the number of Responder Info fields contained in the sensing initiation request frame.

Responder Info field, it is configured to indicate the measurement setup request information of the sensing responder.

Responder identity field, it is configured to indicate ID of the sensing responder. For example, in case of an associated STA device, the ID may be an Associated ID (AID), and in case of an unassociated STA device, the ID may be an Unassociated ID (UID). For example, a value of 0 of the response device identity is AID of an associated AP.

Sensing receiver field, it is configured to indicate whether the sensing responder is used as a sensing receiver to participate in the measurement. In an embodiment, this field is set as 1 to indicate Yes, and set as 0 to indicate No.

Sensing transmitter filed, it is configured to indicate whether the sensing responder is used as a sensing transmitter to participate in the measurement. In an embodiment, this field is set as 1 to indicate Yes, and set as 0 to indicate No.

Immediate report field, it is configured to indicate whether the sensing responder needs to report the measurement result immediately when the sensing responder is used as a sensing receiver to participate in the measurement. In an embodiment, this field is set as 1 to indicate Yes, and set as 0 to indicate No. Optionally, when the sensing responder is used as a sensing transmitter to participate in the measurement, this field is a reserved field, or this field is not included.

Measurement threshold information (Threshold Measurement Info) field, it is configured to indicate measurement setting information based on a threshold, such as a measurement threshold, and whether measurement report is performed based on the measurement threshold, etc.

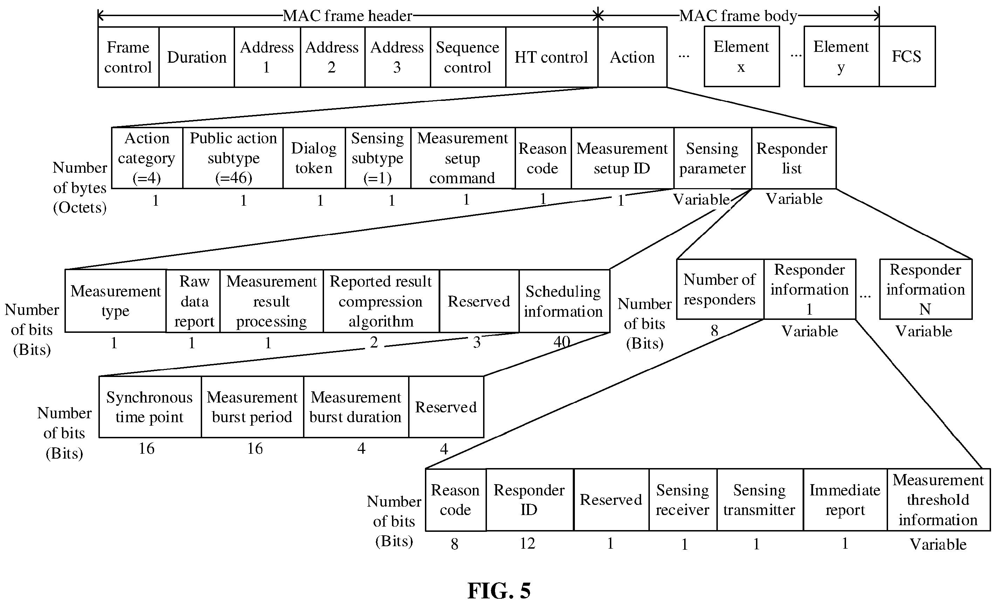

FIG. 5 is a schematic diagram of a frame format of a sensing initiation response frame according to an embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 1 to indicate that the sensing action frame is a sensing initiation response frame.

In some embodiments, as shown in FIG. 5, the sensing initiation response frame may further include at least one of the following fields.

It should be understood that correspondences between meanings and values of the following fields are examples only, as long as it is ensured that each meaning corresponds to a unique value, and the disclosure is not limited thereto.

Measurement setup command field, it is configured to indicate whether the second device accepts the measurement setup information in the first request frame. For example, this field takes a value of 0 to indicate acceptance, and takes a value of 1 to indicate rejection.

Reason code field, it is configured to indicate a reason why the second device disagrees to the measurement setup information, for example, this field takes a value of 0 to indicate that the second device does not support establishing the sensing measurement, as proxy. It should be understood that when the value of the measurement setup command field indicates acceptance, value of the reason code field is a reserved value such as 0, or this field is not included.

Measurement setup ID field, it is configured to indicate the measurement setup ID. When the value of the measurement setup command field indicates acceptance, the sensing initiation response frame includes this field. When the value of the measurement setup command field indicates rejection, the sensing initiation response frame does not include this field, or value of this field is a reserved value such as 0.

Measurement type field, it is configured to indicate a type of measurement to establish determined by the second device. As an example rather than limitation, the measurement type field is set as 1 to indicate that the second device determines to establish a TB type of measurement, and set as 0 to indicate that the second device determines to establish a non-TB type of measurement.

Raw data report field, it is configured to indicate whether the second device forwards the raw measurement result(s) reported by the sensing receiver(s). In an embodiment, the raw data report field is set as 1 to indicate that the second device forwards the raw measurement result(s) reported by the sensing receiver(s), and set as 0 to indicate that the second device does not forward the raw measurement result(s) reported by the sensing receiver(s).

Measurement result processing field, it is configured to indicate whether the second device analyzes and processes the measurement result(s) reported by the sensing receiver(s). In an embodiment, the measurement result processing field is set as 1 to indicate that the second device analyzes and processes the measurement result(s) reported by the sensing receiver(s), and set as 0 to indicate No. In another embodiment, the measurement result processing field may also be set as 0 to indicate Yes, and set as 1 to indicate that the second device does not analyze and process the measurement result(s) reported by the sensing receiver(s).

Reported result compression algorithm field, it is configured to indicate an algorithm used by the second device to compress the measurement result(s) reported by the sensing receiver(s). As an example rather than limitation, this field takes a value of 0 to indicate no compression, takes a value of 1 to indicate rotation of V matrix based on the SVD of CSI matrix, takes a value of 2 to indicate truncated power delay profile, and takes a value of 3 to indicate a compressed beamforming feedback matrix.

Processing parameter field, it is configured to indicate parameters used by the second device to process the measurement result(s) reported by the sensing receiver(s). Optionally, in a case that the measurement result processing field indicates No, the sensing initiation request frame may not include the processing parameter field.

Scheduling information field, it is configured to indicate scheduling information for measurement of the sensing responder(s).

Synchronous time point (Partial TSF Timer) field, it is used for start time of the first measurement signal. For example, this field takes a value of 0 as a reserved value.

Measurement burst period field, it is configured to determine a time interval between two adjacent measurement signals. For example, a unit of this field is 100 milliseconds (ms), and this field takes a value of 0 as a reserved value.

Measurement burst duration field, it is configured to determine time occupied by a measurement signal. As an example, this field takes a value of 4 to indicate 1ms, takes a value of 5 to indicate 2ms, takes a value of 6 to indicate 4ms, takes a value of 7 to indicate 8ms, takes a value of 8 to indicate 16ms, takes a value of 9 to indicate 32ms, takes a value of 10 to indicate 64ms, takes a value of 11 to indicate 128ms, and takes other values to indicate reservation.

Responder Info field, it is configured to indicate the measurement setup response information of the sensing responder.

Responder identity field, it is configured to indicate ID of the sensing responder. For example, in case of an associated STA device, the ID may be an AID, and in case of an unassociated STA device, the ID may be a UID. For example, this field takes a value of 0 to indicate AID of an associated AP.

Sensing receiver field, it is configured to indicate whether the sensing responder is used as a sensing receiver to participate in the measurement. In an embodiment, this field is set as 1 to indicate Yes, and set as 0 to indicate No.

Sensing transmitter filed, it is configured to indicate whether the sensing responder is used as a sensing transmitter to participate in the measurement. In an embodiment, this field is set as 1 to indicate Yes, and set as 0 to indicate No.

Immediate report field, it is configured to indicate whether the sensing responder needs to report the measurement result immediately when the sensing responder is used as a sensing receiver to participate in the measurement. In an embodiment, this field is set as 1 to indicate Yes, and set as 0 to indicate No. Optionally, when the sensing responder is used as a sensing transmitter to participate in the measurement, this field is a reserved field, or this field is not included.

Measurement threshold information (Threshold Measurement Info) field, it is configured to indicate setting information measured based on a threshold, such as a measurement threshold, whether measurement report is performed based on the measurement threshold, etc.

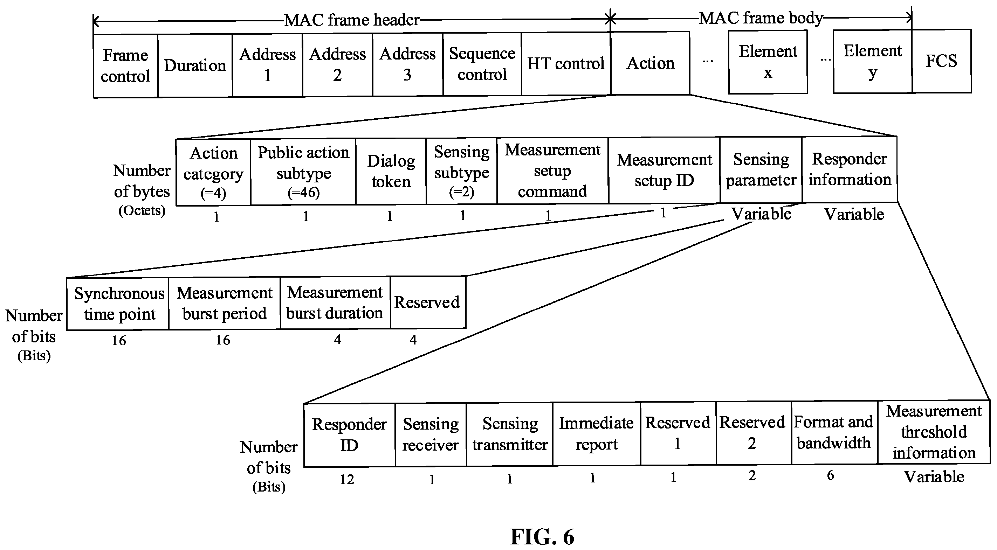

FIG. 6 is a schematic diagram of a frame format of a sensing setup request frame according to an embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 2 to indicate that the sensing action frame is a sensing setup request frame.

In some embodiments, as shown in FIG. 6, the sensing setup request frame may further include at least one of the following fields.

It should be understood that correspondences between meanings and values of the following fields are examples only, as long as it is ensured that each meaning corresponds to a unique value, and the disclosure is not limited thereto.

Measurement setup ID field, it is configured to indicate the measurement setup ID.

Sensing parameter (or, referred to as measurement parameter) field, it is configured to indicate scheduling information used by the sensing responder to perform the measurement.

Synchronous time point (Partial TSF Timer) field, it is used for start time of the first measurement signal. For example, this field takes a value of 0 as a reserved value.

Measurement burst period field, it is configured to determine a time interval between two adjacent measurement signals. For example, a unit of this field is 100ms, and this field takes a value of 0 as a reserved value.

Measurement burst duration field, it is configured to determine time occupied by a measurement signal. As an example, this field takes a value of 4 to indicate 1ms, takes a value of 5 to indicate 2ms, takes a value of 6 to indicate 4ms, takes a value of 7 to indicate 8ms, takes a value of 8 to indicate 16ms, takes a value of 9 to indicate 32ms, takes a value of 10 to indicate 64ms, takes a value of 11 to indicate 128ms, and takes other values to indicate reservation.

Responder Info field, it is configured to indicate the measurement setup request information of the sensing responder.

Responder identity field, it is configured to indicate ID of the sensing responder. For example, in case of an associated STA device, the ID may be an AID, and in case of an unassociated STA device, the ID may be a UID. For example, a value of 0 of this field is AID of an associated AP.

Sensing receiver field, it is configured to indicate whether the sensing responder is used as a sensing receiver to participate in the measurement. In an embodiment, this field is set as 1 to indicate Yes, and set as 0 to indicate No.

Sensing transmitter filed, it is configured to indicate whether the sensing responder is used as a sensing transmitter to participate in the measurement. In an embodiment, this field is set as 1 to indicate Yes, and set as 0 to indicate No.

Immediate report field, it is configured to indicate whether the sensing responder needs to report the measurement result immediately when the sensing responder is used as a sensing receiver to participate in the measurement. In an embodiment, this field is set as 1 to indicate Yes, and set as 0 to indicate No. Optionally, when the sensing responder is used as a sensing transmitter to participate in the measurement, this field is a reserved field, or this field is not included.

Measurement threshold information (Threshold Measurement Info) field, it is configured to indicate measurement setting information based on a threshold, such as a measurement threshold, whether measurement report is performed based on the measurement threshold, etc.

Format and bandwidth field, it is configured to indicate format and bandwidth information of a Physical Protocol Data Unit (PPDU) used in the sensing measurement.

Table 1 shows correspondences between values of the format and bandwidth field and PPDU formats and bandwidths.

**Table 1**

| Field value | PPDU format | Bandwidth (MHz) |
|---|---|---|
| 1 | Very High Throughput (VHT) | 20 |
| 2 | VHT | 40 |
| 3 | VHT | 80 |
| 4 | VHT | 80+80 |
| 5 | VHT | 160 |
| 6 | High Efficiency (HE) | 20 |
| 7 | HE | 40 |
| 8 | HE | 80 |
| 9 | HE | 80+80 |
| 10 | HE | 160 |
| 11 | Extreme High Throughput (EHT) | 20 |
| 12 | EHT | 40 |
| 13 | EHT | 80 |
| 14 | EHT | 80+80 |
| 15 | EHT | 160 |
| 16 | EHT | 160+160 |
| 17 | EHT | 320 |

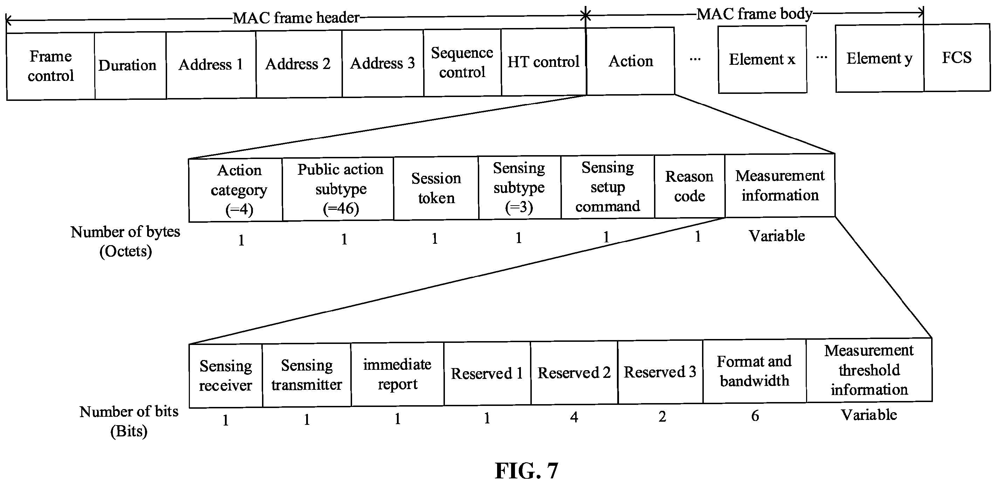

FIG. 7 is a schematic diagram of a frame format of a sensing setup response frame according to an embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 3 to indicate that the sensing action frame is a sensing setup response frame.

In some embodiments, as shown in FIG. 7, the sensing setup response frame may further include at least one of the following fields.

It should be understood that correspondences between meanings and values of the following fields are examples only, as long as it is ensured that each meaning corresponds to a unique value, and the disclosure is not limited thereto.

Measurement Info field, it is configured to indicate the measurement setup response information of the sensing responder.

Sensing receiver field, it is configured to indicate whether the sensing responder is used as a sensing receiver to participate in the measurement. In an embodiment, this field is set as 1 to indicate Yes, and set as 0 to indicate No.

Sensing transmitter filed, it is configured to indicate whether the sensing responder is used as a sensing transmitter to participate in the measurement. In an embodiment, this field is set as 1 to indicate Yes, and set as 0 to indicate No.

Immediate report field, it is configured to indicate whether the sensing responder needs to report the measurement result immediately when the sensing responder is used as a sensing receiver to participate in the measurement. In an embodiment, this field is set as 1 to indicate Yes, and set as 0 to indicate No. Optionally, when the sensing responder is used as a sensing transmitter to participate in the measurement, this field is a reserved field, or this field is not included.

Measurement threshold information (Threshold Measurement Info) field, it is configured to indicate measurement setting information based on a threshold, such as a measurement threshold, whether measurement report is performed based on the measurement threshold, etc.

Format and bandwidth field, it is configured to indicate format and bandwidth information of PPDU used in the sensing measurement.

In summary, the STA device with a role of the sensing initiator may send the measurement setup information to the sensing responder(s) participating in the measurement through the AP device, so that the sensing responder and the AP device may establish measurement based on the measurement setup information.

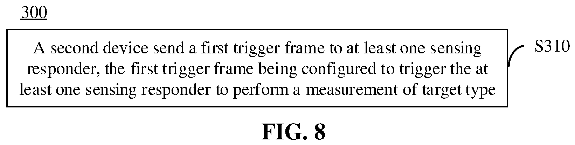

FIG. 8 is a schematic diagram of another method for wireless communication according to an embodiment of the disclosure. The method 300 is a schematic diagram of a measurement process. As shown in FIG. 8, the method 300 includes at least a part of the following contents.

At S310, a second device sends a first trigger frame to at least one sensing responder, the first trigger frame is configured to trigger the at least one sensing responder to perform a measurement of target type.

In some embodiments, sending the first trigger frame by the second device may be performed after the method 200.

In some embodiments, the first trigger frame is also referred to as a sensing polling trigger frame, or a sensing measurement polling trigger frame. The first trigger frame is configured to trigger a polling process.

In some embodiments, the second device is an AP device.

In some embodiments, the measurement of target type may be a TB measurement.

The measurement of target type may be established by the second device as proxy of the first device, and the first device is a sensing initiator.

In some embodiments, the first device is a STA device.

That is, the STA device may request the AP device acting as proxy to establish the measurement of target type, and the AP device may further trigger the sensing responder(s) to perform the measurement of target type through the first trigger frame.

In some embodiments, the first trigger frame includes at least one of following: measurement setup ID, measurement instance ID, or information of a device which will perform the measurement.

In some embodiments, the measurement setup ID is generated by the second device, which is beneficial to ensure uniqueness in a range of ESS.

In some embodiments, the measurement setup ID may be generated by the second device in the measurement setup process.

In some embodiments, a transmission opportunity (such as TXOP) of the measurement of target type is acquired by the second device through competition.

In some embodiments, measurements triggered by a same first trigger frame correspond to a same measurement instance ID. That is, measurements triggered by the same sensing polling trigger frame belong to the same measurement instance and correspond to the same measurement instance ID.

In some embodiments, in a case that the sensing responder determines to participate in the measurement, the sensing responder may send a Clear To Send (CTS) frame of which a receiving address is the sensing responder itself.

In some embodiments, in a case that the sensing responder determines not to participate in the measurement, the sensing responder may not respond to the first trigger frame sent by the second device. For example, the sensing responder does not send the CTS frame of which a receiving address is the sensing responder itself.

In some embodiments, in a case that a role of the second device is only a sensing transmitter, the second device performs downlink measurement only, and does not perform uplink measurement. That is, the measurement of target type includes the downlink measurement, and does not include the uplink measurement.

In some embodiments, when the role of the second device is only a sensing transmitter, the first trigger frame sent by the second device does not trigger a STA device of a non-sensing receiver. For example, the first trigger frame does not include information of the STA device of the non-sensing receiver.

In some embodiments, in a case that the role of the second device is only a sensing receiver, the second device performs uplink measurement only, and does not perform downlink measurement. That is, the measurement of target type includes the uplink measurement, and does not include the downlink measurement.

In some embodiments, when the role of the second device is only a sensing receiver, the first trigger frame sent by the second device does not trigger a STA device of a non-sensing transmitter. For example, the first trigger frame does not include information of the STA device of the non-sensing transmitter.

In some embodiments, in a case that only the second device is a sensing receiver, the second device performs polling and uplink measurement only. Or, in a case that only the second device is a sensing transmitter, the second device performs polling and downlink measurement only.

In some embodiments, roles of the second device are a sensing transmitter and a sensing receiver. In this case, the second device may perform downlink measurement and/or uplink measurement. That is, the second device may perform a polling process and uplink measurement and/or downlink measurement, in a case that roles of the second device are both a sensing transmitter and a sensing receiver.

In some embodiments, in a case that roles of the second device are a sensing transmitter and a sensing receiver, which measurements to perform are indicated in the sensing initiation request frame initiated by the first device. For example, the first device may carry indication information in the sensing initiation request frame, to indicate a target measurement performed in a case that roles of the second device are a sensing transmitter and a sensing receiver, for example, the target measurement may include downlink measurement and/or uplink measurement; or, to indicate that uplink measurement and downlink measurement need to be performed for each measurement instance. The sensing initiation request frame may refer to relevant descriptions in method 200, and is not elaborated here for the sake of brevity.

In some other embodiments, in a case that roles of the second device are a sensing transmitter and a sensing receiver, which measurements to perform are determined by the second device. For example, the second device may determine to perform the same or different target measurements in different measurement instances. As an example, only uplink measurement is performed in a measurement instance 1, only downlink measurement is performed in a measurement instance 2, and the downlink measurement and the uplink measurement are performed in a measurement instance 3.

In some embodiments, when the role of the second device is only a sensing transmitter, the information of the device(s) which will perform the measurement may include information of a STA device with a role of a sensing receiver, such as ID information of the STA device, information of resources for the STA device to perform the measurement.

In some other embodiments, when the role of the second device is only a sensing receiver, the information of the device(s) which will perform the measurement may include information of a STA device with a role of a sensing transmitter, such as ID information of the STA device, information of resources for the STA device to perform the measurement.

In some other embodiments, when roles of the second device are both a sensing transmitter and a sensing receiver, the information of the device(s) which will perform the measurement may include information of the STA device with a role of the sensing receiver and/or information of the STA device with a role of the sensing transmitter, such as ID information of the STA device, information of resources for the STA device to perform the measurement.

In some embodiments, in a case that roles of the second device are a sensing transmitter and a sensing receiver, the method 200 further includes the following operation. The second device sends a second trigger frame and/or a first announcement frame.

The second trigger frame is configured to trigger STA device(s) with a role of the sensing transmitter to send a first measurement frame, and the first measurement frame is used by an AP device with a role of the sensing receiver to perform the uplink measurement.

The first announcement frame is configured to announce that an AP device with a role of the sensing transmitter will send a second measurement frame, and the second measurement frame is used by STA device(s) with a role of the sensing receiver to perform the downlink measurement.

In some embodiments, the second trigger frame is also referred to as a sensing measurement trigger frame. The second trigger frame may be configured to trigger performing the uplink measurement.

In some embodiments, the first announcement frame is also referred to as a sensing measurement announcement frame. The first announcement frame may be configured to trigger performing the downlink measurement.

In some embodiments, the second trigger frame includes at least one of following: measurement setup ID, measurement instance ID, or information of the device(s) which will perform the uplink measurement, such as information of the STA device(s) with a role of the sensing transmitter, such as ID information and resource information.

In some embodiments, the measurement setup ID may be a measurement setup ID generated by the second device in the measurement setup process.

In some embodiments, the measurement instance ID may include at least one measurement instance ID carried in the first trigger frame, such as a measurement ID corresponding to the uplink measurement.

In some embodiments, the information of the device(s) which will perform the uplink measurement may refer to information of the STA device(s) with a role of the sensing transmitter, or information of the device(s) configured to send an uplink measurement signal. After receiving the second trigger frame, the STA device(s) with a role of the sensing transmitter may send the first measurement frame, which is used by the AP device (such as the second device) with a role of the sensing receiver to perform the uplink measurement to obtain an uplink measurement result.

In some embodiments, the first announcement frame includes at least one of following: measurement type, measurement setup ID, measurement instance ID, or information of the device(s) which will perform the downlink measurement.

In some embodiments, the measurement type may be a measurement of TB type or a measurement of non-TB type.

In some embodiments, the measurement setup ID may be a measurement setup ID generated by the second device in the measurement setup process.

In some embodiments, the measurement instance ID may include at least one measurement instance ID carried in the first trigger frame, such as a measurement ID corresponding to the downlink measurement.

In some embodiments, the information of the device(s) which will perform the downlink measurement may refer to information of the STA device(s) with a role of the sensing receiver, or information of the device(s) configured to receive a downlink measurement signal. After receiving the first announcement frame, the STA device(s) with a role of the sensing receiver may receive the second measurement frame sent by the AP device with a role of the sensing transmitter, and perform the downlink measurement according to the second measurement frame to obtain a downlink measurement result.

In some embodiments, in a case that roles of the second device are both a sensing transmitter and a sensing receiver, and the second device determines to perform both the uplink measurement and the downlink measurement, the second device may controls a sequence of performing the uplink measurement and the downlink measurement through a sending sequence of the first announcement frame and the second trigger frame. For example, in a case that it is determined to perform the downlink measurement first, the first announcement frame may be sent first; or, in a case that it is determined to perform the uplink measurement first, the second trigger frame may be sent first.

In some embodiments, in a case that a report type indicated by the sensing initiator when the measurement is established is immediate report, the measurement result may be reported in SIFS after the measurement is performed; or, in a case that the report type indicated by the sensing initiator when the measurement is established is delayed report, the measurement result may be reported after the SIFS is exceeded after the measurement is performed.

In summary, in some embodiments, the sensing measurement process may comply with one or more of the following rules 1 to 11.

Rule 1: TXOP for the sensing measurement of TB type is acquired by the AP (corresponding to the second device) through competition.

Rule 2: measurements triggered by the same polling process belong to the same measurement instance (measurement instance), and is identified by the measurement instance ID.

Rule 3: the AP needs to buffer a five tuple {instance ID, occurrence time, TX ID, RX ID, measurement result} to analyze or report the measurement result.

Rule 4: in a case that the STA cannot participate in the measurement, the STA does not respond to the sensing polling trigger frame sent by the AP.

Rule 5: in a case that immediate report is indicated when the measurement is established, then the measurement report is performed in SIFS time after the downlink measurement; otherwise, the measurement report may be performed with delay.

Rule 6: in a case that the AP is only a sensing transmitter, the AP performs only the downlink measurement and does not perform the uplink measurement, and the sensing polling trigger frame (TF SENS Poll) sent by the AP does not trigger a non-AP STA of a non-sensing signal receiver.

Rule 7: in a case that the AP is only a sensing signal receiver, the AP performs only the uplink measurement and does not perform the downlink measurement, and the sensing polling trigger frame (TF SENS Poll) sent by the AP does not trigger a non-AP STA of a non-sensing signal transmitter.

Rule 8: in a case that the AP is only a sensing receiver, the AP performs only polling and the uplink measurement; in a case that the AP is only a sensing transmitter, the AP performs only polling and the downlink measurement.

Rule 9: in a case that the AP is used as both a sensing signal transmitter and a sensing signal receiver, the AP performs polling, and performs the uplink measurement and/or the downlink measurement on the premise of complying with the foregoing rules.

Rule 10: in a case that the uplink measurement and the downlink measurement may be performed according to the foregoing rules, then as an implementation, it may indicate when the measurement is established that it is essential to perform both the uplink measurement and the downlink measurement in each measurement instance. As another implementation, the AP may also determine to perform the same or different measurement processes in different measurement instances. For example, only the uplink measurement is performed in the measurement instance 1, only the downlink measurement is performed in the measurement instance 2, and the uplink measurement and the downlink measurement are performed in the measurement instance 3.

Rule 11: in a case that the uplink measurement and the downlink measurement may be performed according to the foregoing rules, the AP may change a sequence of trigger frames sent, to change a sequence of the uplink measurement, the downlink measurement and report sub-processes. Sequences of the uplink measurement, the downlink measurement and report sub-processes may be the same or different in different measurement instances.

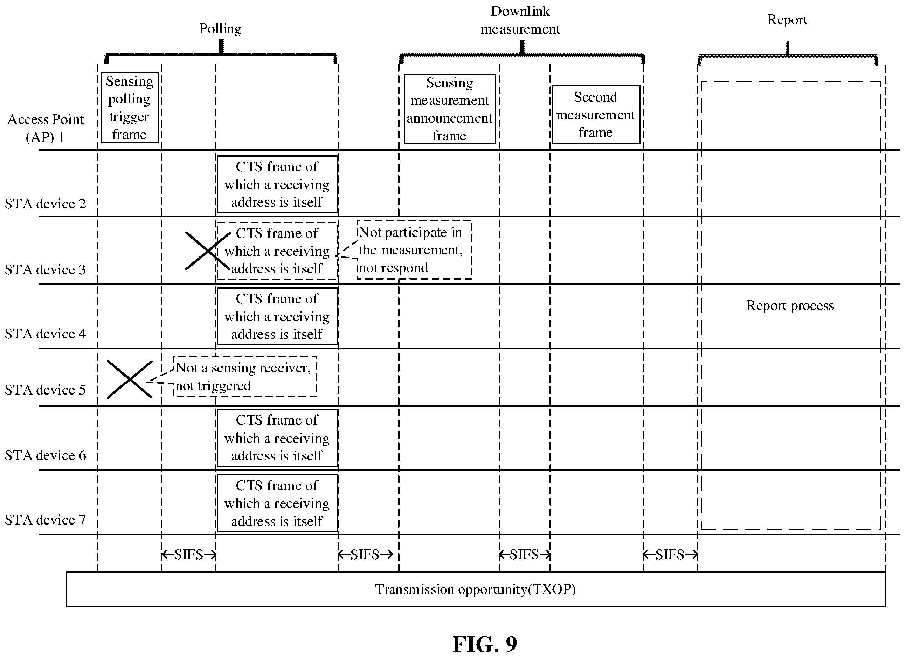

FIG. 9 is a schematic diagram of an example of a sensing measurement process according to an embodiment of the disclosure. As shown in FIG. 9, role information in the measurement is as follows.

AP device (AP1): sensing transmitter.

STA device 2: sensing transmitter and sensing receiver.

STA device 3: sensing transmitter and sensing receiver.

STA device 4: sensing transmitter and sensing receiver.

STA device 5: sensing transmitter.

STA device 6: sensing receiver.

STA device 7: sensing receiver.

In this example, after the AP device sends the sensing polling trigger frame, the STA device 3 does not participate in the measurement, thus the STA device 3 may not send the CTS frame of which the receiving address is the STA device 3 itself.

In this example, the AP device is only the sensing transmitter, thus the sensing polling trigger frame is not configured to trigger the STA device of the non-sensing receiver, i.e., the STA device 5, and the sensing polling trigger frame does not include information of the STA device 5. That is, only the downlink measurement is performed, and the uplink measurement is not performed.

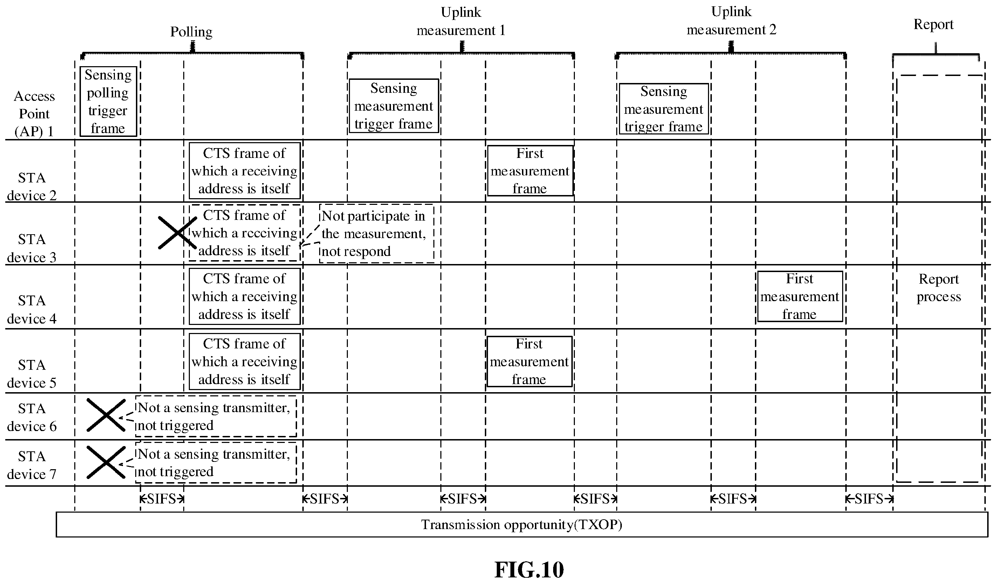

FIG. 10 is a schematic diagram of another example of a sensing measurement process according to an embodiment of the disclosure. As shown in FIG. 10, role information in the measurement is as follows.

AP device (AP1) : sensing receiver.

STA device 2: sensing transmitter and sensing receiver.

STA device 3: sensing transmitter and sensing receiver.

STA device 4: sensing transmitter and sensing receiver.

STA device 5: sensing transmitter.

STA device 6: sensing receiver.

STA device 7: sensing receiver.

In this example, the STA device 3 does not participate in the measurement, thus the STA device 3 may not send the CTS frame of which the receiving address is the STA device 3 itself.

In this example, the AP device is only the sensing receiver, thus the sensing polling trigger frame is not configured to trigger the STA device of the non-sensing transmitter, i.e., the STA device 6 and the STA device 7, and the sensing polling trigger frame does not include information of the STA device 6 and the STA device 7. That is, only the uplink measurement is performed, and the downlink measurement is not performed.

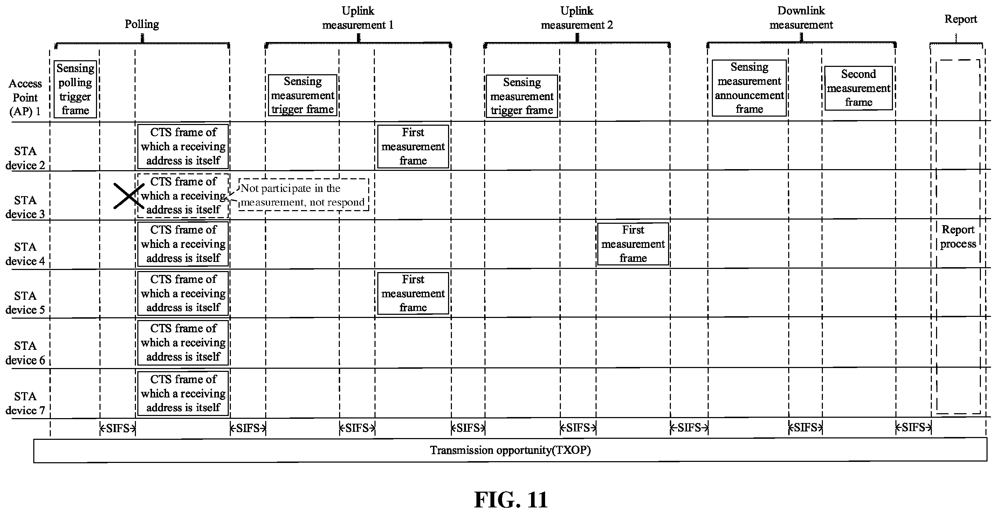

FIG. 11 is a schematic diagram of yet another example of a sensing measurement process according to an embodiment of the disclosure. As shown in FIG. 11, role information in the measurement is as follows.

AP device (AP1) : sensing transmitter and sensing receiver.

STA device 2: sensing transmitter and sensing receiver.

STA device 3: sensing transmitter and sensing receiver.

STA device 4: sensing transmitter and sensing receiver.

STA device 5: sensing transmitter.

STA device 6: sensing receiver.

STA device 7: sensing receiver.

In this example, the STA device 3 does not participate in the measurement, thus the STA device 3 may not send the CTS frame of which the receiving address is the STA device 3 itself.

It should be understood that in this example, the AP device is used as both the sensing transmitter and the sensing receiver, thus the AP device may perform the uplink measurement and/or the downlink measurement. FIG. 11 only takes performing both the uplink measurement and the downlink measurement as an example. Furthermore, when both the uplink measurement and the downlink measurement are performed, the disclosure does not limit the sequence of performing the uplink measurement and the downlink measurement.

Design of frame formats of the first trigger frame, the second trigger frame and the first announcement frame will be described below.

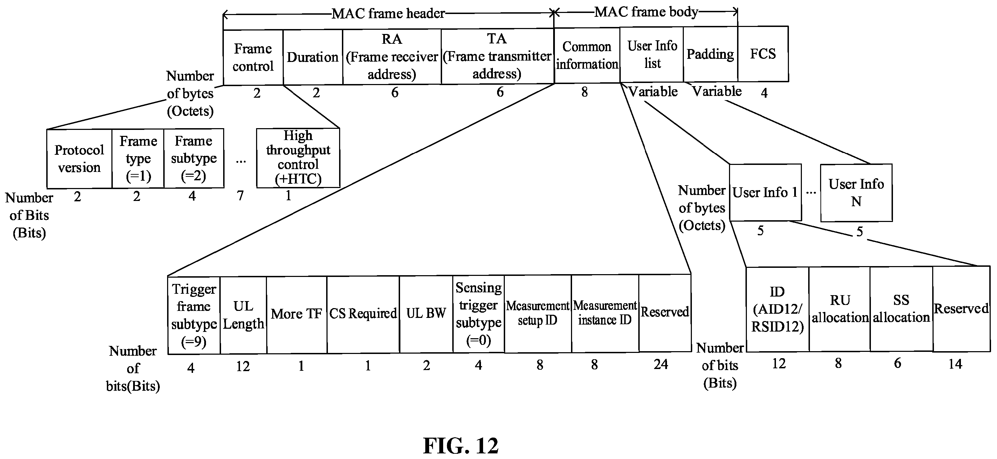

It should be understood that frame formats of the first trigger frame, the second trigger frame and the first announcement frame shown in FIG. 12 to FIG. 17 are examples only, all other frame formats obtained by transforming from the frame formats of the examples of the disclosure fall within the scope of protection of the disclosure, and the disclosure is not limited thereto.

In some embodiments, the first trigger frame is implemented by a trigger frame or a ranging variant trigger frame.

In some embodiments, the second trigger frame is implemented by a trigger frame or a ranging variant trigger frame.

In some embodiments, the first announcement frame is implemented by a control frame or a ranging variant announcement frame (ranging variant NDPA).

In the embodiments of the disclosure, each of the first trigger frame and the second trigger frame may be considered as a sensing trigger frame. The first announcement frame may be considered as a sensing announcement frame, a measurement announcement frame, or a sensing measurement announcement frame.

In some embodiments, at least one field in the trigger frame may be used to indicate a sensing subtype of the sensing trigger frame. That is, value of at least one field in the trigger frame indicates that the sensing trigger frame is a sensing polling trigger frame or a sensing measurement trigger frame.

In some embodiments, the sensing trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the sensing trigger frame is a sensing polling trigger frame or a sensing measurement trigger frame.

It should be understood that when values of the frame type field, the frame subtype field, the trigger frame subtype field and the sensing trigger subtype field jointly indicate that whether the sensing trigger frame is a sensing polling trigger frame or a sensing measurement trigger frame, values of the above fields are not limited in the disclosure, as long as it is ensured that values corresponding to the sensing polling trigger frame and the sensing measurement trigger frame are different.

As an example rather than limitation, the frame type takes a value of 1 to indicate that the frame is a control frame, the frame subtype takes a value of 2 to indicate that the frame is a trigger frame, the trigger frame subtype takes a fifth value to indicate that the frame is a sensing frame, the sensing trigger subtype takes a value of 0 to indicate that the frame is a sensing polling trigger frame and takes a value of 1 to indicate that the frame is a sensing measurement trigger frame. The fifth value may be a reserved value, such as any one of 9 to 15, and the fifth value of 9 is taken as an example for descriptions below.

In some other embodiments, at least one field in the ranging variant trigger frame may be used to indicate a sensing subtype of the sensing trigger frame. That is, value of at least one field in the ranging variant trigger frame indicates that whether the sensing trigger frame is a sensing polling trigger frame or a sensing measurement trigger frame.

In some embodiments, the ranging variant trigger frame includes a frame control field and a common information field, the frame control field includes a frame type field and a frame subtype field, and the common information field includes a trigger frame subtype (Trigger Type) field and a ranging trigger subtype field. The frame type field, the frame subtype field, the trigger frame subtype field and the ranging trigger subtype field jointly indicate that whether the ranging variant trigger frame is a sensing polling trigger frame or a sensing measurement trigger frame.

It should be understood that when the frame type field, the frame subtype field, the trigger frame subtype field and the ranging trigger subtype field jointly indicate that whether the sensing trigger frame is a sensing polling trigger frame or a sensing measurement trigger frame, values of the above fields are not limited in the disclosure, as long as it is ensured that values corresponding to the sensing polling trigger frame and the sensing measurement trigger frame are different.

As an example rather than limitation, the frame type takes a value of 1 to indicate that the frame is a control frame, the frame subtype takes a value of 2 to indicate that the frame is a trigger frame, the trigger frame subtype (Trigger Type) takes a value of 8 to indicate that the frame is a ranging trigger frame, the ranging trigger frame subtype takes a sixth value to indicate that the frame is a sensing polling trigger frame (TF SENS Poll) and takes a seventh value to indicate that the frame is a sensing measurement trigger frame. The sixth value and the seventh value may be reserved values of the ranging trigger frame subtype field, such as any two of 5 to 15, and the sixth value of 5 and the seventh value of 6 are taken as an example for descriptions below.

In some embodiments, the control frame includes a frame control field and a common information field, the frame control field includes a frame subtype field and a control frame extension field, and the common information field includes a sensing subtype field. The frame subtype field, the control frame extension field and the sensing subtype field jointly indicate that the control frame is a sensing announcement frame.

As an example rather than limitation, the frame subtype takes a value of 5 to indicate that the frame is a control extension frame, the control frame extension takes an eighth value to indicate that the frame is a sensing control frame, the sensing subtype (SENS Type) takes a ninth value to indicate that the frame is a sensing announcement frame (SENS Announcement). Optionally, the eighth may be a reserved value of the control frame extension field, such as any one of 11 to 15, the ninth value may be a reserved value of the sensing subtype, such as any one of 0 to 15, and the eighth value of 11 and the ninth value of 0 are taken as an example for descriptions below.

In some other embodiments, the ranging variant announcement frame includes a frame control field, a measurement session token field and a STA information list field, the frame control field includes a frame type field and a frame subtype field, the measurement session token field includes a ranging field and a high efficiency (HE) field, and the STA information list field includes an identity field. Values of the frame type field, the frame subtype field, the ranging field, the HE field and the identity field may jointly indicate that the ranging variant announcement frame is a sensing announcement frame.

As an example rather than limitation, the frame type takes a value of 1 to indicate that the frame is a control frame, the frame subtype takes a value of 5 to indicate that the frame is an NDPA frame, a ranging indicator takes a value of 1 and a HE indicator takes a value of 0 to indicate that the frame is a ranging announcement frame. When the frame contains STA information (STA Info) with AID11 of a tenth value, it indicates that the frame is a sensing announcement (SENS Announcement) frame, and the tenth value is a reserved value, such as 2046 or any one of 2008 to 2042, and the tenth value of 2042 is taken as an example for descriptions below, however, the disclosure is not limited thereto.

FIG. 12 is a schematic diagram of an exemplary frame format of a sensing polling trigger frame implemented by a trigger frame. In this frame format, the field type takes a value of 1 to indicate that the frame is a control frame, the frame subtype takes a value of 2 to indicate that the frame is a trigger frame, the trigger frame subtype takes a value of 9 to indicate that the frame is a sensing trigger frame, and the sensing trigger subtype takes a value of 0 to indicate that the frame is a sensing polling trigger frame.

In some embodiments, as shown in FIG. 12, the sensing polling trigger frame may further include at least one of the following fields.

It should be understood that correspondences between meanings and values of the following fields are examples only, as long as it is ensured that each meaning corresponds to a unique value, and the disclosure is not limited thereto.

Measurement instance ID field, it is configured to indicate the measurement instance ID.

Optionally, in the embodiments of the disclosure, value of the measurement instance ID increases from 0 to 255 one by one, and starts from 0 again after it reaches 255.

Measurement setup ID field, it is configured to indicate the measurement setup ID, which may be used to identify setting of parameters to be used by the measurement instance.

User information (User Info) field, it indicates information of a user (i.e., a terminal), for example, it may be used to indicate information of the device which will perform the measurement.

Identity (such as AID 12/RSID12) field, it is ID of the terminal or ID of the STA device.

Resource unit allocation (RU Allocation) field, it is configured to indicate frequency-domain resource unit allocation information for the terminal.

Spatial-time stream allocation (SS Allocation) field, it is configured to indicate spatial-time stream allocation information for the terminal.

In some embodiments, the user information may include information of the sensing responder triggered by the second device to perform the measurement.

For example, when a role of the second device is a sensing receiver, the user information may include information of a STA device with a role of a sensing transmitter.

For another example, when the role of the second device is a sensing transmitter, the user information may include information of a STA device with a role of a sensing receiver.

For another example, when roles of the second device are both a sensing transmitter and a sensing receiver, the user information may include information of the STA device with a role of the sensing receiver and/or information of the STA device with a role of the sensing transmitter.

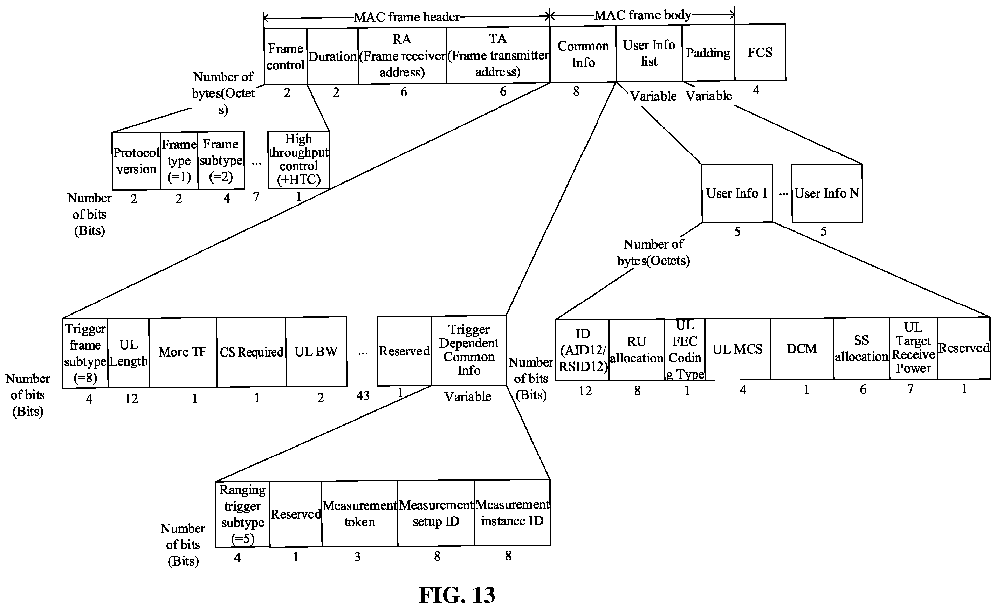

FIG. 13 is a schematic diagram of an exemplary frame format of a sensing polling trigger frame implemented by a ranging variant trigger frame.

In this frame format, the field type takes a value of 1 to indicate that the frame is a control frame, the frame subtype takes a value of 2 to indicate that the frame is a trigger frame, the trigger frame subtype (Trigger Type) takes a value of 8 to indicate that the frame is a ranging trigger frame, and the ranging trigger frame subtype takes a value of 5 to indicate that the frame is a sensing polling trigger frame (TF SENS Poll).

In some embodiments, as shown in FIG. 13, the sensing polling trigger frame may further include at least one of the following fields.

It should be understood that correspondences between meanings and values of the following fields are examples only, as long as it is ensured that each meaning corresponds to a unique value, and the disclosure is not limited thereto.

Measurement instance ID field, it is configured to indicate the measurement instance ID. For example, value of the measurement instance ID increases from 0 to 255 one by one, and starts from 0 again after it reaches 255.

Measurement setup ID field, it is configured to indicate the measurement setup ID, which may be used to identify setting of parameters to be used by the measurement instance.

User information (User Info) field, it indicates information of a user (i.e., a terminal). More specifically, it may include information of the device which will perform the measurement.

Identity (such as AID12/RSID12) field, it is ID of the terminal or ID of the STA device.

Resource unit allocation (RU Allocation) field, it is configured to indicate frequency-domain resource unit allocation information for the terminal.

Spatial-time stream allocation (SS Allocation) field, it is configured to indicate spatial-time stream allocation information for the terminal.

In some embodiments, the user information may include information of the sensing responder triggered by the second device to perform the measurement.

For example, when a role of the second device is a sensing receiver, the user information may include information of a STA device with a role of a sensing transmitter.

For another example, when the role of the second device is a sensing transmitter, the user information may include information of a STA device with a role of a sensing receiver.

For another example, when roles of the second device are both a sensing transmitter and a sensing receiver, the user information may include information of the STA device with a role of the sensing receiver and/or information of the STA device with a role of the sensing transmitter.

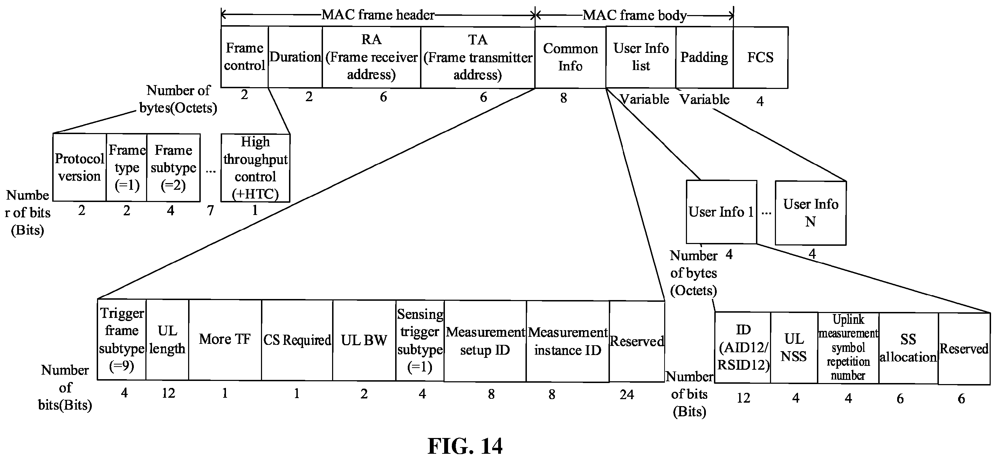

FIG. 14 is a schematic diagram of an exemplary frame format of a sensing measurement trigger frame implemented by a trigger frame.

In this frame format, the field type takes a value of 1 to indicate that the frame is a control frame, the frame subtype takes a value of 2 to indicate that the frame is a trigger frame, the trigger frame subtype takes a value of 9 to indicate that the frame is a sensing trigger frame, and the sensing trigger subtype takes a value of 1 to indicate that the frame is a sensing measurement trigger frame.

In some embodiments, as shown in FIG. 14, the sensing measurement trigger frame may further include at least one of the following fields.

It should be understood that correspondences between meanings and values of the following fields are examples only, as long as it is ensured that each meaning corresponds to a unique value, and the disclosure is not limited thereto.

Measurement instance ID field, it is configured to indicate the measurement instance ID. For example, value of the measurement instance ID increases from 0 to 255 one by one, and starts from 0 after it reaches 255.

Measurement setup ID field, it is configured to indicate the measurement setup ID, which may be used to identify setting of parameters to be used by the measurement instance.

User information (User Info) field, it indicates information of a user (i.e., a terminal). For example, it may be configured to indicate information of the device which will perform the measurement.

Identity (such as AID12/RSID12) field, it is ID of the terminal or ID of the STA device.

In some embodiments, the user information may include information of the sensing responder triggered by the second device to perform the uplink measurement, such as information of a STA device with a role of a sensing transmitter.

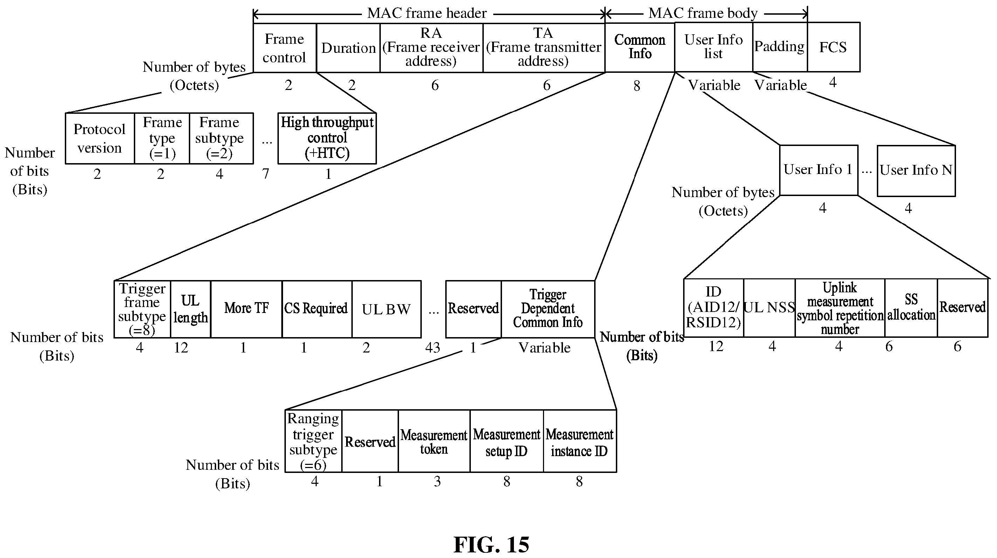

FIG. 15 is a schematic diagram of an exemplary frame format of a sensing measurement trigger frame implemented by a ranging variant trigger frame.

In this frame format, the field type takes a value of 1 to indicate that the frame is a control frame, the frame subtype takes a value of 2 to indicate that the frame is a trigger frame, the trigger frame subtype (Trigger Type) takes a value of 8 to indicate that the frame is a ranging trigger frame, and the ranging trigger frame subtype takes a value of 6 to indicate that the frame is a sensing measurement trigger frame.

In some embodiments, as shown in FIG. 15, the sensing measurement trigger frame may further include at least one of the following fields.

Measurement setup ID field, it is configured to indicate the measurement instance ID.

Measurement instance ID field, it is configured to indicate the measurement setup ID, which may be used to identify setting of parameters to be used by the measurement instance. Optionally, value of the measurement instance ID increases from 0 to 255 one by one, and starts from 0 again after it reaches 255.

User information (User Info) field, it indicates information of a user (i.e., a terminal). For example, it may be configured to indicate information of the device which will perform the measurement.

Identity (such as AID12/RSID12) field, it is ID of the terminal or ID of the STA device, such as AID or RSID.

Spatial-time stream allocation (SS Allocation) field, it is configured to indicate spatial-time stream allocation information for the terminal.

In some embodiments, the user information may include information of the sensing responder triggered by the second device to perform the measurement, such as information of a STA device with a role of a sensing transmitter.

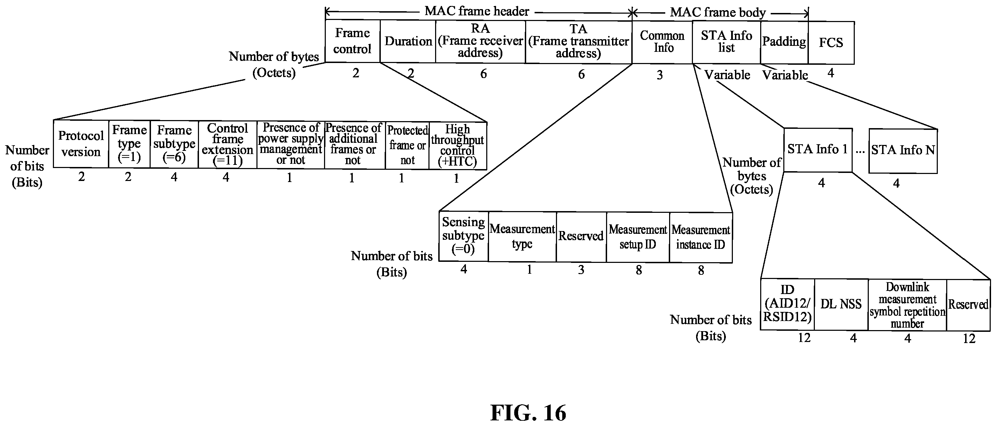

FIG. 16 is a schematic diagram of an exemplary frame format of a sensing announcement frame implemented by a control frame.

In this frame format, the frame subtype takes a value of 6 to indicate that the frame is an extension control frame, the control frame extension takes a value of 11 to indicate that the frame is a sensing control frame, and the sensing subtype (SENS Subtype) takes a value of 0 to indicate that the frame is a sensing announcement (SENS Announcement) frame.

In some embodiments, as shown in FIG. 16, the sensing announcement frame may further include at least one of the following fields.

It should be understood that correspondences between meanings and values of the following fields are examples only, as long as it is ensured that each meaning corresponds to a unique value, and the disclosure is not limited thereto.

Measurement type field, it is configured to indicate a type of established measurement, such as a TB type of measurement or a non-TB type of measurement.

Measurement instance ID field, it is configured to indicate the measurement setup ID, which may be used to identify setting of parameters to be used by the measurement instance, such as scheduling information. Optionally, value of the measurement instance ID increases from 0 to 255 one by one, and starts from 0 again after it reaches 255.

Measurement setup ID field, it is configured to indicate the measurement setup ID, which may be used to identify setting of parameters to be used by the measurement instance.

STA information (User Info) field, it is configured to indicate information of a terminal, such as information of the STA device which will perform the downlink measurement.

Identity (such as AID12/RSID12) field, it is configured to indicate ID of the terminal or ID of the STA device, such as AID or RSID.

Downlink spatial-time stream number (DL N_STS) field, it is configured to indicate the number of downlink spatial-time streams for the terminal.

Downlink measurement symbol repetition number (DL Rep) field: the number of repetitions of the downlink measurement symbol.

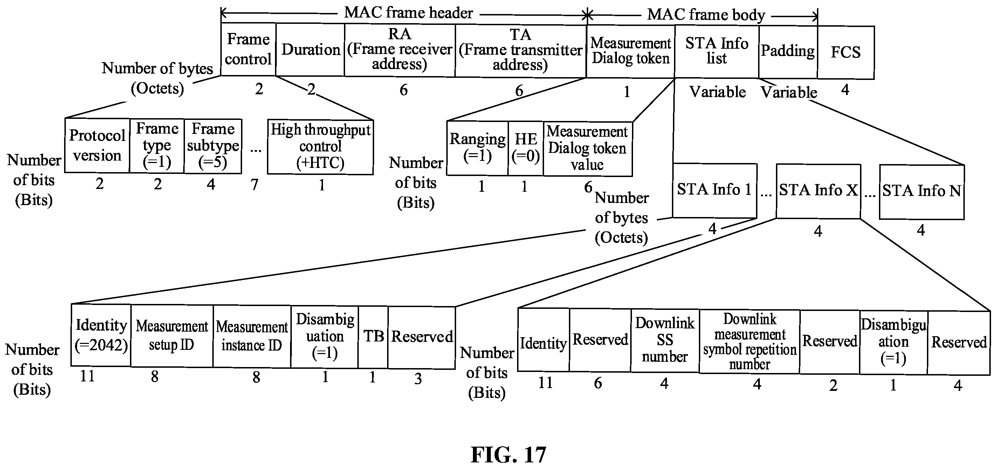

FIG. 17 is a schematic diagram of an exemplary frame format of a sensing announcement frame implemented by a ranging variant announcement frame.

In this frame format, the frame type takes a value of 1 to indicate that the frame is a control frame, the frame subtype takes a value of 5 to indicate that the frame is an NPDA frame, a ranging indicator takes a value of 1 and an HE indicator takes a value of 0 to indicate that the frame is a ranging announcement frame. When the frame contains STA information (STA Info) with AID11 valued 2042, it indicates that the frame is a sensing announcement (SENS Announcement) frame.

In some embodiments, as shown in FIG. 17, the sensing announcement frame may further include at least one of the following fields.

It should be understood that correspondences between meanings and values of the following fields are examples only, as long as it is ensured that each meaning corresponds to a unique value, and the disclosure is not limited thereto.

Measurement setup ID field, it is configured to indicate the measurement instance ID. For example, value of the measurement instance ID increases from 0 to 255 one by one, and starts from 0 again after it reaches 255.

Measurement instance ID field, it is configured to indicate the measurement setup ID, which may be used to identify setting of parameters to be used by the measurement instance.

STA information (User Info) field, it is configured to indicate information of a terminal, such as information of the STA device which will perform the downlink measurement.

Identity (such as AID12/RSID12) field, it is configured to indicate ID of the terminal or ID of the STA device, such as AID or RSID.

Downlink spatial-time stream number (DL N_STS) field, it is configured to indicate the number of downlink spatial-time streams for the terminal.

Downlink measurement symbol repetition number (DL Rep) field, it indicate the number of repetitions of the downlink measurement symbol.

In summary, the AP device may trigger the polling process through the first trigger frame, and may further trigger the sensing responder participating in the measurement to perform the downlink measurement and/or the uplink measurement through the second trigger frame and/or the first announcement frame, to obtain a measurement result.

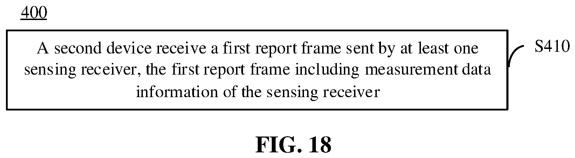

FIG. 18 is a schematic diagram of yet another method for wireless communication according to an embodiment of the disclosure. The method 400 is a schematic diagram of a measurement report process. As shown in FIG. 18, the method 400 includes at least a part of the following contents.

At S410, a second device receives a first report frame sent by at least one sensing receiver, the first report frame including measurement data information of the sensing receiver.

In some embodiments, the first report frame is also referred to as a sensing report frame or a sensing measurement report frame.

In some embodiments, the second device is an AP device.

In some embodiments, the measurement data information may be obtained by performing a measurement of target type, and the measurement of target type may be a measurement of TB type.

The measurement of target type may be established by the second device as proxy of the first device, and the first device is a sensing initiator.

In some embodiments, the first device is a STA device.

In some embodiments, only the sensing receiver performing downlink measurement needs to report the measurement data information to the second device. That is, the at least one sensing receiver may be a sensing receiver performing the downlink measurement.

In some embodiments, the measurement data information of the sensing receiver includes measurement data information of at least one measurement instance. That is, the sensing receiver may report a measurement result at a granularity of the measurement instance.

Optionally, measurement data information of each measurement instance includes at least one of following: a measurement result, ID (or, referred to as TX ID) of a sensing transmitter corresponding to the measurement result, ID (or, referred to as RX ID) of a sensing receiver corresponding to the measurement result, ID of a measurement instance corresponding to the measurement result, or time information of the measurement instance.

The above measurement data information may be referred to as a five tuple {measurement instance ID, occurrence time, TX ID, RX ID, measurement result}.

Optionally, the first report frame may include a measurement result list field which includes N measurement result subfields, and each measurement result subfield is configured to carry the measurement data information corresponding to each measurement instance, N is positive integer.

For example, the measurement result subfield further includes a sensing transmitter ID field, a sensing receiver ID field, a measurement instance ID field, a measurement timestamp field and a result data field, which are configured to carry the above five tuple information respectively.

Optionally, the first report frame may further include a measurement result subfield, and may further include a control field which is configured to indicate whether the measurement result subfield includes a measurement result subfield, or includes at least one of the sensing transmitter ID field, the sensing receiver ID field, the measurement instance ID field, the measurement timestamp field or the result data field.

In some embodiments, the method 400 further includes the following operations.

The second device sends a third request frame to the at least one sensing receiver, the third request frame is configured to request the at least one sensing receiver to feed back a measurement result.

In some embodiments, the third request frame is also referred to as a sensing feedback request frame or a sensing measurement feedback request frame.

In some embodiments, the third request frame includes at least one of following: measurement setup ID, a measurement instance ID list, information of the device(s) which feed back the measurement result, or bitmap information of whether a measurement threshold is applied to each measurement instance in the measurement instance ID list.

Optionally, the third request frame may include one or more measurement instance IDs, that is, one feedback request may be configured to request measurement results of one or more measurement instances.

Optionally, the information of the device(s) which feed back the measurement result may include for example information of the sensing receiver(s) performing the downlink measurement, such as ID information, etc.

Optionally, the third request frame may also be configured to configure whether the measurement threshold is applied to each measurement instance; or, when the third request frame does not include the bitmap information, the measurement threshold is applied to all measurement instances by default, or the measurement threshold is not applied to all measurement instances.

Optionally, the number of bits of the bitmap information may be determined according to the number of measurement instances in the measurement instance ID list. For example, when the measurement instance ID list includes M measurement instance IDs, then the bitmap information may include M bits, each bit corresponds to a measurement instance ID, and value of each bit is configured to indicate whether the measurement threshold is applied to a corresponding measurement instance ID.

A purpose of applying the measurement threshold is to reduce network load when data variation is small. In a sensing measurement process, measurement result data in a small time interval varies less and correlation of the data is high. In this case, report based on the measurement threshold is configured, so that measurement result data of some measurement instances may be filtered out (that is, the measurement result data of the corresponding measurement instances are not reported). When the time interval is large, correlation of the measurement result data is low. In this case, even though the measurement result data varies less, the measurement result data should not be filtered out. Therefore, in some embodiments of the disclosure, when a time interval between two adjacent measurement instances is greater than a first time interval, the measurement threshold is not activated, in other words, the measurement threshold is not applied, which is beneficial to ensure report of measurement result data with low correlation for subsequent analysis and processing.

Optionally, the first time interval is pre-defined, or is an empirical value.

In some embodiments, the method 400 further includes the following operations.

The second device receives a third response frame sent by the at least one sensing receiver, the third response frame is configured to indicate response information of the sensing receiver about whether to feedback measurement result(s).

In some embodiments, the third request frame is also referred to as a sensing feedback response frame or a sensing measurement feedback response frame.

In some embodiments, the third response frame includes at least one of following: measurement setup ID, a measurement instance ID list, or a status code corresponding to each measurement instance in the measurement instance ID list.

In some embodiments, the status code corresponding to the measurement instance is configured to indicate at least one of following: preparing to report the measurement result, not reporting the measurement result in a case that a measurement signal is not received, or not reporting the measurement result in a case that the measurement signal is received while a measurement result of the measurement signal does not meet a measurement threshold.

In some embodiments, if it is indicated as report based on the measurement threshold when the measurement is established, the sensing receiver may perform immediate report in SIFS after a threshold checking process; or, the sensing receiver may report after the SIFS is exceeded after the threshold checking process, that is, perform delayed report.

In some embodiments, the method 400 further includes the following operations.

The second device sends a third trigger frame to the at least one sensing receiver, the third trigger frame is configured to trigger the at least one sensing receiver to report a measurement result.

In some embodiments, the third trigger frame is also referred to as a sensing report trigger frame or a sensing measurement report trigger frame.

For example, the at least one sensing receiver sends the first report frame to the second device, in a case of receiving the third trigger frame.

Optionally, if a report type configured when the measurement is established is immediate report, the sensing receiver may report after an interval of SIFS after the downlink measurement is performed; or, in a case that the report type is delayed report or not-immediate report, the sensing receiver may report after a first time period after the downlink measurement is performed, and the first time period is greater than the SIFS.

In some embodiments, the third trigger frame includes at least one of following: measurement setup ID, measurement instance ID, or information of device(s) which report measurement result(s).

Optionally, the third trigger frame may include one or more measurement instance IDs, that is, the second device may trigger the sensing receiver(s) to report measurement data information of one or more measurement instances.

In some embodiments, the method 400 further includes the following operations.

The second device sends the second report frame to the first device, the second report frame includes measurement feedback information of the at least one sensing receiver and/or measurement feedback information of the second device. The first device is a sensing initiator.

That is, the second device may report measurement feedback information of the sensing receiver(s) performing the downlink measurement to the first device. In a case that the second device is a sensing receiver and the second device performs uplink measurement, the second device may also report measurement feedback information of the uplink measurement to the first device. Therefore, the first device used as the sensing initiator may know the measurement feedback information of the uplink measurement and/or the measurement feedback information of the downlink measurement.

It should be understood that the above measurement feedback information of the sensing receiver(s) and the measurement feedback information of the second device may be at a granularity of the measurement instance or at a granularity of the device, which is not limited in the disclosure.

For example, the measurement feedback information of the sensing receiver(s) may include measurement feedback information of at least one measurement instance, and the measurement feedback information of the at least one measurement instance may be determined according to measurement data information of at least one measurement instance reported by the sensing receiver(s). Here, the at least one measurement instance corresponds to the downlink measurement.

For another example, the measurement feedback information of the second device may include measurement feedback information of at least one measurement instance, and the measurement feedback information of the at least one measurement instance may be determined by the second device according to a measurement result of the uplink measurement. That is, the at least one measurement instance corresponds to the uplink measurement.

For the measurement feedback information of the sensing receiver(s), measurement feedback information of each measurement instance may include at least one of following:
raw measurement result(s) reported by the sensing receiver(s) or a processing result of the second device to the measurement result(s) reported by the sensing receiver(s);
ID of a sensing transmitter corresponding to a measurement result;
ID of a sensing receiver corresponding to a measurement result;
ID of a measurement instance corresponding to a measurement result; or
time information of the measurement instance.

The above measurement feedback information may also be referred to as a five tuple {measurement instance ID, occurrence time, TX ID, RX ID, result data}, which differs from the foregoing five tuple in that the result data here may be a raw measurement result, or may be a processing result of the second device, such as a result after compression or a result after analysis.

For the measurement feedback information of the second device, measurement feedback information of each measurement instance may include at least one of following:
uplink measurement result(s) of the second device or a processing result of the uplink measurement result(s);
ID of a sensing transmitter corresponding to an uplink measurement result;
ID of a sensing receiver corresponding to an uplink measurement result;
ID of a measurement instance corresponding to an uplink measurement result; or
time information of the measurement instance.

That is, the measurement feedback information of the second device may also be a five tuple information, result data in the five tuple {measurement instance ID, occurrence time, TX ID, RX ID, result data} may be a raw uplink measurement result, or may be a processing result of the second device to the uplink measurement result(s), such as a result after compression or a result after analysis.

In some embodiments, the measurement feedback information of the sensing receiver(s) may further include at least one of following:
fourth indication information, configured to indicate whether a raw measurement result reported by a sensing receiver is included;
fifth indication information, configured to indicate whether a processing result of the second device to the raw measurement result(s) reported by the sensing receiver(s) is included, in other words, whether the second device analyzes and measures measurement data information reported by the sensing receiver(s); or
sixth indication information, configured to indicate a compression algorithm used by the second device to compress the raw measurement result(s) reported by the sensing receiver(s).

In some embodiments, the measurement feedback information of the second device may further include at least one of following:
seventh indication information, configured to indicate whether uplink measurement result(s) of the second device is included;
eighth indication information, configured to indicate whether a processing result of the second device to the uplink measurement result(s) of the second device is included, in other words, whether the second device analyzes and measures the uplink measurement result(s); or
ninth indication information, configured to indicate a compression algorithm used by the second device to compress the uplink measurement result(s) of the second device.

In some embodiments, the fourth indication information and the seventh indication information may be the same indication information, the fifth indication information and the eighth indication information may be the same indication information, and the sixth indication information and the ninth indication information may be the same indication information, that is, the same processing manner is applied to measurement data of the sensing receiver(s) and the second device.

Optionally, the second report frame may include a measurement result list field which includes N measurement result subfields, and each measurement result subfield is configured to carry the measurement data information corresponding to each measurement instance, N is positive integer.

For example, the measurement result subfield further includes a sensing transmitter ID field, a sensing receiver ID field, a measurement instance ID field, a measurement timestamp field and a result data field, which are configured to carry the above five tuple information respectively.

Optionally, the second report frame may further include a measurement result subfield, and may further include a control field which is configured to indicate whether the measurement result subfield includes a measurement result subfield, or includes at least one of the following: the sensing transmitter ID field, the sensing receiver ID field, the measurement instance ID field, the measurement timestamp field or the result data field.

It should be understood that the first report frame and the second report frame may be implemented by using the same frame format, or may be implemented by using different frame formats, which is not limited in the disclosure. Implementation by using the same frame format is taken as an example for descriptions below. In summary, manners used by the second device to report the measurement result of the sensing receiver to the first device include, but are not limited to at least one of following:
direct aggregation and forwarding, that is, directly forwarding the measurement data information reported by the sensing receiver(s) to the first device;
aggregation and forwarding after compression, that is, compressing the measurement data information reported by the sensing receiver(s) and then forwarding it to the first device;
forwarding and returning a processing result, that is, forwarding the measurement data information of the sensing receiver(s) and a processing result of the measurement data information to the first device; or
returning only a processing result, that is, reporting only a processing result of the measurement data information of the sensing receiver(s) to the first device.

In summary, manners used by the second device to report the uplink measurement result(s) to the first device include, but are not limited to at least one of following:
direct aggregation and forwarding, that is, directly forwarding the uplink measurement result(s) to the first device;
aggregation and forwarding after compression, that is, compressing the measurement result(s) reported by the sensing receiver(s) and then forwarding it to the first device;
forwarding and returning a processing result, that is, forwarding the uplink measurement result(s) and a processing result of the uplink measurement result(s) to the first device; or
returning only a processing result, that is, reporting only a processing result of the uplink measurement result(s) to the first device.

Therefore, in the embodiments of the disclosure, the AP device may receive the measurement data information reported by the sensing receiver(s) such as the measurement data information of the downlink measurement, and may further forward or process and then forward the measurement data information of the sensing receiver(s) to the STA device, so that the STA device used as the sensing initiator may know measurement data information corresponding to initiation of the established measurement. Optionally, when the AP device performs the uplink measurement, the AP device may also report uplink measurement data information obtained by performing the uplink measurement or a processing result of the uplink measurement data information to the STA device with a role of the sensing initiator.

It should be understood that in the embodiments of the disclosure, the measurement feedback information of the uplink measurement and the measurement feedback information of the downlink measurement may be reported to the first device through the same sensing report frame, or may be reported to the first device through different sensing report frames. Specific report manner and sequence are not limited in the embodiments of the disclosure.

In some embodiments of the disclosure, the second device may control a sequence of the uplink measurement, the downlink measurement and the report process through a sending sequence of trigger frames, for example, control the sequence of the uplink measurement, the downlink measurement and the report process by controlling a sequence of performing the sensing measurement trigger frame, the sensing announcement frame and the sensing report trigger frame. As an example, in a case that the uplink measurement is performed first, the sensing measurement trigger frame may be sent first; or, in a case that the downlink measurement is performed first, the sensing announcement frame may be sent first; or, in a case that report is performed first, the sensing report trigger frame may be sent first.

It should be understood that the sequence of the uplink measurement, the downlink measurement and the report process may be the same or different in different measurement instances.

For example, a performing sequence in measurement instance 1 is polling, uplink measurement 1, uplink measurement 2, downlink measurement, and report. A performing sequence in measurement instance 2 is polling, downlink measurement, uplink measurement 1, uplink measurement 2, and report. A performing sequence in measurement instance 3 is polling, uplink measurement 1, downlink measurement, report, and uplink measurement 2. A performing sequence in measurement instance 4 is polling, uplink measurement 1, downlink measurement, uplink measurement 2, and report.

In summary, in some embodiments, the sensing report process may comply with one or more of the following rules 1 to 9.

Rule 1: only the sensing receiver performing the downlink measurement needs to perform report.

Rule 2: the report process may be to request a measurement result of one measurement instance at one time, or request measurement results of multiple measurement instances at one time.

Rule 3: in the threshold checking process, whether the measurement threshold is applied may be set for each measurement instance. When the time interval between two adjacent measurement instances is greater than the first time interval, the measurement threshold is not applied.

Rule 4: if immediate report is indicated when the measurement is established, the report process is performed in a time of SIFS after the downlink measurement, otherwise, the report process may be performed after the SIFS is exceeded (i.e., delayed report).

Rule 5: in a case that report based on the measurement threshold is indicated when the measurement is established, the report process (basic report) may be performed after SIFS after the threshold checking process (i.e., immediate report), or may be performed after the SIFS is exceeded (i.e., delayed report).

Rule 6: in a case that the sensing initiator is an AP, the AP needs to trigger the sensing receiver(s) performing the downlink measurement to report the downlink measurement result in the report process.

Rule 7: in a case that the sensing initiator is a non-AP STA and is a sensing receiver, the AP does not trigger the non-AP STA in the report process.

Rule 8: in a case that the sensing initiator is a non-AP STA, after the AP receives the measurement result(s) reported by the sensing receiver(s), the AP processes one or more sensing reports (SENS Report) according to settings when the measurement is established (such as raw data aggregation, compression processing, intermediate processing, pre-analysis for reference, analysis result, etc.) and then send them to the non-AP STA.

Rule 9: the report data includes a five tuple {measurement instance ID, occurrence time, sensing transmitter ID, sensing receiver ID, measurement result}.

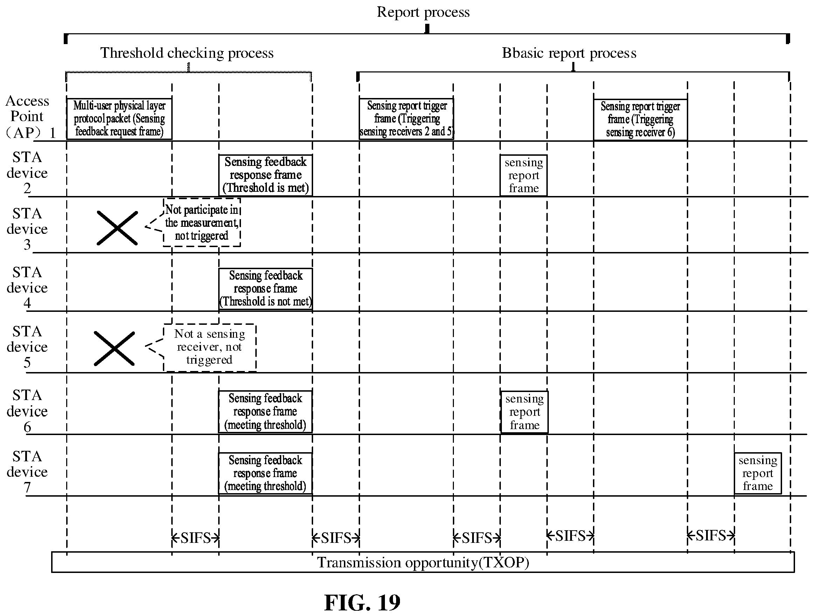

FIG. 19 is a schematic diagram of an exemplary measurement report process according to an embodiment of the disclosure. As shown in FIG. 19, role information in the measurement is as follows.

AP device (AP1), it is used as a sensing transmitter 1 and a sensing receiver 2.

STA device 2, it is used as a sensing transmitter 2 and a sensing receiver 2.

STA device 3, it is used as a sensing transmitter 3 and a sensing receiver 3.

STA device 4, it is used as a sensing transmitter 4 and a sensing receiver 4.

STA device 5, it is used as a sensing transmitter 5.

STA device 6, it is used as a sensing receiver 5.

STA device 7, it is used as a sensing receiver 6.

In this example, the STA device 3 does not participate in the measurement, thus device information of the STA device 3 is not included in the sensing feedback request frame.

In this example, the STA device 5 is not a sensing receiver and does not report the measurement data information of the downlink measurement, thus device information of the STA device 5 is not included in the sensing feedback request frame.

In an example, the measurement report is configured as report based on the measurement threshold, and when the measurement threshold is met, the sensing receiver may send the sensing feedback response frame to the AP device; when the measurement threshold is not met, the sensing receiver may not send the sensing feedback response frame to the AP device.

For example, measurement results of the STA device 2, the STA device 6 and the STA device 7 meet the measurement threshold, thus the STA device 2, the STA device 6 and the STA device 7 may send sensing feedback response frames to the AP device, and the measurement result of the STA device 4 does not meet the measurement threshold, the STA device 4 may not send a sensing feedback response frame to the AP device.

Further, the AP device may send the sensing report trigger frame according to the sensing feedback response frame sent by the sensing receiver(s).

Optionally, the AP device may trigger the sensing receiver(s) that have sent sensing feedback response frame(s) to report measurement result(s) through the same or different sensing report trigger frames. For example, the AP device sends a sensing report trigger frame to trigger device information of the STA device 2 and the STA device 6 to report, and then triggers the STA device 7 to report. Further, the STA device 2 and the STA device 6 send sensing report frames after receiving the sensing report trigger frame that includes their device information, and the STA device 7 sends a sensing report frame after receiving the sensing report frame that includes the STA device 7's device information.

Design of frame formats of the first report frame, the second report frame, the third trigger frame, the third request frame and the third response frame will be described below.

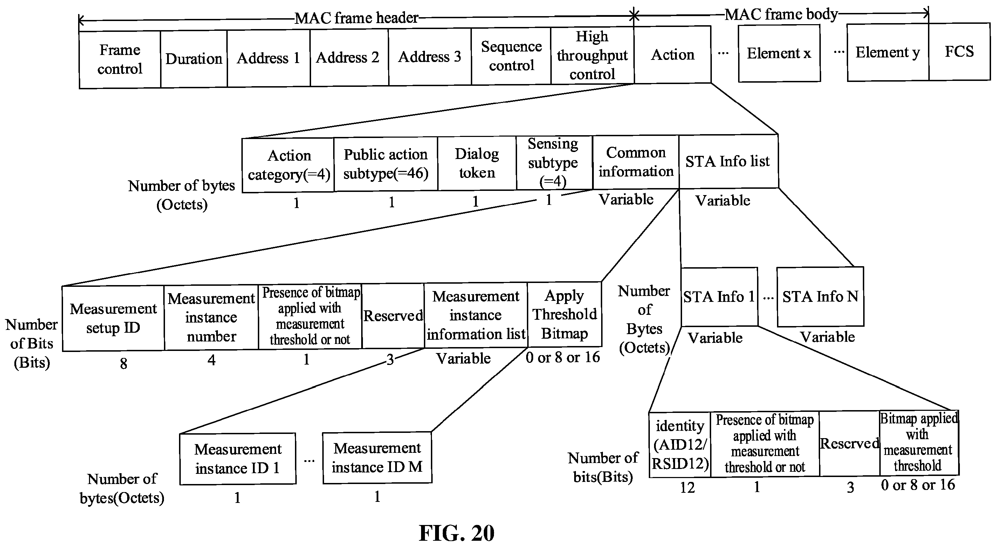

It should be understood that frame formats of the first report frame, the second report frame, the third trigger frame, the third request frame and the third response frame shown in FIG. 20 to FIG. 25 are examples only, all other frame formats obtained by transforming from the frame formats of the examples of the disclosure fall within the scope of protection of the disclosure, and the disclosure is not limited thereto.

In some embodiments, the first report frame is implemented by an action frame or a non-acknowledgement action (Action No Ack) frame. That is, the sensing report frame may be implemented by an action frame or an Action No Ack frame.

In some embodiments, the second report frame may be implemented in a manner similar to the first report frame.

That is, each of the first report frame and the second report frame is a sensing action frame.

In some embodiments, at least one field in the action frame or the Action No Ack frame may be used to indicate a sensing subtype of the sensing action frame. That is, value of the at least one field indicates whether the sensing action frame is a sensing report frame.

In some embodiments, the sensing action frame includes an action field, and the action field includes an action category field, a public action subtype field and a sensing subtype field. Values of the action category field, the public action subtype field and the sensing subtype field jointly indicate that the sensing action frame is a sensing report frame.

As an example, the action category field takes a value of 4 to indicate that the frame is a public action frame, the public action subtype field is further used as a reserved value (for example, any value in a range of 46 to 255, and 46 is taken as an example for descriptions below) to indicate that the frame is a sensing action frame, and the sensing subtype takes an eleventh value to indicate that the sensing action frame is a sensing report frame. For example, the eleventh value is 6.

In some embodiments, the third trigger frame is implemented by a trigger frame, that is, the third trigger frame may be a sensing trigger frame.

For example, the sensing trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the trigger frame is a sensing report trigger frame.

As an example, the frame type field takes a value of 1, the frame subtype field takes a value of 2, the trigger frame subtype filed takes a value of 9, and the sensing trigger subtype field takes a value of 2, to indicate that the frame is a sensing report trigger frame.

In some other embodiments, the third trigger frame is implemented by a ranging variant trigger frame.

For example, the ranging variant trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the ranging variant trigger frame is a sensing report trigger frame.

As an example rather than limitation, the frame type takes a value of 1 to indicate that the frame is a control frame, the frame subtype takes a value of 2 to indicate that the frame is a trigger frame, the trigger frame subtype (Trigger Type) takes a value of 8 to indicate that the frame is a ranging trigger frame, the ranging trigger frame subtype takes a twelfth value to indicate that the frame is a sensing report trigger frame (TF SENS Report). The twelfth value may be a reserved value of the ranging trigger frame subtype field, such as any two of 5 to 15, and the twelfth value of 7 is taken as an example for descriptions below.

In some embodiments, the third request frame is implemented by an action frame or an Action No Ack frame.

In some embodiments, the third request frame includes an action field, and the action field includes an action category field, a public action subtype field and a sensing subtype field. Values of the action category field, the public action subtype field and the sensing subtype field jointly indicate that the third request frame is a sensing feedback request (SENS Feedback Request) frame.

As an example, the action category field takes a value of 4 to indicate that the frame is a public action frame, the public action subtype field is a reserved value (for example, any value in a range of 46 to 255, and 46 is taken as an example for descriptions below) to indicate that the frame is a sensing action frame, and the sensing subtype takes a thirteenth value to indicate that the sensing action frame is a sensing feedback request frame. For example, the thirteenth value is 4.

In some embodiments, the third response frame is implemented by an action frame or an Action No Ack frame.

In some embodiments, the third response frame includes an action field, and the action field includes an action category field, a public action subtype field and a sensing subtype field. Values of the action category field, the public action subtype field and the sensing subtype field jointly indicate that the third response frame is a sensing feedback response frame.

As an example, the action category field takes a value of 4 to indicate that the frame is a public action frame, the public action subtype field is a reserved value (for example, any value in a range of 46 to 255, and 46 is taken as an example for descriptions below) to indicate that the frame is a sensing action frame, and the sensing subtype takes a thirteenth value to indicate that the sensing action frame is a sensing feedback response frame. For example, the thirteenth value is 5.

FIG. 20 is a schematic diagram of a frame format of a sensing feedback request frame according to an embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 4 to indicate that the sensing action frame is a sensing initiation request frame.

In some embodiments, as shown in FIG. 20, the sensing feedback request frame may further include at least one of the following fields.

It should be understood that correspondences between meanings and values of the following fields are examples only, as long as it is ensured that each meaning corresponds to a unique value, and the disclosure is not limited thereto.

Measurement setup ID field, it is configured to indicate the measurement setup ID.

Measurement instance number field, it is configured to indicate the number of measurement instances in a measurement instance information list (Instance Info List).

Measurement instance information list (Instance Info List) field, it is a list of measurement instance information.

Measurement instance ID field, it is configured to indicate the measurement instance ID, which indicate a measurement instance requesting feedback of the measurement result.

Apply Threshold Bitmap Present field, it is configured to indicate whether an Apply Threshold Bitmap field is present. In an embodiment, the Apply Threshold Bitmap Present field is set as 1 to indicates presence, and set as 0 to indicate absence.

Apply Threshold Bitmap field, it is configured to indicate whether a measurement threshold is applied to each measurement instance in the measurement instance information list (Instance Info List). Optionally, in a case that this field is not included in the sensing feedback request, it means that the measurement threshold is not applied to each measurement instance in the measurement instance information list by default; or, it means that the measurement threshold is applied to each measurement instance in the measurement instance information list by default. A length of this field is determined according to the number of measurement instances in the measurement instance information list. For example, in a case that the number of measurement instances is less than or equal to 7, the length of this field may be 1 byte. For another example, in a case that the number of measurement instances is less than or equal to 15, the length of this field may be 2 bytes.

STA information (STA Info) field, it is configured to indicate information of a STA device requesting feedback of the measurement result. It should be understood that information of a STA device with a role of a sensing transmitter is not included in the STA information.

Identity field, it is configured to indicate ID of the STA device being requested to feedback measurement result, such as AID or UID.

Optionally, in a case that the Apply Threshold Bitmap field is present in the STA information field, the STA device uses setting of the Apply Threshold Bitmap field; otherwise, may use setting of an Apply Threshold Bitmap field in common information (Common Info).

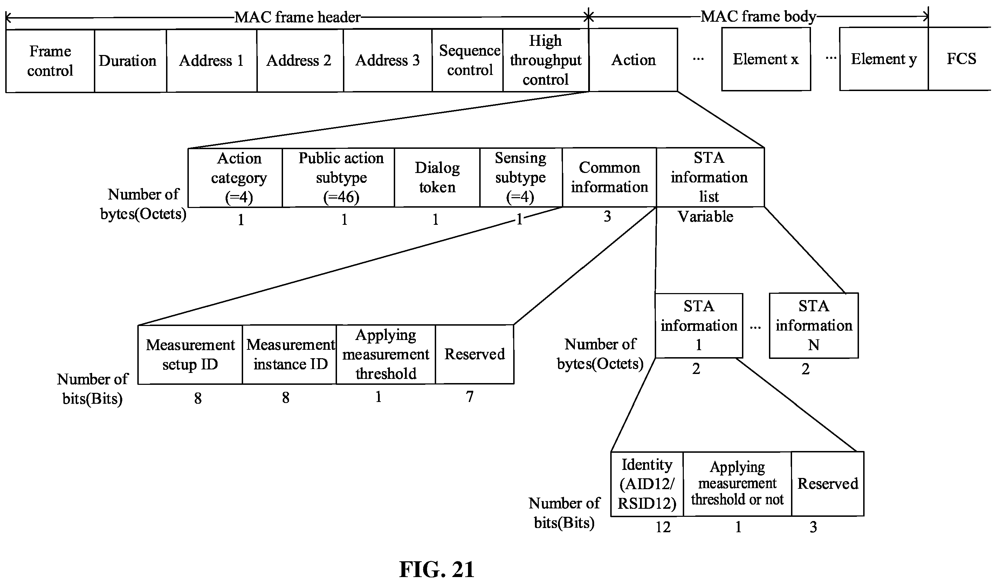

FIG. 21 is a schematic diagram of a frame format of a sensing feedback request frame according to another embodiment of the disclosure. It differs from the frame format shown in FIG. 20 is that the sensing feedback request frame includes only one measurement instance ID.

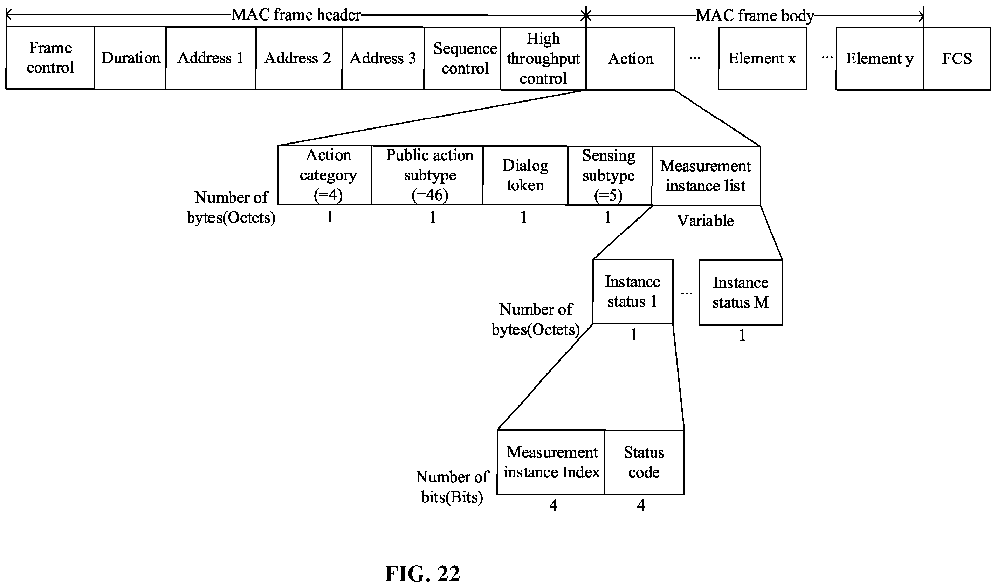

FIG. 22 is a schematic diagram of a frame format of a sensing feedback response frame according to an embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 5 to indicate that the sensing action frame is a sensing initiation request frame.

In some embodiments, as shown in FIG. 22, the sensing feedback response frame may further include at least one of the following fields.

It should be understood that correspondences between meanings and values of the following fields are examples only, as long as it is ensured that each meaning corresponds to a unique value, and the disclosure is not limited thereto.

Measurement instance list (Instance Info List) field, it is a list of measurement instances, including M instance status.

Optionally, the number of instance statuses is consistent with the number of measurement instances in a corresponding sensing feedback request frame.

Measurement instance index field, for example, it takes a value of 0 to indicate that response is made for the first instance indicated in the sensing feedback request frame, it takes a value of 1 to indicate that response is madefor the second instance indicated in the sensing feedback request frame, and so on, it takes a value of 15 to indicate that response is made for the sixteenth instance indicated in the sensing feedback request frame.

Status code field, it is configured to indicate a feedback status of the sensing receiver to a measurement device.

For example, it takes a value of 0 to indicate preparing to report feedback data (for example, corresponding to a situation where the measurement threshold is not provided, or a situation where the threshold condition is met); it takes a value of 1 to indicate no report due to a sensing measurement signal is not received; it takes a value of 2 to indicate no report due to a sensing measurement signal is received while the sensing measurement signal does not meet a threshold condition.

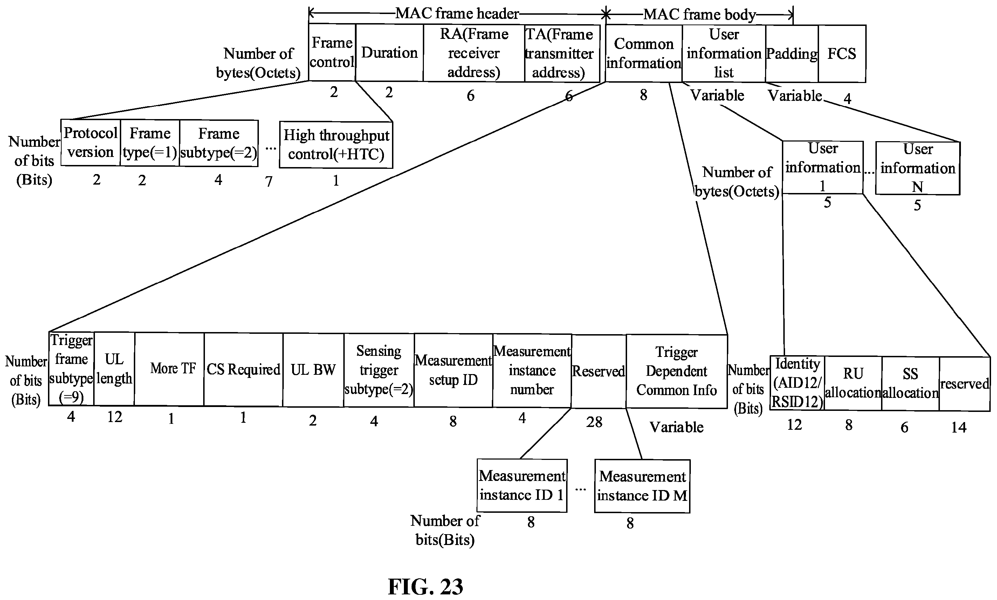

FIG. 23 is a schematic diagram of a frame format of a sensing report trigger frame according to an embodiment of the disclosure. In this frame format, the frame type field takes a value of 1, the frame subtype field takes a value of 2, the trigger frame subtype field takes a value of 9, and the sensing trigger subtype field takes a value of 2, to indicate that the frame is a sensing report trigger frame.

In some embodiments, as shown in FIG. 23, the sensing feedback trigger frame may further include at least one of the following fields.

It should be understood that correspondences between meanings and values of the following fields are examples only, as long as it is ensured that each meaning corresponds to a unique value, and the disclosure is not limited thereto.

Measurement setup ID field, it is a measurement setup ID, identifying measurement parameters used by the measurement instance to which the reported measurement result belongs.

Number of measurement instances (Number of instances), it is configured to indicate the number of measurement instances in common information specific to the trigger frame subtype (Trigger Dependent Common Info).

Measurement instance ID field, it is configured to indicate the measurement instance ID.

Identity (AID12/RSID12), it is ID of the terminal or ID of the STA device, specifically, it may be ID of a device triggered to report the measurement result.

Resource unit allocation (RU Allocation) field, it is configured to indicate frequency-domain resource unit allocation information for the terminal.

Spatial-time stream allocation (SS Allocation) field, it is configured to indicate spatial-time stream allocation information for uplink measurement of the terminal.

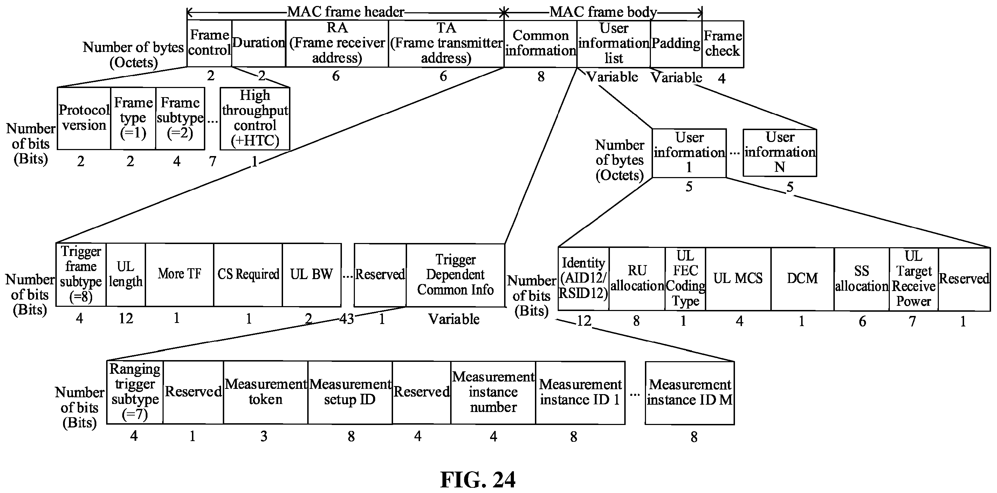

FIG. 24 is a schematic diagram of a frame format of a sensing report trigger frame according to another embodiment of the disclosure. In this frame format, the frame type takes a value of 1 to indicate that the frame is a control frame, the frame subtype takes a value of 2 to indicate that the frame is a trigger frame, the trigger frame subtype (Trigger Type) takes a value of 8 to indicate that the frame is a ranging trigger frame, and the ranging trigger frame subtype takes a value of 7 to indicate that the frame is a sensing report trigger frame (TF SEN Report).

In some embodiments, as shown in FIG. 24, the sensing report trigger frame may further include at least one of the following fields.

It should be understood that correspondences between meanings and values of the following fields are examples only, as long as it is ensured that each meaning corresponds to a unique value, and the disclosure is not limited thereto.

Measurement setup ID field, it is a measurement setup ID, identifying measurement parameters used by the measurement instance to which the reported measurement result belongs.

Number of measurement instances (Number of instances), it is configured to indicate a number of measurement instances in common information specific to the trigger frame subtype (Trigger Dependent Common Info).

Measurement instance ID field, it is configured to indicate the measurement instance ID.

Identity (AID12/RSID12), it is ID of the terminal or ID of the STA device.

Resource unit allocation (RU Allocation) field, it is configured to indicate frequency-domain resource unit allocation information for the terminal.

Spatial-time stream allocation (SS Allocation) field, it is configured to indicate spatial-time stream allocation information for uplink measurement of the terminal.

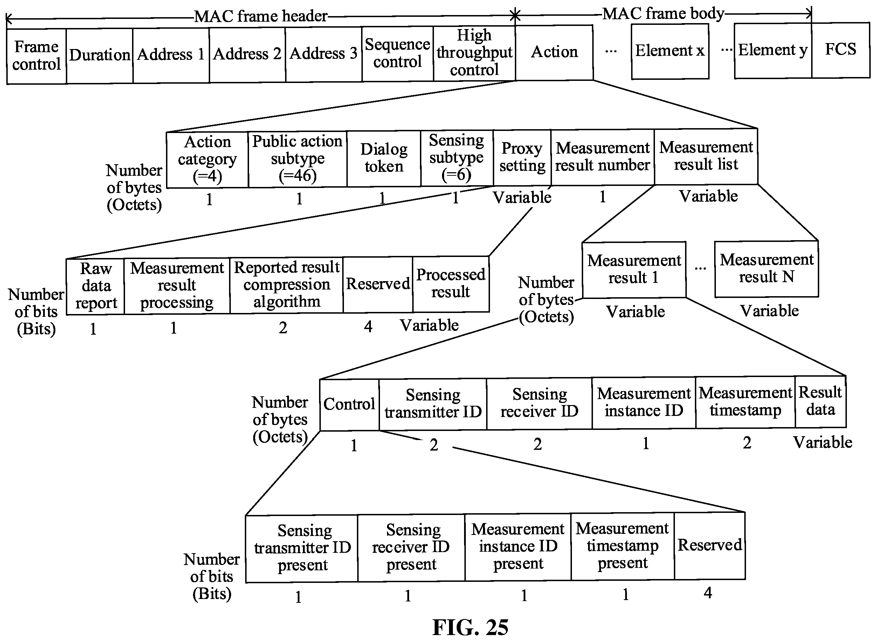

FIG. 25 is a schematic diagram of a frame format of a sensing report frame according to another embodiment of the disclosure. In this frame format, the action category field takes a value of 4 to indicate that the frame is a public action frame, the public action subtype field takes a value of 46 to indicate that the frame is a sensing action frame, and the sensing subtype takes a value of 6 to indicate that the sensing action frame is a sensing report frame.

In some embodiments, as shown in FIG. 25, the sensing report frame may further include at least one of the following fields.

It should be understood that correspondences between meanings and values of the following fields are examples only, as long as it is ensured that each meaning corresponds to a unique value, and the disclosure is not limited thereto.

Proxy setting field, optionally, it is not included in the sensing report frame sent by the STA device, and it is included in the sensing report frame sent by the AP device.

Raw data report (Raw Report) field, it is configured to indicate whether the raw measurement result(s) reported by the sensing receiver(s) are included in the frame. In an embodiment, this field is set as 1 to indicate Yes; otherwise, set as 0.

Measurement result processing field, it is configured to indicate whether the processing result of the second device to the measurement result(s) reported by the sensing receiver(s) is included in the frame. In an embodiment, the measurement result processing field is set as 1 to indicate Yes, and set as 0 to indicate No.

Reported result compression algorithm (Compress Method) field, it is configured to indicate an algorithm used by the second device to compress the raw measurement result(s) reported by the sensing receiver(s) in the frame. For example, this field takes a value of 0 to indicate no compression, takes a value of 1 to indicate rotation of V matrix based on the SVD of CSI matrix, takes a value of 2 to indicate truncated power delay profile, takes a value of 3 to indicate a compressed beamforming feedback matrix.

Processing result (in other words, Analysis result) field, it is configured to indicate a result after the second device analyzes and processes the raw measurement result(s) reported by the sensing receiver(s), for example, the processing result may be detection of presence of peoples, detection of the number of people, detection of the number of people's breaths, etc.

Optionally, when the measurement result processing field indicates that the processing result of the reported raw measurement result(s) is included, the processing result field is included and present in the frame; otherwise, it is not present, or it is a reserved value.

Measurement result number (Number of reports) field, it is configured to indicate the number of measurement results included in the frame. For example, this field takes a value of 0 to indicate 1 measurement result, takes a value of 1 to indicate 2 measurement results, and so on, and takes a value of 255 to indicate 256 measurement results.

Measurement result (Measurement report) field, it is configured to carry measurement result data.

Optionally, when the sensing report frame is sent by a sensing receiver to the second device, the measurement result field may include measurement data information corresponding to at least one measurement instance of the sensing receiver, such as the foregoing five tuple data.

Optionally, when the sensing report frame is sent by the second device to the sensing initiator, the measurement result field may include measurement feedback information corresponding to at least one measurement instance of the sensing receiver(s) and/or measurement feedback information corresponding to at least one measurement instance of the second device, such as the foregoing five tuple data.

Control (Report control) field, it is configured to indicate whether each subfield in the measurement result (Measurement report) field is present.

Sensing transmitter ID (TX ID) field, it is configured to indicate AID/UID of the sensing transmitter ID corresponding to the measurement result.

Sensing receiver ID (RX ID) field, it is configured to indicate AID/UID of the sensing receiver ID corresponding to the measurement result.

Measurement instance ID, it is a measurement instance ID corresponding to the measurement result.

Measurement timestamp, it is occurrence time of the measurement instance.

Result data (Report), such as CSI data.

It should be understood that the foregoing method 200, method 300 and method 400 may be implemented alone or may be implemented in combination. For example, the first device sends a first request frame to the second device to request the second device acting as proxy to establish a measurement, the first request frame including measurement setup information; the second device may further establish the measurement based on the measurement setup information, may further perform the measurement process by using manners described in method 300, and may perform the report process based on manners described in method 400 after the measurement is completed, to implement the sensing measurement process initiated by the STA device.

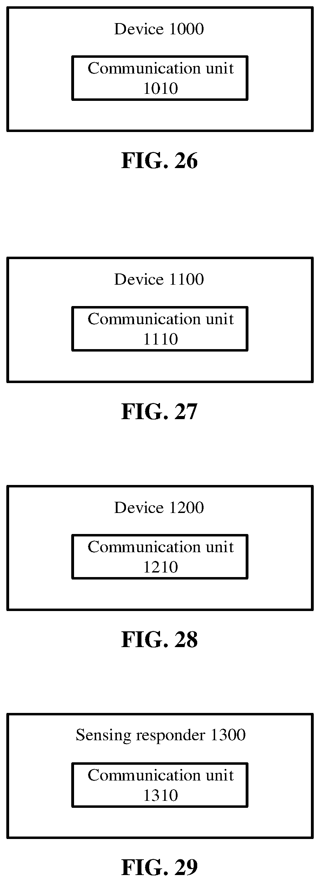

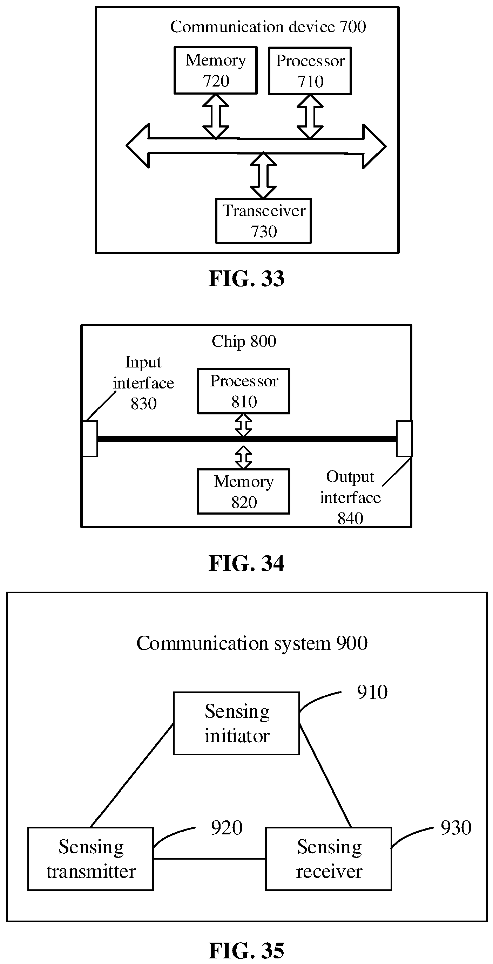

The method embodiments of the disclosure are described in detail as above with reference to FIG. 3 to FIG. 25, and apparatus embodiments of the disclosure are described in detail below with reference to FIG. 26 and FIG. 35. It should be understood that the apparatus embodiments and the method embodiments correspond to each other, similar descriptions may refer to the method embodiments.

FIG. 26 shows a schematic block diagram of a device for wireless communication 1000 according to an embodiment of the disclosure. As shown in FIG. 26, the device for wireless communication 1000 includes a communication unit 1010.

The communication unit 1010 is configured to send a first request frame to a second device, the first request frame being configured to request establishing a measurement of target type.

In some embodiments, the first request frame includes at least one of following:
first indication information, configured to indicate a type of to-be-established measurement;
second indication information, configured to indicate measurement setup request information corresponding to sensing responder(s) participating in the measurement; or
third indication information, configured to indicate a manner used by the second device to process measurement result(s) reported by the sensing responder(s) and/or parameters used by the second device to process the measurement result(s) reported by the sensing responder(s).

In some embodiments, the first indication information is configured to indicate establishment of a TB measurement or establishment of a Non-TB measurement.

In some embodiments, the measurement setup request information corresponding to the sensing responder(s) includes at least one of following: role information of the sensing responder(s) in the measurement, report type information of how the sensing responder(s) report the measurement result(s), or measurement threshold information.

In some embodiments, the role information of the sensing responder(s) in the measurement includes: whether the sensing responder is used as a sensing receiver in the measurement, and/or whether the sensing responder is used as a sensing transmitter in the measurement.

In some embodiments, the report type information of how the sensing responder(s) report the measurement result(s) includes: whether the sensing responder reports the measurement result immediately, in a case that the sensing responder is used as a sensing receiver in the measurement.

In some embodiments, the manner used by the second device to process the measurement result(s) reported by the sensing responder(s) includes whether the second device forwards the measurement result(s) reported by the sensing responder(s) to the device, and/or whether the second device processes the measurement result(s) reported by the sensing responder(s).

In some embodiments, the parameters used by the second device to process the measurement result(s) reported by the sensing responder(s) include at least one of following: a compression algorithm configured to compress the measurement result(s) reported by the sensing responder(s), accuracy information configured to process the measurement result(s) reported by the sensing responder(s), or a sensing application type of the measurement.

In some embodiments, the accuracy information configured to process the measurement result(s) reported by the sensing responder(s) includes at least one of following:
range accuracy information, configured to indicate accuracy of distance data which is calculated upon the sensing measurement result(s);
velocity accuracy information, configured to indicate accuracy of velocity data which is calculated upon the sensing measurement result(s); or
angular accuracy information, configured to indicate accuracy of angular data which is calculated upon the sensing measurement result(s).

In some embodiments, the first request frame is an action frame or a non-acknowledgement action frame.

In some embodiments, the first request frame includes an action field, and the action field includes an action category field, a public action subtype field and a sensing subtype field. Values of the action category field, the public action subtype field and the sensing subtype field jointly indicate that the first request frame is a sensing initiation request frame.

In some embodiments, the communication unit 1010 is further configured to receive a first response frame sent by the second device, and the first response frame includes measurement setup response information of at least one sensing responder and/or measurement setup response information of the second device.

In some embodiments, the measurement setup response information of the sensing responder includes at least one of following: a reason code of the sensing responder disagreeing to participate in the measurement, role information of the sensing responder in the measurement, report type information of the sensing responder to a measurement result, or measurement threshold information.

In some embodiments, the measurement setup response information of the second device includes at least one of following: whether the second device agrees to establish the measurement, a reason code of the second device disagreeing to establish the measurement, measurement setup ID, a type of the measurement determined to establish by the second device, or a manner determined by the second device to process a measurement result reported by the sensing responder.

In some embodiments, the measurement setup ID is generated by the second device.

In some embodiments, the first response frame is an action frame or a non-acknowledgement action frame.

In some embodiments, the first response frame includes an action field, and the action field includes an action category field, a public action subtype field and a sensing subtype field. Values of the action category field, the public action subtype field and the sensing subtype field jointly indicate that the first response frame is a sensing initiation response frame.

In some embodiments, the device is a STA device, and the second device is an AP device.

In some embodiments, the device is a sensing initiator.

In some embodiments, the measurement of target type is a TB measurement.

In some embodiments, the above communication unit may be a communication interface or a transceiver, or an input/output (I/O) interface of a communication chip or a system-on-chip (SOC). The above processing unit may be one or more processors.

It should be understood that the device for wireless communication 1000 according to the embodiment of the disclosure may correspond to the first device in the method embodiments of the disclosure, and the foregoing and other operations and/or functions of each unit in the device for wireless communication 1000 implement corresponding processes of the first device in the method 200 shown in FIG. 3 to FIG. 7 respectively, which are not elaborated here, for the sake of brevity.

FIG. 27 shows a schematic block diagram of a device for wireless communication 1100 according to an embodiment of the disclosure. As shown in FIG. 27, the device for wireless communication 1100 includes a communication unit 1110.

The communication unit 1110 is configured to receive a first request frame sent by a first device, the first request frame being configured to request establishing a measurement of target type.

In some embodiments, the first request frame includes at least one of following:
first indication information, configured to indicate a type of to-be-established measurement;
second indication information, configured to indicate measurement setup request information of sensing responder(s) participating in the measurement; or
third indication information, configured to indicate a manner used by the device to process a measurement result(s) reported by the sensing responder(s) and/or parameters used by the device to process the measurement result(s) reported by the sensing responder(s).

In some embodiments, the first indication information is configured to indicate establishment of a TB measurement or establishment of a Non-TB measurement.

In some embodiments, the measurement setup request information of the sensing responder(s) includes at least one of following: role information of the sensing responder in the measurement, report type information of the sensing responder to the measurement result, or measurement threshold information.

In some embodiments, the role information of the sensing responder in the measurement includes whether the sensing responder is used as a sensing receiver in the measurement, and/or whether the sensing responder is used as a sensing transmitter in the measurement.

In some embodiments, the report type information of the sensing responder to the measurement result(s) includes: whether the sensing responder reports the measurement result immediately, in a case that the sensing responder is used as a sensing receiver in the measurement.

In some embodiments, the manner used by the device to process the measurement result(s) reported by the sensing responder(s) includes whether the device forwards the measurement result(s) reported by the sensing responder(s) to the first device, and/or whether the device processes the measurement result(s) reported by the sensing responder(s).

In some embodiments, the parameters used by the device to process the measurement result(s) reported by the sensing responder(s) include at least one of following: a compression algorithm configured to compress the measurement result(s) reported by the sensing responder(s), accuracy information configured to process the measurement result(s) reported by the sensing responder(s), or a sensing application type of the measurement.

In some embodiments, the accuracy information configured to process the measurement result(s) reported by the sensing responder(s) includes at least one of following:
range accuracy information, configured to indicate accuracy of distance data which is calculated upon the sensing measurement result(s);
velocity accuracy information, configured to indicate accuracy of velocity data which is calculated upon the sensing measurement result(s); or
angular accuracy information, configured to indicate accuracy of angular data which is calculated upon the sensing measurement result(s).

In some embodiments, the first request frame is an action frame or a non-acknowledgement action frame.

In some embodiments, the first request frame includes an action field, and the action field includes an action category field, a public action subtype field and a sensing subtype field. Values of the action category field, the public action subtype field and the sensing subtype field jointly indicate that the first request frame is a sensing initiation request frame.

In some embodiments, the communication unit 1110 is further configured to send a second request frame to at least one sensing responder, the second request frame including measurement setup request information of the at least one sensing responder.

In some embodiments, the measurement setup request information of the sensing responder includes at least one of following: role information of the sensing responder in the measurement, report type information of the sensing responder to a measurement result, or measurement threshold information.

In some embodiments, the second request frame is an action frame or a non-acknowledgement action frame.

In some embodiments, the second request frame includes an action field, and the action field includes an action category field, a public action subtype field and a sensing subtype field. Values of the action category field, the public action subtype field and the sensing subtype field jointly indicate that the second request frame is a sensing setup request frame.

In some embodiments, the communication unit 1110 is further configured to receive a second response frame sent by at least one sensing responder, the second response frame including measurement setup response information of the at least one sensing responder.

In some embodiments, the measurement setup response information of the sensing responder includes at least one of following: a reason code of the sensing responder disagreeing to participate in the measurement, role information of the sensing responder in the measurement, report type information of the sensing responder to a measurement result, or measurement threshold information.

In some embodiments, the second response frame is an action frame or a non-acknowledgement action frame.

In some embodiments, the second response frame includes an action field, and the action field includes an action category field, a public action subtype field and a sensing subtype field. Values of the action category field, the public action subtype field and the sensing subtype field jointly indicate that the second response frame is a sensing setup response frame.

In some embodiments, the communication unit 1110 is further configured to send a first response frame to the first device, the first response frame includes measurement setup response information of at least one sensing responder and/or measurement setup response information of the device.

In some embodiments, the measurement setup response information of the sensing responder includes at least one of following: a reason code of the sensing responder disagreeing to participate in the measurement, role information of the sensing responder in the measurement, report type information of the sensing responder to a measurement result, or measurement threshold information.

In some embodiments, the measurement setup response information of the device includes at least one of following: whether the device agrees to establish the measurement, a reason code of the device disagreeing to establish the measurement, measurement setup ID, a type of the measurement determined to establish by the device, or a manner determined by the device to process a measurement result reported by the sensing responder.

In some embodiments, the measurement setup ID is generated by the device.

In some embodiments, the first response frame is an action frame or a non-acknowledgement action frame.

In some embodiments, the first response frame includes an action field, and the action field includes an action category field, a public action subtype field and a sensing subtype field. Values of the action category field, the public action subtype field and the sensing subtype field jointly indicate that the first response frame is a sensing initiation response frame.

In some embodiments, the first device is a sensing initiator.

In some embodiments, the first device is a STA device, and the device is an AP device.

In some embodiments, the measurement of target type is a TB measurement.

In some embodiments, the above communication unit may be a communication interface or a transceiver, or an I/O interface of a communication chip or a SOC. The above processing unit may be one or more processors.

It should be understood that the device for wireless communication 1100 according to the embodiment of the disclosure may correspond to the second device in the method embodiments of the disclosure, and the foregoing and other operations and/or functions of each unit in the device for wireless communication 1100 implement corresponding processes of the second device in the method 200 shown in FIG. 3 to FIG. 7 respectively, which are not elaborated here, for the sake of brevity.

FIG. 28 shows a schematic block diagram of a device for wireless communication 1200 according to an embodiment of the disclosure. As shown in FIG. 28, the device for wireless communication 1200 includes a communication unit 1210.

The communication unit 1210 is configured to send a first trigger frame to at least one sensing responder, the first trigger frame is configured to trigger the at least one sensing responder to perform a measurement of target type.

In some embodiments, the first trigger frame includes at least one of following: measurement setup ID, measurement instance ID, or information of a device which will perform the measurement.

In some embodiments, the measurement setup ID is generated by the device.

In some embodiments, measurements triggered by a same first trigger frame correspond to a same measurement instance ID.

In some embodiments, the first trigger frame is a sensing trigger frame.

In some embodiments, the first trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the first trigger frame is a sensing polling trigger frame.

In some embodiments, the first trigger frame is a ranging variant trigger frame.

In some embodiments, the first trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the first trigger frame is a sensing polling trigger frame.

In some embodiments, the device 1210 further includes a processing unit.

The processing unit is configured to perform, by the device, uplink measurement and/or downlink measurement, when roles of the device in the measurement are both a sensing transmitter and a sensing receiver.

In some embodiments, the communication unit is further configured to send a second trigger frame and/or a first announcement frame.

The second trigger frame is configured to trigger a STA device with a role of sensing transmitter to send a first measurement frame, and the first measurement frame is used for an AP device with a role of the sensing receiver to perform the uplink measurement.

The first announcement frame is configured to announce that an AP device with a role of sensing transmitter will send a second measurement frame, and the second measurement frame is used for a STA device with a role of the sensing receiver to perform the downlink measurement.

In some embodiments, the second trigger frame includes at least one of following: measurement setup ID, measurement instance ID, or information of a device which will perform the uplink measurement.

In some embodiments, the first announcement frame includes at least one of following: measurement type, measurement setup ID, measurement instance ID, or information of a device which will perform the downlink measurement.

In some embodiments, the device further includes a processing unit.

The processing unit is configured to control a sequence of performing the uplink measurement and the downlink measurement through a sequence of sending the second trigger frame and the first announcement frame.

In some embodiments, the second trigger frame is a sensing trigger frame.

In some embodiments, the second trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the first trigger frame is a sensing measurement trigger frame.

In some embodiments, the second trigger frame is a ranging variant trigger frame.

In some embodiments, the second trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the second trigger frame is a sensing measurement trigger frame.

In some embodiments, the first announcement frame is a control frame.

In some embodiments, the first announcement frame includes a frame control field and a common information field, the frame control field includes a frame subtype field and a control frame extension field, and the common information field includes a sensing subtype field. The frame subtype field, the control frame extension field and the sensing subtype field jointly indicate that the first announcement frame is a measurement announcement frame.

In some embodiments, the first announcement frame is a ranging variant announcement frame.

In some embodiments, the first announcement frame includes a frame control field, a measurement session token field and a STA information list field, the frame control field includes a frame type field and a frame subtype field, the measurement session token field includes a ranging field and a HE field, and the STA information list field includes an identity field. Values of the frame type field, the frame subtype field, the ranging field, the HE field and the identity field jointly indicate that the first announcement frame is a measurement announcement frame.

In some embodiments, the device is an AP device.

In some embodiments, the measurement of target type is a TB measurement.

In some embodiments, the above communication unit may be a communication interface or a transceiver, or an I/O interface of a communication chip or a SOC. The above processing unit may be one or more processors.

It should be understood that the device for wireless communication 1200 according to the embodiment of the disclosure may correspond to the second device in the method embodiments of the disclosure, and the foregoing and other operations and/or functions of each unit in the device for wireless communication 1200 implement corresponding processes of the second device in the method 300 shown in FIG. 8 to FIG. 17 respectively, which are not elaborated here, for the sake of brevity.

FIG. 29 shows a schematic block diagram of a sensing responder 1300 according to an embodiment of the disclosure. As shown in FIG. 29, the device for wireless communication 1300 includes a communication unit 1310.

The communication unit 1310 is configured to receive a first trigger frame sent by a second device, the first trigger frame is configured to trigger the sensing responder to perform a measurement of target type.

In some embodiments, the first trigger frame includes at least one of following: measurement setup ID, measurement instance ID, or information of a device which will perform the measurement.

In some embodiments, the measurement setup ID is generated by the second device.

In some embodiments, measurements triggered by a same first trigger frame correspond to a same measurement instance ID.

In some embodiments, the first trigger frame is a sensing trigger frame.

In some embodiments, the first trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the first trigger frame is a sensing polling trigger frame.

In some embodiments, the first trigger frame is a ranging variant trigger frame.

In some embodiments, the first trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the first trigger frame is a sensing polling trigger frame.

In some embodiments, the communication unit 1310 is further configured to receive a second trigger frame and/or a first announcement frame sent by the second device.

The second trigger frame is configured to trigger a TA device with a role of sensing transmitter to send a first measurement frame, and the first measurement frame is used for an AP device with a role of a sensing receiver to perform uplink measurement.

The first announcement frame is configured to announce that an AP device with a role of sensing transmitter will send a second measurement frame, and the second measurement frame is used for a STA device with a role of the sensing receiver to perform downlink measurement.

In some embodiments, the second trigger frame includes at least one of following: measurement setup ID, measurement instance ID, or information of a device which will perform the uplink measurement.

In some embodiments, the first announcement frame includes at least one of following: measurement type, measurement setup ID, measurement instance ID, or information of a device which will perform the downlink measurement.

In some embodiments, the second trigger frame is a sensing trigger frame.

In some embodiments, the second trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the first trigger frame is a sensing measurement trigger frame.

In some embodiments, the second trigger frame is a ranging variant trigger frame.

In some embodiments, the second trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the second trigger frame is a sensing measurement trigger frame.

In some embodiments, the first announcement frame is a control frame.

In some embodiments, the first announcement frame includes a frame control field and a common information field, the frame control field includes a frame subtype field and a control frame extension field, and the common information field includes a sensing subtype field. The frame subtype field, the control frame extension field and the sensing subtype field jointly indicate that the first announcement frame is a measurement announcement frame.

In some embodiments, the first announcement frame is a ranging variant announcement frame.

In some embodiments, the first announcement frame includes a frame control field, a measurement session token field and a STA information list field, the frame control field includes a frame type field and a frame subtype field, the measurement session token field includes a ranging field and a HE field, and the STA information list field includes an identity field. The frame type field, the frame subtype field, the ranging field, the HE field and the identity field jointly indicate that the first announcement frame is a measurement announcement frame.

In some embodiments, the sensing responder is a STA device, and the communication unit 1310 is further configured to:

send the first measurement frame, in a case that the role is the sensing transmitter and the second trigger frame is received; and/or

receive the second measurement frame sent by the AP device with a role of sensing transmitter, in a case that the role is the sensing receiver and the first announcement frame is received.

In some embodiments, the measurement of target type is a TB measurement.

In some embodiments, the above communication unit may be a communication interface or a transceiver, or an I/O interface of a communication chip or a SOC. The above processing unit may be one or more processors.

It should be understood that the sensing responder 1300 according to the embodiment of the disclosure may correspond to the sensing responder in the method embodiments of the disclosure, and the foregoing and other operations and/or functions of each unit in the sensing responder 1300 implement corresponding processes of the sensing responder in the method 300 shown in FIG. 8 to FIG. 17 respectively, which are not elaborated here, for the sake of brevity.

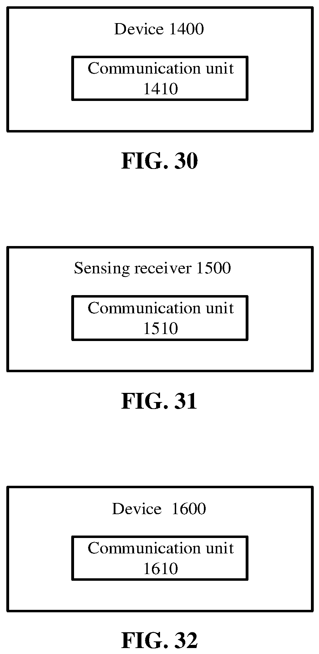

FIG. 30 shows a schematic block diagram of a device for wireless communication 1400 according to an embodiment of the disclosure. As shown in FIG. 30, the device for wireless communication 1400 includes a communication unit 1410.

The communication unit 1410 is configured to receive a first report frame sent by at least one sensing receiver, the first report frame includes measurement data information of the sensing receiver.

In some embodiments, the measurement data information of the sensing receiver includes measurement data information of at least one measurement instance.

Measurement data information of each measurement instance includes at least one of following: a measurement result, ID of a sensing transmitter corresponding to the measurement result, ID of a sensing receiver corresponding to the measurement result, ID of a measurement instance corresponding to the measurement result, or time information of the measurement instance.

In some embodiments, the first report frame is an action frame or a non-acknowledgement action frame.

In some embodiments, the first report frame includes an action field, and the action field includes an action category field, a public action subtype field and a sensing subtype field. Values of the action category field, the public action subtype field and the sensing subtype field jointly indicate that the first report frame is a sensing report frame.

In some embodiments, the communication unit 1410 is further configured to send a third trigger frame to the at least one sensing receiver, the third trigger frame being configured to trigger at least one sensing receiver to perform measurement report.

In some embodiments, the third trigger frame includes at least one of following: measurement setup ID, measurement instance ID, or information of a device which reports a measurement result.

In some embodiments, the third trigger frame is a sensing trigger frame.

In some embodiments, the third trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the third trigger frame is a sensing report trigger frame.

In some embodiments, the third trigger frame is a ranging variant trigger frame.

In some embodiments, the third trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the third trigger frame is a sensing report trigger frame.

In some embodiments, the communication unit 1410 is further configured to send a third request frame to at least one sensing receiver, the third request frame being configured to request the at least one sensing receiver to feed back a measurement result.

In some embodiments, the third request frame includes at least one of following: measurement setup ID, a measurement instance ID list, information of a device which feeds back the measurement result, or bitmap information of whether each measurement instance in the measurement instance ID list being applied with a measurement threshold.

In some embodiments, the third request frame is an action frame or a non-acknowledgement action frame.

In some embodiments, the third request frame includes an action field, and the action field includes an action category field, a public action subtype field and a sensing subtype field. Values of the action category field, the public action subtype field and the sensing subtype field jointly indicate that the third request frame is a sensing feedback request frame.

In some embodiments, the communication unit 1410 is further configured to receive a third response frame sent by at least one sensing receiver, the third response frame being configured to indicate response information of the sensing receiver about whether to feedback measurement result(s).

In some embodiments, the third response frame includes at least one of following: measurement setup ID, a measurement instance ID list, or a status code corresponding to each measurement instance in the measurement instance ID list.

In some embodiments, the status code corresponding to the measurement instance is configured to indicate at least one of following: preparing to report the measurement result, not reporting the measurement result in a case that a measurement signal is not received, or not reporting the measurement result in a case that the measurement signal is received while a measurement result of the measurement signal does not meet a measurement threshold.

In some embodiments, the third response frame is an action frame or a non-acknowledgement action frame.

In some embodiments, the third response frame includes an action field, and the action field includes an action category field, a public action subtype field and a sensing subtype field. Values of the action category field, the public action subtype field and the sensing subtype field jointly indicate that the third response frame is a sensing feedback response frame.

In some embodiments, the at least one sensing receiver is a sensing receiver performing downlink measurement.

In some embodiments, the communication unit 1410 is further configured to send a second report frame to a first device, the second report frame includes measurement feedback information of the at least one sensing receiver and/or measurement feedback information of the device. The first device is a sensing initiator.

In some embodiments, the measurement feedback information of the at least one sensing receiver includes at least one of following:
fourth indication information, configured to indicate whether a raw measurement result reported by the sensing receiver is included;
fifth indication information, configured to indicate whether a processing result of the device to the raw measurement result reported by the sensing receiver is included;
sixth indication information, configured to indicate a compression algorithm used by the device to compress the raw measurement result reported by the sensing receiver;
the raw measurement result reported by the sensing receiver or a processing result of the device to a measurement result reported by the sensing receiver;
ID of a sensing transmitter corresponding to the measurement result;
ID of a sensing receiver corresponding to the measurement result;
ID of a measurement instance corresponding to the measurement result; or
time information of the measurement instance.

In some embodiments, the measurement feedback information of the device includes at least one of following:
seventh indication information, configured to indicate whether uplink measurement result(s) of the device is included;
eighth indication information, configured to indicate whether a processing result of the device to the uplink measurement result(s) of the device is included;
ninth indication information, configured to indicate a compression algorithm used by the device to compress the uplink measurement result(s) of the device;
the uplink measurement result(s) of the device or a processing result of the uplink measurement result(s);
ID of a sensing transmitter corresponding to an uplink measurement result;
ID of a sensing receiver corresponding to an uplink measurement result;
ID of a measurement instance corresponding to an uplink measurement result; or
time information of the measurement instance.

In some embodiments, the first device is a STA device, and the device is an AP device.

In some embodiments, the above communication unit may be a communication interface or a transceiver, or an I/O interface of a communication chip or a SOC. The above processing unit may be one or more processors.

It should be understood that the device for wireless communication 1400 according to the embodiment of the disclosure may correspond to the second device in the method embodiments of the disclosure, and the foregoing and other operations and/or functions of each unit in the device for wireless communication 1400 implement corresponding processes of the second device in the method 400 shown in FIG. 18 to FIG. 25 respectively, which are not elaborated here, for the sake of brevity.

FIG. 31 shows a schematic block diagram of a sensing receiver 1500 according to an embodiment of the disclosure. As shown in FIG. 31, the sensing receiver 1500 includes a communication unit.

The communication unit is configured to send a first report frame to a second device, the first report frame includes measurement data information of the sensing receiver.

In some embodiments, the measurement data information of the sensing receiver includes measurement data information of at least one measurement instance.

Measurement data information of each measurement instance includes at least one of following: a measurement result, ID of a sensing transmitter corresponding to the measurement result, ID of a sensing receiver corresponding to the measurement result, ID of a measurement instance corresponding to the measurement result, or time information of the measurement instance.

In some embodiments, the first report frame is an action frame or a non-acknowledgement action frame.

In some embodiments, the first report frame includes an action field, and the action field includes an action category field, a public action subtype field and a sensing subtype field. Values of the action category field, the public action subtype field and the sensing subtype field jointly indicate that the first report frame is a sensing report frame.

In some embodiments, the communication unit 1510 is further configured to receive a third trigger frame sent by the second device, the third trigger frame being configured to trigger the sensing receiver to perform measurement report.

In some embodiments, the third trigger frame includes at least one of following: measurement setup ID, measurement instance ID, or information of a device which reports a measurement result.

In some embodiments, the third trigger frame is a sensing trigger frame.

In some embodiments, the third trigger frame includes a frame control field and a common information field, the frame control field includes a frame type field and a frame subtype field, and the common information field includes a trigger frame subtype field and a sensing trigger subtype field. The frame type field, the frame subtype field, the trigger frame subtype field and the sensing trigger subtype field jointly indicate that the third trigger frame is a sensing report trigger frame.

In some embodiments, the third trigger frame is a ranging variant trigger frame.

In some embodiments, the third trigger frame includes a frame control field and a common information field, the frame control field includes a frame type field and a frame subtype field, and the common information field includes a trigger frame subtype field and a ranging trigger subtype field. The frame type field, the frame subtype field, the trigger frame subtype field and the ranging trigger subtype field jointly indicate that the third trigger frame is a sensing report trigger frame.

In some embodiments, the communication unit 1510 is further configured to receive a third request frame sent by the second device, the third request frame being configured to request the sensing receiver to feed back a measurement result.

In some embodiments, the third request frame includes at least one of following: measurement setup ID, a measurement instance ID list, information of a device which feeds back the measurement result, or bitmap information of a measurement threshold applying to each measurement instance in the measurement instance ID list or not.

In some embodiments, the third request frame is an action frame or a non-acknowledgement action frame.

In some embodiments, the third request frame includes an action field, and the action field includes an action category field, a public action subtype field and a sensing subtype field. Values of the action category field, the public action subtype field and the sensing subtype field jointly indicate that the third request frame is a sensing feedback request frame.

In some embodiments, the communication unit 1510 is further configured to send a third response frame to the second device, the third response frame being configured to indicate response information of the sensing receiver about whether to feedback measurement result(s).

In some embodiments, the third response frame includes at least one of following: measurement setup ID, a measurement instance ID list, or a status code corresponding to each measurement instance in the measurement instance ID list.

In some embodiments, the status code corresponding to the measurement instance is configured to indicate at least one of following: preparing to report the measurement result, not reporting the measurement result in a case that a measurement signal is not received, or not reporting the measurement result in a case that the measurement signal is received while a measurement result of the measurement signal does not meet a measurement threshold.

In some embodiments, the third response frame is an action frame or a non-acknowledgement action frame.

In some embodiments, the third response frame includes an action field, and the action field includes an action category field, a public action subtype field and a sensing subtype field. Values of the action category field, the public action subtype field and the sensing subtype field jointly indicate that the third response frame is a sensing feedback response frame.

In some embodiments, the sensing receiver is a sensing receiver performing downlink measurement.

In some embodiments, the above communication unit may be a communication interface or a transceiver, or an I/O interface of a communication chip or a SOC. The above processing unit may be one or more processors.

It should be understood that the sensing receiver 1500 according to the embodiment of the disclosure may correspond to the sensing receiver in the method embodiments of the disclosure, and the foregoing and other operations and/or functions of each unit in the sensing receiver 1500 implement corresponding processes of the sensing receiver in the method 400 shown in FIG. 18 to FIG. 25 respectively, which are not elaborated here, for the sake of brevity.

FIG. 32 shows a schematic block diagram of a device for wireless communication 1600 according to an embodiment of the disclosure. The device for wireless communication 1600 is a first device and as shown in FIG. 32, the device for wireless communication 1600 includes a communication unit 1610.

The communication unit 1610 is configured to receive a second report frame sent by a second device, the second report frame includes measurement feedback information of at least one sensing receiver and/or measurement feedback information of the second device. The device is a sensing initiator.

In some embodiments, the measurement feedback information of the at least one sensing receiver includes at least one of following:
a raw measurement result reported by the sensing receiver or a processing result of the second device to a measurement result reported by the sensing receiver;
ID of a sensing transmitter corresponding to the measurement result;
ID of a sensing receiver corresponding to the measurement result;
ID of a measurement instance corresponding to the measurement result; or
time information of the measurement instance.

In some embodiments, the measurement feedback information of the second device includes at least one of following:
uplink measurement result(s) of the second device or a processing result of the uplink measurement result(s);
ID of a sensing transmitter corresponding to an uplink measurement result;
ID of a sensing receiver corresponding to an uplink measurement result;
ID of a measurement instance corresponding to an uplink measurement result; or
time information of the measurement instance.

In some embodiments, the device is a STA device, and the second device is an AP device.

In some embodiments, the measurement initiated by the device is a TB measurement.

In some embodiments, the communication unit 1610 is further configured to send a first request frame to the second device, the first request frame being configured to request establishing a measurement of target type. The measurement feedback information is obtained based on a measurement result of the measurement of target type.

In some embodiments, the measurement of target type is a TB measurement.

In some embodiments, the above communication unit may be a communication interface or a transceiver, or an I/O interface of a communication chip or a SOC. The above processing unit may be one or more processors.

It should be understood that the device for wireless communication 1600 according to the embodiment of the disclosure may correspond to the first device in the method embodiments of the disclosure, and the foregoing and other operations and/or functions of each unit in the device for wireless communication 1600 implement corresponding processes of the first device in the method 400 shown in FIG. 18 to FIG. 25 respectively, which are not elaborated here, for the sake of brevity.

FIG. 33 is a schematic structural diagram of a communication device 700 according to an embodiment of the disclosure. The communication device 700 shown in FIG. 33 includes a processor 710, and the processor 710 may call and run a computer program from a memory, to implement the methods in the embodiments of the disclosure.

In some embodiments, as shown in FIG. 33, the communication device 700 may further include a memory 720. The processor 710 may call and run a computer program from the memory 720, to implement the methods in the embodiments of the disclosure.

The memory 720 may be a separate device independent of the processor 710, or may be integrated in the processor 710.

In some embodiments, as shown in FIG. 55, the communication device 700 may further include a transceiver 730, and the processor 710 may control the transceiver 730 to communicate with other devices. Specifically, the processor 710 may control the transceiver 730 to send information or data to other devices, or receive information or data sent by other devices.

The transceiver 730 may include a transmitter and a receiver. The transceiver 730 may further include an antenna, and there may be one or more antennas in number.

In some embodiments, the communication device 700 may specifically be the first device in the embodiments of the disclosure, and the communication device 700 may implement corresponding processes implemented by the first device in each method of the embodiments of the disclosure, which are not elaborated here, for the sake of brevity.

In some embodiments, the communication device 700 may specifically be the second device in the embodiments of the disclosure, and the communication device 700 may implement corresponding processes implemented by the second device in each method of the embodiments of the disclosure, which are not elaborated here, for the sake of brevity.

In some embodiments, the communication device 700 may specifically be the sensing responder in the embodiments of the disclosure, and the communication device 700 may implement corresponding processes implemented by the sensing responder in each method of the embodiments of the disclosure, which are not elaborated here, for the sake of brevity.

In some embodiments, the communication device 700 may specifically be the sensing receiver in the embodiments of the disclosure, and the communication device 700 may implement corresponding processes implemented by the sensing receiver in each method of the embodiments of the disclosure, which are not elaborated here, for the sake of brevity.

FIG. 34 is a schematic structural diagram of a chip according to an embodiment of the disclosure. The chip 800 shown in FIG. 34 includes a processor 810, and the processor 810 may call and run a computer program from a memory, to implement the methods in the embodiments of the disclosure.

In some embodiments, as shown in FIG. 34, the chip 800 may further include a memory 820. The processor 810 may call and run a computer program from the memory 820, to implement the methods in the embodiments of the disclosure.

The memory 820 may be a separate device independent of the processor 810, or may be integrated in the processor 810.

In some embodiments, the chip 800 may further include an input interface 830. The processor 810 may control the input interface 830 to communicate with other devices or chips. Specifically, the processor 810 may control the input interface 830 to acquire information or data sent by other devices or chips.

In some embodiments, the chip 800 may further include an output interface 840. The processor 810 may control the output interface 840 to communicate with other devices or chips. Specifically, the processor 810 may control the output interface 840 to output information or data to other devices or chips.

In some embodiments, the chip 800 may specifically be the first device in the embodiments of the disclosure, and the chip 800 may implement corresponding processes implemented by the first device in each method of the embodiments of the disclosure, which are not elaborated here, for the sake of brevity.

In some embodiments, the chip 800 may specifically be the second device in the embodiments of the disclosure, and the chip 800 may implement corresponding processes implemented by the second device in each method of the embodiments of the disclosure, which are not elaborated here, for the sake of brevity.

In some embodiments, the chip 800 may specifically be the sensing responder in the embodiments of the disclosure, and the chip 800 may implement corresponding processes implemented by the sensing responder in each method of the embodiments of the disclosure, which are not elaborated here, for the sake of brevity.

In some embodiments, the chip 800 may specifically be the sensing receiver in the embodiments of the disclosure, and the chip 800 may implement corresponding processes implemented by the sensing receiver in each method of the embodiments of the disclosure, which are not elaborated here, for the sake of brevity.

In some embodiments, the chip mentioned in the embodiments of the disclosure may be for example a system-level chip, a system chip, a chip system, or a SOC chip, etc.

FIG. 35 is a schematic block diagram of a communication system 900 according to an embodiment of the disclosure. As shown in FIG. 35, the communication system 900 includes a sensing initiator 910, a sensing transmitter 920 and a sensing receiver 930.

The sensing initiator 910 may be configured to implement corresponding functions implemented by the sensing initiator (the first device) in the above methods, the sensing transmitter 920 may be configured to implement corresponding functions implemented by the sensing transmitter (such as the STA device or the AP device) in the above methods, and the sensing receiver 930 may be configured to implement corresponding functions implemented by the sensing receiver (such as the STA device or the AP device) in the above methods, which are not elaborated here, for the sake of brevity.

It should be understood that the processor in the embodiments of the disclosure may be an integrated circuit chip with signal processing capability. During implementation, each operation of the above method embodiments may be completed by an integrated logic circuit in form of hardware in a processor or instructions in form of software. The above processor may be a general-purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components, so that various methods, operations and logic block diagrams disclosed in the embodiments of the disclosure may be implemented or executed. The general-purpose processor may be a microprocessor, or the processor may be any conventional processor, etc. Operations of the methods disclosed in combination with the embodiments of the disclosure may be directly embodied as being performed and completed by a hardware decoding processor, or by a combination of hardware in the decoding processor and software modules. The software modules may be located in a mature storage medium in the field, such as a random memory, a flash memory, a Read-Only Memory (ROM), a Programmable ROM (PROM), or an electrically erasable programmable memory, a register, etc. The storage medium is located in a memory, and the processor reads information in the memory, and completes operations of the above methods in combination with hardware thereof.

It may be understood that the memory in the embodiments of the disclosure may be a volatile memory or a non-volatile memory, or may include both volatile and non-volatile memories. The non-volatile memory may be a ROM, a PROM, an Erasable PROM (EPROM), an Electrically EPROM (EEPROM) or a flash memory. The volatile memory may be a Random Access Memory (RAM) which is used as an external cache. By way of exemplary rather than limiting descriptions, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memories of the systems and methods described here are intended to include, but are not limited to these and any other suitable types of memories.

It should be understood that the above memories are exemplary rather than limiting descriptions. For example, the memory in the embodiments of the disclosure may also be a SRAM, a DRAM, a SDRAM, a DDR SDRAM, an ESDRAM, a SLDRAM, a DR RAM, etc. That is, the memory in the embodiments of the disclosure is intended to include, but is not limited to these and any other suitable types of memories.

An embodiment of the disclosure further provides a computer-readable storage medium, and the computer-readable storage medium is configured to store a computer program.

In some embodiments, the computer-readable storage medium may be applied to the first device in the embodiments of the disclosure, and the computer program allows a computer to execute corresponding processes implemented by the first device in each method of the embodiments of the disclosure, which are not elaborated here, for the sake of brevity.

In some embodiments, the computer-readable storage medium may be applied to the second device in the embodiments of the disclosure, and the computer program allows a computer to execute corresponding processes implemented by the second device in each method of the embodiments of the disclosure, which are not elaborated here, for the sake of brevity.

In some embodiments, the computer-readable storage medium may be applied to the sensing responder in the embodiments of the disclosure, and the computer program allows a computer to execute corresponding processes implemented by the sensing responder in each method of the embodiments of the disclosure, which are not elaborated here, for the sake of brevity.

In some embodiments, the computer-readable storage medium may be applied to the sensing receiver in the embodiments of the disclosure, and the computer program allows a computer to execute corresponding processes implemented by the sensing receiver in each method of the embodiments of the disclosure, which are not elaborated here, for the sake of brevity.

An embodiment of the disclosure further provides a computer program product, and the computer program product includes computer program instructions.

In some embodiments, the computer program product may be applied to the first device in the embodiments of the disclosure, and the computer program instructions allow a computer to execute corresponding processes implemented by the first device in each method of the embodiments of the disclosure, which are not elaborated here, for the sake of brevity.

In some embodiments, the computer program product may be applied to the second device in the embodiments of the disclosure, and the computer program instructions allow a computer to execute corresponding processes implemented by the second device in each method of the embodiments of the disclosure, which are not elaborated here, for the sake of brevity.

In some embodiments, the computer program product may be applied to the sensing responder in the embodiments of the disclosure, and the computer program instructions allow a computer to execute corresponding processes implemented by the sensing responder in each method of the embodiments of the disclosure, which are not elaborated here, for the sake of brevity.

In some embodiments, the computer program product may be applied to the sensing receiver in the embodiments of the disclosure, and the computer program instructions allow a computer to execute corresponding processes implemented by the sensing receiver in each method of the embodiments of the disclosure, which are not elaborated here, for the sake of brevity

An embodiment of the disclosure further provides a computer program.

In some embodiments, the computer program may be applied to the first device in the embodiments of the disclosure, and the computer program allows a computer to execute corresponding processes implemented by the first device in each method of the embodiments of the disclosure when the computer program is run on the computer, which are not elaborated here, for the sake of brevity.

In some embodiments, the computer program may be applied to the second device in the embodiments of the disclosure, and the computer program allows a computer to execute corresponding processes implemented by the second device in each method of the embodiments of the disclosure when the computer program is run on the computer, which are not elaborated here, for the sake of brevity.

In some embodiments, the computer program may be applied to the sensing responder in the embodiments of the disclosure, and the computer program allows a computer to execute corresponding processes implemented by a sensing signal initiator in each method of the embodiments of the disclosure when the computer program is run on the computer, which are not elaborated here, for the sake of brevity.

In some embodiments, the computer program may be applied to the sensing responder in the embodiments of the disclosure, and the computer program allows a computer to execute corresponding processes implemented by the sensing receiver in each method of the embodiments of the disclosure when the computer program is run on the computer, which are not elaborated here, for the sake of brevity.

It may be appreciated by those of ordinary skill in the art that units and algorithm steps of each example described in combination with the embodiments disclosed here may be implemented by electronic hardware, or a combination of computer software and electronic hardware. Whether these functions are executed by hardware or software, depends on specific applications and design constraints of the technical solutions. Professional technicians may use different methods in each specific application to implement the described functions, however, such implementation should not be considered as going beyond the scope of the disclosure.

It may be clearly understood by those skilled in the art that for the sake of convenience and brevity of descriptions, specific operation processes of the above systems, apparatuses and units may refer to corresponding processes in the foregoing method embodiments, which are not elaborated here.

In several embodiments provided in the disclosure, it should be understood that the disclosed systems, apparatuses and methods may be implemented in other ways. For example, the above apparatus embodiments are illustrative only. For example, division of the units is only a logical function division. In an actual implementation, there may be other division manners. For example, multiple units or components may be combined or may be integrated into another system, or some features may be ignored or may not be executed. In another point, mutual coupling or direct coupling or communication connection as shown or discussed may be indirect coupling or communication connection through some interfaces, apparatuses or units, and may be in electrical, mechanical or other forms.

The units described as separate components may be or may not be physically separated, and the components displayed as units may be or may not be physical units, that is, they may be located at one place, or may be distributed on multiple network units. Part or all of the units may be selected according to actual requirements, to achieve the purpose of the solutions of the embodiments.

Furthermore, each function unit in each embodiment of the disclosure may be integrated into one processing unit, or each unit may separately exist physically, or two or more units may be integrated into one unit.

When the functions are implemented in form of a software function unit and sold or used as an independent product, the functions may be stored in a computer-readable storage medium. Based on such understanding, the technical solutions of the disclosure substantially or parts making contributions to the related art or part of the technical solutions may be embodied in form of a software product, and the computer software product is stored in a storage medium, includes several instructions to enable a computer device (which may be a personal computer, a server, or a network device, etc.) to execute all or part of operations of the method described in each embodiment of the disclosure. The foregoing storage medium includes various media capable of storing program codes, such as a U disk, a mobile hard disk, a ROM, a RAM, a magnetic disk, or an optical disk, etc.

The above descriptions are only specific implementations of the disclosure, however, the scope of protection of the disclosure is not limited thereto. Variations or substitutions, easily conceived by any technician familiar with this technical field within the technical scope disclosed in the disclosure, should fall within the scope of protection of the disclosure. Therefore, the scope of protection of the disclosure shall be subjected to the scope of protection of the claims.

## Claims

1. A method for wireless communication, comprising:
sending, (S211) by a first device, a first request frame to a second device, the first request frame being configured to request establishing a target type of measurement, wherein the first device is a station, STA, device, the second device is an Access Point, AP, device, and the second device is used as proxy of the first device to establish the measurement process,
**characterized in that** the first request frame comprises:
indication information, configured to indicate measurement setup request information corresponding to sensing responder(s) participating in the measurement, wherein the sensing responder(s) are STA device(s) different from the first device and the second device, the measurement setup request information corresponding to the sensing responder(s) comprises at least one of following:
role information of the sensing responder(s) in the measurement, report type information of how the sensing responder(s) report the measurement result(s), or measurement threshold information.

2. The method of claim 1, wherein the first request frame further comprises first indication information configured to indicate a type of to-be-established measurement, wherein the first indication information is configured to indicate establishment of a Trigger Based, TB, measurement or establishment of a Non-Trigger Based, Non-TB, measurement.

3. The method of claim 2, wherein the role information of the sensing responder(s) in the measurement comprises:
whether a sensing responder is used as a sensing receiver in the measurement, and/or,
whether a sensing responder is used as a sensing transmitter in the measurement.

4. The method of any one of claims 1 to 3, wherein the measurement of target type is a Trigger Based, TB, measurement.

5. A device for wireless communication, comprising:
a communication unit (1010), configured to send (S211) a first request frame to a second device, the first request frame being configured to request establishing a target type of measurement, wherein the device is a station, STA, device, the second device is an Access Point, AP, device, and the second device is used as proxy of the device to establish the measurement process,
**characterized in that** the first request frame comprises:
indication information, configured to indicate measurement setup request information corresponding to sensing responder(s) participating in the measurement, wherein the sensing responder(s) are STA device(s) different from the first device and the second device, the measurement setup request information corresponding to the sensing responder(s) comprises at least one of following:
role information of the sensing responder(s) in the measurement, report type information of how the sensing responder(s) report the measurement result(s), or measurement threshold information.

6. The device of claim 5, wherein the first request frame further comprises first indication information configured to indicate a type of to-be-established measurement, wherein the first indication information is configured to indicate establishment of a Trigger Based, TB, measurement or establishment of a Non-Trigger Based, Non-TB, measurement.

7. The device of claim 5, wherein the communication unit is further configured to:
receive (S212) a first response frame sent by the second device, the first response frame comprising measurement setup response information of at least one sensing responder and/or measurement setup response information of the second device.

8. The device of claim 7, wherein the measurement setup response information of the sensing responder comprises at least one of following:
a reason code of the sensing responder disagreeing to participate in the measurement, role information of the sensing responder in the measurement, report type information of how the sensing responders a measurement result, or measurement threshold information.

9. The device of claim 7 or 8, wherein the measurement setup response information of the second device comprises at least one of following:
whether the second device agrees to establish the measurement, a reason code of the second device disagreeing to establish the measurement, measurement setup identifier, ID, a type of the measurement determined to establish by the second device, or a manner determined by the second device to process measurement result(s) reported by the sensing responder(s).

10. The device of claim 9, wherein the measurement setup ID is generated by the second device.

11. A device for wireless communication, comprising:
a communication unit (1110), configured to receive (S211) a first request frame sent by a first device, the first request frame being configured to request establishing a target type of measurement, wherein the first device is a station, STA, device, the device is an Access Point, AP, device, and the device is used as proxy of the first device to establish the measurement process,
**characterized in that** the first request frame comprises:
indication information, configured to indicate measurement setup request information of sensing responder(s) participating in the measurement, wherein the sensing responder(s) are STA device(s) different from the first device and the second device, the measurement setup request information corresponding to the sensing responder(s) comprises at least one of following:
role information of the sensing responder(s) in the measurement, report type information of how the sensing responder(s) report the measurement result(s), or measurement threshold information.

12. The device of claim 11, wherein the communication unit is further configured to send (S212) a first response frame to the first device, and the first response frame comprises measurement setup response information of at least one sensing responder and/or measurement setup response information of the device.

13. The device of claim 12, wherein the measurement setup response information of the sensing responder comprises at least one of following:
a reason code of the sensing responder disagreeing to participate in the measurement, role information of the sensing responder in the measurement, report type information of how the sensing responders a measurement result, or measurement threshold information.

14. The device of claim 12 or 13, wherein the measurement setup response information of the device comprises at least one of following:
whether the device agrees to establish the measurement, a reason code of the device disagreeing to establish the measurement, measurement setup identifier, ID, a type of the measurement determined to establish by the device, or a manner determined by the device to process measurement result(s) reported by the sensing responder(s).

15. The device of claim 14, wherein the measurement setup ID is generated by the device.

## Patentansprüche

1. Verfahren für drahtlose Kommunikation, das Folgendes umfasst:
Senden (S211), durch eine erste Vorrichtung, eines ersten Anforderungsframes an eine zweite Vorrichtung, wobei der erste Anforderungsframe ausgelegt ist zum Anfordern der Errichtung eines Zieltyps von Messung, wobei die erste Vorrichtung eine Stations- bzw. STA-Vorrichtung ist, die zweite Vorrichtung eine Zugangspunkt- bzw. AP-Vorrichtung ist und die zweite Vorrichtung als Proxy der ersten Vorrichtung verwendet wird, um den Messprozess zu errichten,
**dadurch gekennzeichnet, dass** der erste Anforderungsframe Folgendes umfasst:
Anzeigeinformationen, ausgelegt zum Anzeigen von Messkonfigurationsanforderungsinformationen entsprechend dem bzw. den Messantwortern, die an der Messung teilnehmen, wobei der bzw. die Messantworter eine bzw. mehrere STA-Vorrichtungen sind, die von der ersten Vorrichtung und der zweiten Vorrichtung verschieden sind, wobei die Messkonfigurationsanforderungsinformationen entsprechend dem bzw. den Messantwortern zumindest eines aus Folgendem umfassen:
Rolleninformationen des bzw. der Messantworter(s) in der Messung, Berichtstypinformationen dazu, wie der bzw. die Messantworter das bzw. die Messergebnisse melden, oder Messungsschwelleninformationen.

2. Verfahren nach Anspruch 1, wobei der erste Anforderungsframe ferner erste Anzeigeinformationen umfasst, die dazu ausgelegt sind, einen Typ von zu errichtender Messung anzuzeigen, wobei die ersten Anzeigeinformationen dazu ausgelegt sind, die Errichtung einer auslöserbasierten bzw. TB-Messung oder die Errichtung einer nicht-auslöserbasierten bzw. Non-TB-Messung anzuzeigen.

3. Verfahren nach Anspruch 2, wobei die Rolleninformationen des bzw. der Messantworter in der Messung Folgendes umfassen:
ob ein Messantworter als ein Messempfänger in der Messung verwendet wird und/oder
ob ein Messantworter als ein Messsender in der Messung verwendet wird.

4. Verfahren nach einem der Ansprüche 1 bis 3, wobei die Messung des Zieltyps eine auslöserbasierte bzw. TB-Messung ist.

5. Vorrichtung für drahtlose Kommunikation, die Folgendes umfasst:
eine Kommunikationseinheit (1010), ausgelegt zum Senden (S211) eines ersten Anforderungsframes an eine zweite Vorrichtung, wobei der erste Anforderungsframe ausgelegt ist zum Anfordern der Errichtung eines Zieltyps von Messung,
wobei die Vorrichtung eine Stations- bzw. STA-Vorrichtung ist und die zweite Vorrichtung eine Zugangspunkt bzw. AP-Vorrichtung ist und die zweite Vorrichtung als Proxy der Vorrichtung verwendet wird, um den Messprozess zu errichten,
**dadurch gekennzeichnet, dass** der erste Anforderungsframe Folgendes umfasst:
Anzeigeinformationen, ausgelegt zum Anzeigen von Messkonfigurationsanforderungsinformationen entsprechend dem bzw. den Messantwortern, die an der Messung teilnehmen, wobei der bzw. die Messantworter eine bzw. mehrere STA-Vorrichtungen sind, die von der ersten Vorrichtung und der zweiten Vorrichtung verschieden sind, wobei die Messkonfigurationsanforderungsinformationen entsprechend dem bzw. den Messantwortern zumindest eines aus Folgendem umfassen:
Rolleninformationen des bzw. der Messantworter(s) in der Messung, Berichtstypinformationen dazu, wie der bzw. die Messantworter das bzw. die Messergebnisse melden, oder Messungsschwelleninformationen.

6. Vorrichtung nach Anspruch 5, wobei der erste Anforderungsframe ferner erste Anzeigeinformationen umfasst, die dazu ausgelegt sind, einen Typ von zu errichtender Messung anzuzeigen, wobei die ersten Anzeigeinformationen dazu ausgelegt sind, die Errichtung einer auslöserbasierten bzw. TB-Messung oder die Errichtung einer nicht-auslöserbasierten bzw. Non-TB-Messung anzuzeigen.

7. Vorrichtung nach Anspruch 5, wobei die Kommunikationseinheit ferner ausgelegt ist zum:
Empfangen (S212) eines ersten Antwortframes, gesendet durch die zweite Vorrichtung, wobei der erste Antwortframe Messkonfigurationsantwortinformationen zumindest eines Messantworters und/oder Messkonfigurationsantwortinformationen der zweiten Vorrichtung umfasst.

8. Vorrichtung nach Anspruch 7, wobei die Messkonfigurationsantwortinformationen des Messantworters zumindest eines aus Folgendem umfassen:
einen Begründungscode des Messantworters, der einer Teilnahme an der Messung nicht zustimmt, Rolleninformationen des Messantworters in der Messung, Berichtstypinformationen dazu, wie die Messantworter ein Messergebnis melden, oder Messungsschwelleninformationen.

9. Vorrichtung nach Anspruch 7 oder 8, wobei die Messkonfigurationsantwortinformationen der zweiten Vorrichtung zumindest eines aus Folgendem umfassen:
ob die zweite Vorrichtung zustimmt, die Messung zu errichten, einen Begründungscode der zweiten Vorrichtung, die der Errichtung der Messung nicht zustimmt, eine Messkonfigurationskennung, ID, ein bestimmter Typ der Messung, zu errichten durch die zweite Vorrichtung, oder eine durch die zweite Vorrichtung bestimmte Art und Weise zum Verarbeiten eines oder mehrerer Messergebnisse, gemeldet durch den bzw. die Messantworter.

10. Vorrichtung nach Anspruch 9, wobei die Messkonfigurations-ID durch die zweite Vorrichtung erzeugt wird.

11. Vorrichtung für drahtlose Kommunikation, die Folgendes umfasst:
eine Kommunikationseinheit (1110), ausgelegt zum Empfangen (S211) eines ersten Anforderungsframes, gesendet durch eine erste Vorrichtung, wobei der erste Anforderungsframe ausgelegt ist zum Anfordern der Errichtung eines Zieltyps von Messung, wobei die erste Vorrichtung eine Stations- bzw. STA-Vorrichtung ist, die Vorrichtung eine Zugangspunkt- bzw. AP-Vorrichtung ist und die Vorrichtung als Proxy der ersten Vorrichtung verwendet wird, um den Messprozess zu errichten,
**dadurch gekennzeichnet, dass** der erste Anforderungsframe Folgendes umfasst:
Anzeigeinformationen, ausgelegt zum Anzeigen von Messkonfigurationsanforderungsinformationen von einem bzw. mehreren Messantwortern, die an der Messung teilnehmen, wobei der bzw. die Messantworter eine bzw. mehrere STA-Vorrichtungen sind, die von der ersten Vorrichtung und der zweiten Vorrichtung verschieden sind, wobei die Messkonfigurationsanforderungsinformationen entsprechend dem bzw. den Messantwortern zumindest eines aus Folgendem umfassen:
Rolleninformationen des bzw. der Messantworter(s) in der Messung, Berichtstypinformationen dazu, wie der bzw. die Messantworter das bzw. die Messergebnisse melden, oder Messungsschwelleninformationen.

12. Vorrichtung nach Anspruch 11, wobei die Kommunikationseinheit ferner ausgelegt ist zum Senden (S212) eines ersten Antwortframes an die erste Vorrichtung, und wobei der erste Antwortframe Messkonfigurationsantwortinformationen zumindest eines Messantworters und/oder Messkonfigurationsantwortinformationen der Vorrichtung umfasst.

13. Vorrichtung nach Anspruch 12, wobei die Messkonfigurationsantwortinformationen des Messantworters zumindest eines aus Folgendem umfassen:
einen Begründungscode des Messantworters, der einer Teilnahme an der Messung nicht zustimmt, Rolleninformationen des Messantworters in der Messung, Berichtstypinformationen dazu, wie die Messantworter ein Messergebnis melden, oder Messungsschwelleninformationen.

14. Vorrichtung nach Anspruch 12 oder 13, wobei die Messkonfigurationsantwortinformationen der Vorrichtung zumindest eines aus Folgendem umfassen:
ob die Vorrichtung zustimmt, die Messung zu errichten, einen Begründungscode der Vorrichtung, die der Errichtung der Messung nicht zustimmt, eine Messkonfigurationskennung, ID, ein bestimmter Typ der Messung, zu errichten durch die Vorrichtung, oder eine durch die Vorrichtung bestimmte Art und Weise zum Verarbeiten eines oder mehrerer Messergebnisse, gemeldet durch den bzw. die Messantworter.

15. Vorrichtung nach Anspruch 14, wobei die Messkonfigurations-ID durch die Vorrichtung erzeugt wird.

## Revendications

1. Procédé de communication sans fil, comprenant :
l'envoi (S211), par un premier dispositif, d'une première trame de demande à un second dispositif, la première trame de demande étant configurée pour demander l'établissement d'un type de mesure cible, dans lequel le premier dispositif est une station, STA, le second dispositif est un point d'accès, AP, et le second dispositif est utilisé comme mandataire du premier dispositif pour établir le processus de mesure,
**caractérisé en ce que** la première trame de demande comprend :
des informations d'indication, configurées pour indiquer des informations de demande d'établissement de mesure correspondant à un ou plusieurs répondeurs de détection participant à la mesure, dans lequel le ou les répondeurs de détection sont un ou des dispositifs STA différents du premier dispositif et du second dispositif, les informations de demande d'établissement de mesure correspondant au ou aux répondeurs de détection comprenant au moins des informations parmi les suivantes :
des informations de rôle du ou des répondeurs de détection dans la mesure, des informations de type de rapport sur la manière dont le ou les répondeurs de détection rapportent le ou les résultats de mesure, ou des informations de seuil de mesure.

2. Procédé selon la revendication 1, dans lequel la première trame de demande comprend en outre des premières informations d'indication configurées pour indiquer un type de mesure à établir, dans lequel les premières informations d'indication sont configurées pour indiquer l'établissement d'une mesure basée sur un déclenchement, TB, ou l'établissement d'une mesure basée sur un non-déclenchement, non-TB.

3. Procédé selon la revendication 2, dans lequel les informations de rôle du ou des répondeurs de détection dans la mesure consistent à savoir si :
un répondeur de détection est ou non utilisé comme récepteur de détection dans la mesure, et/ou
un répondeur de détection est ou non utilisé comme émetteur de détection dans la mesure.

4. Procédé selon l'une quelconque des revendications 1 à 3, dans lequel la mesure de type cible est une mesure basée sur un déclenchement, TB.

5. Dispositif de communication sans fil, comprenant :
une unité de communication (1010), configurée pour envoyer (S211) une première trame de demande à un second dispositif, la première trame de demande étant configurée pour demander l'établissement d'un type de mesure cible,
dans lequel le premier dispositif est une station, STA, le second dispositif est un point d'accès, AP, et le second dispositif est utilisé comme mandataire du premier dispositif pour établir le processus de mesure,
**caractérisé en ce que** la première trame de demande comprend :
des informations d'indication, configurées pour indiquer des informations de demande d'établissement de mesure correspondant à un ou plusieurs répondeurs de détection participant à la mesure, dans lequel le ou les répondeurs de détection sont un ou des dispositifs STA différents du premier dispositif et du second dispositif, les informations de demande d'établissement de mesure correspondant au ou aux répondeurs de détection comprenant au moins des informations parmi les suivantes :
des informations de rôle du ou des répondeurs de détection dans la mesure, des informations de type de rapport sur la manière dont le ou les répondeurs de détection rapportent le ou les résultats de mesure, ou des informations de seuil de mesure.

6. Dispositif selon la revendication 5, dans lequel la première trame de demande comprend en outre des premières informations d'indication configurées pour indiquer un type de mesure à établir, dans lequel les premières informations d'indication sont configurées pour indiquer l'établissement d'une mesure basée sur un déclenchement, TB, ou l'établissement d'une mesure basée sur un non-déclenchement, non-TB.

7. Dispositif selon la revendication 5, dans lequel l'unité de communication est en outre configurée pour :
recevoir (S212) une première trame de réponse envoyée par le second dispositif, la première trame de réponse comprenant des informations de réponse d'établissement de mesure d'au moins un répondeur de détection et/ou des informations de réponse d'établissement de mesure du second dispositif.

8. Dispositif selon la revendication 7, dans lequel les informations de réponse d'établissement de mesure du répondeur de détection comprennent au moins l'un des éléments suivants :
un code de raison du répondeur de détection qui ne souhaite pas participer à la mesure, des informations de rôle du répondeur de détection dans la mesure, des informations de type de rapport sur la manière dont les répondeurs de détection rapportent un résultat de mesure, ou des informations de seuil de mesure.

9. Dispositif selon la revendication 7 ou 8, dans lequel les informations de réponse d'établissement de mesure du second dispositif comprennent au moins l'un des éléments suivants :
si oui ou non le second dispositif souhaite établir la mesure, un code de raison du second dispositif qui ne souhaite pas établir la mesure, un identifiant, ID, d'établissement de mesure, un type de la mesure déterminé pour établissement par le second dispositif, ou une manière déterminée par le second dispositif de traiter le ou les résultats de mesure rapportés par le ou les répondeurs de détection.

10. Dispositif selon la revendication 9, dans lequel l'ID d'établissement de mesure est généré par le second dispositif.

11. Dispositif de communication sans fil, comprenant :
une unité de communication (1110) configurée pour recevoir (S211) une première trame de demande envoyée par un premier dispositif, la première trame de demande étant configurée pour demander l'établissement d'un type de mesure cible,
dans lequel le premier dispositif est une station, STA, le second dispositif est un point d'accès, AP, et le second dispositif est utilisé comme mandataire du premier dispositif pour établir le processus de mesure,
**caractérisé en ce que** la première trame de demande comprend :
des informations d'indication, configurées pour indiquer des informations de demande d'établissement de mesure correspondant à un ou plusieurs répondeurs de détection participant à la mesure, dans lequel le ou les répondeurs de détection sont un ou des dispositifs STA différents du premier dispositif et du second dispositif, les informations de demande d'établissement de mesure correspondant au ou aux répondeurs de détection comprenant au moins des informations parmi les suivantes :
des informations de rôle du ou des répondeurs de détection dans la mesure, des informations de type de rapport sur la manière dont le ou les répondeurs de détection rapportent le ou les résultats de mesure, ou des informations de seuil de mesure.

12. Dispositif selon la revendication 11, dans lequel l'unité de communication est en outre configurée pour envoyer (S212) une première trame de réponse au premier dispositif, et la première trame de réponse comprend des informations de réponse d'établissement de mesure d'au moins un répondeur de détection et/ou des informations de réponse d'établissement de mesure du dispositif.

13. Dispositif selon la revendication 12, dans lequel les informations de réponse d'établissement de mesure du répondeur de détection comprennent au moins l'un des éléments suivants :
un code de raison du répondeur de détection qui ne souhaite pas participer à la mesure, des informations de rôle du répondeur de détection dans la mesure, des informations de type de rapport sur la manière dont les répondeurs de détection rapportent un résultat de mesure, ou des informations de seuil de mesure.

14. Dispositif selon la revendication 12 ou 13, dans lequel les informations de réponse d'établissement de mesure du dispositif comprennent au moins l'un des éléments suivants :
si oui ou non le dispositif souhaite établir la mesure, un code de raison du dispositif qui ne souhaite pas établir la mesure, un identifiant, ID, d'établissement de mesure, un type de la mesure déterminé pour établissement par le dispositif, ou une manière déterminée par le dispositif de traiter le ou les résultats de mesure rapportés par le ou les répondeurs de détection.

15. Dispositif selon la revendication 14, dans lequel l'ID d'établissement de mesure est généré par le dispositif.
